# EUROPEAN PATENT APPLICATION

(11) **EP 4 726 539 A2**
(43) Date of publication of application: **15.04.2026**
(21) Application number: 26159966.6
(22) Date of filing: 27.05.2024
(51) Int. Cl.: G06F 9/4401

(54) **LOADING AN EXECUTABLE IN A MEMORY MANAGEMENT UNIT-LESS (MMU-LESS) DEVICE**

(30) Priority: 25.05.2023 EP 23175525; 13.09.2023 EP 23197285; 08.11.2023 EP 23208664; 27.12.2023 EP 23220418; 07.03.2024 EP 24162211; 20.03.2024 EP 24164983
(62) Divisional of application: 24178332.3
(71) Applicant: Flipper FZCO, Dubai (AE)
(72) Inventor: GAVRILOV, Sergei, London (GB); KOTOMIN, Ivan, London (GB); KUTUZOV, Aleksandr, London (GB)
(74) Representative: Nezlobin, Nikolai

(57) **Abstract**

The disclosure relates to a method for a memory management unit-less (MMU-less) device which includes executing, for setting the MMU-less device into a configuration with a possibility to update a firmware of the MMU-less device, a pre-updater component by an at least one processing unit of the MMU-less device from a built-in rewritable non-volatile memory of the MMU-less device. The pre-updater component invokes during the executing at least a part of a code from one or more of: a starting operating system, a starting driver and a starting service for accessing an external memory, which stores an updater image, from the MMU-less device. The part of the code is stored in and is executable from the built-in rewritable non-volatile memory of the MMU-less device, and the pre-updater component causes the at least one processing unit of the MMU-less device to perform operations including accessing, upon a reset of the MMU-less device, the updater image in the external memory and writing it into a RAM of the MMU-less device, and transferring control to the updater image. Also, the operations include:
writing before the reset an indication in any memory which retains its contents during the reset that the at least one processing unit of the MMU-less device is to proceed to said accessing the updater image; and reading this indication at a start-up upon the reset from the any memory, where the memory is internal to or is accessible by the at least one processing unit, and
initializing upon the reset a memory allocator for the RAM and reading a pointer to the updater image stored in the external memory before the accessing the updater image.

## Description

### TECHNICAL FIELD

The present disclosure generally relates to techniques for increasing usability or applicability of a memory management unit-less (MMU-less) device (e.g. with a microcontroller chip unit, MCU), a random access memory (RAM), and an interface for receiving data from an external communication device or memory by respectively configuring or customizing its software. These techniques are useful, for a particular example, in a multi-purpose or multi-application standalone embedded device having a plurality of antennas for exploration of various radio protocols and access systems, such as the device called Flipper Zero; but also they may be used in various other MMU-less devices, including those single-purpose devices, which would benefit from an increased flexibility, adaptability or customizability of the software. Also, the present disclosure relates to computer-implemented techniques, including methods, for efficiently, conveniently, and reliably producing firmware and software for the MMU-less device, as well as for efficiently, conveniently and reliably producing a software development kit (SDK) and other tools for producing software for the MMU-less device (and, thus, again for increasing usability or applicability of the MMU-less device).

### BACKGROUND

A memory management unit (MMU), sometimes called paged memory management unit (PMMU), is a computer hardware unit having all memory references passed through itself, primarily performing the translation of virtual memory addresses to physical addresses. Due to constraints on cost, size, and power consumption its use is often avoided in relatively low-power, inexpensive embedded systems, used in many applications, from wireless sensor networks to consumer electronics. Also, processing power and physical memory are tightly limited in these systems. Hence, various techniques have been developed for using more effectively internal resources of the MMU-less devices, i.e. microcontroller units lacking the MMU. For example, Bai, L. S., Yang, L., and Dick, R. P. in "MEMMU: Memory expansion for MMU-less embedded systems," ACM Trans. Embedd. Comput. Syst. 8, 3, Article 23 (April 2009) (hereinafter "Bai, et al.") is focused on techniques aimed at increasing usable memory in sensor network nodes with no changes to hardware and with no or minimal changes to applications. At the same time, these techniques have been described in Bai, et al. as usable in any memory-constrained embedded system without a MMU.

It is desirable to be able to install programs, for example, applications, on a MMU-less device separately from its firmware, such as, for example, operating system (OS). For example, according to https://blog.stratifylabs.dev/device/2014-05-03-Applications-without-MMU/ (hereinafter "Stratifylabs"), relating to the Stratify operating system, this is one of the OS's biggest software challenges. Overcoming this challenge contributes to both ease-of-use and portability (and therefore the usability and applicability of the MMU-less device). When it is possible to install just the application, work of integrating and compiling the OS with the application is avoided. Also, it becomes possible to distribute the binary file to different devices running the OS, i.e. the differences in memory address spaces, for the RAM and built-in non-volatile memory, as well as differences between addresses of similar entities, in different devices become irrelevant or at least less relevant for distribution of the binary file with the application.

In many cases, different programs, such as applications, components and modules are stored in Executable and Linkable Format (ELF, elf). This format has been adopted by many different operating systems on many different hardware platforms.

According to Stratifylabs, without a MMU, installing independent or standalone compiled programs (i.e. programs, compiled and linked separately from the OS or other firmware of the MMU-less device) can be done using one of several approaches:
- Implement an Executable and Linkable Format (ELF) parser in the embedded installer;
- Compile using position-independent code/executables (PIC or PIE) and have the embedded installer update the global offset table when installing the firmware;
- Compile using relocatable code and translate the memory locations of the binary program using an embedded installer.

According to Stratifylabs, Stratify OS used the last approach. Apparently, it was not applicable to the Executable and Linkable Format (ELF) files. As for the ELF, according to Stratifylabs, the disadvantage of using an ELF parser is that it requires more processing on the firmware side than the other options, and this means that a larger portion of precious flash memory is dedicated to installing programs.

### BRIEF DESCRIPTION OF THE DRAWINGS

For a more complete understanding of the present disclosure, its Examples, and advantages thereof, reference is now made to the following descriptions taken in conjunction with the accompanying drawings, in which:
Figures 1A and 1B show examples of schematic diagrams of variations of a MMU-less device in accordance with the present disclosure;
Figure 2 schematically shows another example of an MMU-less device, using a loader component in accordance with the present disclosure;
Figure 3 schematically shows an example of an executable file which may be received by the MMU-less device according to the present disclosure;
Figures 4A-4C schematically show an example of how MMU-less device can process the executable file to perform relocations according to the present disclosure;
Figure 5 shows a further example of a MMU-less device in accordance with the present disclosure;
Figs; 6 and 7 relate to methods of distributing an API table, a firmware, and executable file for an MMU-less device, according to the present disclosure;
Figure 8 schematically shows a method for use in preparing an at least one of (a) the firmware with the API, and (b) the SDK, according to the present disclosure;
Figures 9A and 9B schematically show variations of a computer-readable memory storage according to the present disclosure;
Figure 10 schematically shows a further example of a MMU-less device in accordance with the present disclosure;
Figure 11 schematically shows another example of a MMU-less device in accordance with the present disclosure;
Figure 12 schematically shows yet another example of a MMU-less device in accordance with the present disclosure;
Figures 13A and 13B schematically show examples of an executable file and a file set, respectively, each including an example of an accelerating data structure in accordance with the present disclosure;
Figures 14A, 14B, and 14C show examples of modifications of the accelerating data structure;
Figures 15A and 15B schematically show further examples of an executable file and a file set, respectively, each including an example of an accelerating data structure in accordance with the present disclosure;
Figures 16A and 16B show further examples of modifications of the accelerating data structure;
Figures 16C shows an example, simplified from the practical implementation, of an accelerating data structure for one allocatable section including several invocations requiring relocation;
Figures 17 schematically shows a method flow for acceleration of the loading in accordance with the present disclosure;
Figures 18 schematically shows another example of a MMU-less device, for using one or more assets in accordance with the present disclosure;
Figures 19 schematically shows an example of an asset section, for using one or more assets by a MMU-less device in accordance with the present disclosure;
Figures 20 schematically shows an example of a MMU-less device configured for efficient debugging according to the present disclosure;
Figures 21 schematically shows an example of dynamically allocatable allocation data useful for debugging according to the present disclosure;
Figures 22 schematically shows an example of a debugger client or debugger according to the present disclosure;
Figures 23A and 23B show schematic diagrams of the organization of bootloaders and non-volatile built-in memory for two MMU-less devices;
Figure 24 shows a schematic diagram of an exemplary method for a MMU-less device, according to an example in the present disclosure;
Figures 25A schematically shows an example of a machine-readable storage medium storing a pre-updater component according to the present disclosure;
Figures 25B schematically shows an example of a memory carrier, optionally, passive, according to the present disclosure;
Figure 25C schematically shows an example of a server according to the present disclosure;
Figure 26A shows a schematic diagram of an example of an MMU-less device according to the present disclosure;
Figure 26B shows a schematic diagram of an example of a code record, according to the present disclosure;
Figure 27 shows a schematic diagram of a system according to the present disclosure;
Figure 28A shows a schematic diagram of an updater image with its components when located in the RAM according to the present disclosure;
Figure 28B shows a schematic diagram of a use of the updater image for accessing an updated software image, according to an example in the present disclosure;
Figure 29 shows a schematic diagram of an example method for MMU-less device according to the present disclosure;
Figure 30 shows a schematic diagram of an example of another machine-readable storage medium according to the present disclosure;
Figure 31 shows a schematic diagram of an example method for use in updating a software of an MMU-less device according to the present disclosure.

### DETAILED DESCRIPTION

The inventors of the present disclosure have considered that in some cases it is desirable to receive by the MMU-less device (with an installed firmware) an independent program, for example, an application, component or module, or a number of them, for execution by the MMU-less device. The program may be loaded into a RAM of the MMU/less device or, in some special cases in which the delay due to loading and the software speed is of not a high importance, loaded or recorded into a built-in non-volatile memory of the MMU-less device (i.e., installed). This would allow increasing the applicability and/or customizability of the MMU-less device, i.e. its usability. The program would invoke an application program interface (API) of the MMU-less device (in other words, of its firmware). It is desirable to allow an executable file, from which such a program is to be received, to be in the ELF format. Also, it is desirable to efficiently, conveniently, and reliably produce such firmware and software for the MMU-less device that increases usability or applicability of the MMU-less device.

For a particular example, the inventors of the present disclosure have sought how to contribute to the applicability and/or customizability of a multi-application standalone embedded device having a number of antennas. A non-limiting example of such a device is presented by Flipper Zero. It is a handheld device based on a MMU-less microcontroller or chip, and has been developed to incorporate a range of radio modules.

Hence, the MMU-less device, to which the techniques of the present disclosure apply, may be, for example, a single-purpose or a multi-purpose and multi-application device. It may be an embedded device, or a standalone embedded device. It may be of a configuration including a combination or a sub-combination from Sub-GHz, NFC (near-Field communication), LF RFID (low frequency radio-frequency identification) and BLE (bluetooth low energy) modules, to allow users to interact with modern access control systems and wireless communication protocols. Additionally, it may include an infrared (IR) transceiver and/or a specialized 1-Wire connector, enabling professionals to work with devices utilizing IR communication and/or the iButton contact keys and readers. Further, the device may be equipped with any combination or a sub-combination of General Purpose Input/Output (GPIO) pins supporting i2c (inter-integrated circuit), UART (universal asynchronous receiver / transmitter), SPI (serial peripheral interface), and SWD (serial wire debug) interfaces. The above features enable users to connect and interact with various electronic devices, sensors, and components, providing a tool for testing such equipment, and comprehensive experience in access control and cybersecurity.

Then, the device may include a built-in USB HID (universal serial bus human interface devices) device emulation functionality, for example, for facilitating professionals to conduct penetration testing on connected computer systems. At the same time, the device may be used for educational purposes.

Also, with its built-in battery, graphic display, control buttons (which may be d-pad (directional pad), OK and BACK buttons), and a microSD-card slot, the device may provide for an autonomous usage. Additionally, it may include a buzzer and a vibration motor.

Furthermore, in some configurations, the device may be adapted to communicate with companion mobile applications via BLE for data synchronization and remote control, for performing a task on the distance, for example, a security research task or the equipment testing. Also, software and firmware updates may be communicated to the device via, for example, BLE.

That is, the inventors have sought for novel ways to implement the dynamic loading process or the installation. The MMU-less device may be configured according to any combination of the features mentioned above, but it has an at least one processing unit, which may be a central processing unit (CPU); the RAM; and a built-in non-volatile memory storing API entities. The MMU-less has an interface for receiving the program, for example, from an external communication device or an external memory, for example, a non-volatile chip storage (which also may be a non-volatile on-chip storage).

Herein, the RAM may be implemented, for example, by SRAM (static RAM). The built-in non-volatile memory may be located, for example, on the same microcontroller unit chip (MCU) with the CPU. The built-in non-volatile memory, may be rewritable, in full or in part. It may be presented by electrically erasable programmable read-only memory (EEPROM) that enables individual bytes of data to be erased and reprogrammed, or by flash memory, i.e. electrically erasable programmable read-only memory that enables programming and erasure of larger blocks, or their combination. The external memory may belong to another device, such as a hard drive or a solid-state drive (SSD) of a general purpose computer; or it may be removable from the MMU-less device or detachable from the MMU-less device housing, such as an external CD-ROM, but in some cases it may be even soldered to the device housing, but still not located on the same chip with the CPU. That is, the external memory may be non-volatile memory. Also, it may be presented by a stand-alone device; and/or portable device; and/or a card chip, for example, by a NAND/NOR chip, NAND/NOR flash memory, or microSD card; and/or a memory carrier, optionally with a medium readable by the passive memory reading. The external memory differs from the built-in non-volatile memory, for example, by addressing from the processing unit. The CPU may communicate with the built-in non-volatile memory faster than with the external memory. In many cases, MCU executes instructions directly from the built-in non-volatile memory, such as the flash memory. This does not mean that in embedded applications MCU can execute code only from the built-in non-volatile memory; but while the MCU also could execute code from the RAM, typically the RAM size is much smaller than the built-in non-volatile memory size. In the MMU-less devices according to the present disclosure all of the program memory may be literally mapped against the physical memory (this is called a flat memory architecture; in such a case both instructions and data be stored in the same memory space).

Various interfaces and connections are suitable for establishing the communication between the MMU-less device and the external communication device or the external memory: WiFi (standing for Wireless Fidelity), USB, etc. For example, the MMU-less device may include a driver and/or a port for establishing such a communication. Also, optionally, it may include a peripheral equipment, for example, a reader for reading the external memory, such as a non-volatile chip (which also may be a non-volatile on-chip) storage or a card chip; or another memory carrier (a memory record carrier or a data carrier), optionally, passive; or any suitable machine-readable storage medium.

As for the firmware of the MMU-less device, in a lot of cases the software of the MMU-less device is considered to be firmware, which is a term for software that is stored on a hardware device in order to make it run properly. The term firmware is used especially often for MMU-less devices due to the low portability of their software. Still, the firmware includes the OS, and possibly some drivers, services, libraries, components, modules and applications, included in the OS, or not included in the OS; but it does not have to include optional user applications.

Herein, the OS is the program that, after being initially loaded into the device, manages all of the other applications in it. The applications make use of the OS and possibly some other components of the firmware by invoking the API, for example, requesting services through the API. A component such as, for example, a driver, a service or an application may be a part of the OS or not a part of the OS, depending on how it is built and how it interacts with the OS, other components, and the processing unit(s). Also, the software may include other components; and a component may be a part of the OS or not a part of the OS.

Components may include executable code and, optionally, data. Also, they may invoke other executable code, for example of the OS, a driver or a service, as well as access other data, for example, a file stored in a memory. A component may use commands not provided by the API; that is this term is broader than the application. Herein, the API may be the OS API, i.e. it may be the case that the API in whole is provided by the OS.

The MMU-less device might proceed to the execution of the received program, which was stored in an executable file, such as, for example, the ELF file, by performing the relocation on a respective sequence of executable and merely allocatable, non-executable, sections loaded into the memory, in particular example, the RAM. In particular, a relocating loader might be used for adjusting the addresses of program instructions and data so that they are correct for the memory location where the program is loaded. Such a loader component, which would later transfer control for the execution of the received program, may use respective relocation data sections and the symbol table section contained in the executable file (also called Relocation Data Sections and Symbol Table Section, Symtab, in the ELF format related literature). However, as the inventors of the present disclosure have considered, there may be certain effective restrictions for the size of the received program which may be executed by the MMU-less device. Firstly, if the program is to provide more functionality and usability and therefore to be bigger (i.e. a sequence of the executable and merely allocatable sections of the program is to occupy more memory), then there is a smaller chance that there would be a sufficient free space, for example, in the RAM, for this sequence various parts of the RAM may already be used by other software. Secondly, the firmware of the MMU-less device would need to have more API entities to allow the program to be more usable while keeping its size limited; but then the API address table would occupy more space, more searches during the relocation would have to be done in this table, and also each search would be more time-consuming. Thirdly, it would be desirable to allow a software developer to use improved computer-implemented methods for preparing the firmware for the MMU-less device. Fourthly, it would be desirable to allow the same or another software developer to use a software development kit (SDK) for developing programs matching the firmware, for example, standalone or independent programs, and especially applications, for sending them to the MMU-less device running the firmware. That is, it would be desirable to allow a software developer, optionally the same, who develops the firmware, to use improved computer-implemented methods for preparing the SDK and/or other tools.

Also, according to the present disclosure, the MMU-less device may include a memory protection unit (MPU) and may provide a kernel-userspace boundary stopping userspace (user space) processes from interfering with kernel memory or memory belonging to other userspace processes; or it may lack the MPU and the respective protection.

In view of the above, the inventors of the present disclosure have found that MMU-less device would be more usable if it is configured as in any of respective aspects or examples below. Also, the usability may be increased by the firmware, loader component, executable file, file set, pre-updater component, updater image, updated software image, machine-readable storage medium, memory carrier, card chip or non-volatile chip (which at the same time may be a non-volatile on-chip) storage, system, method, and communication device or other subject matter as in any of respective aspects or examples below.

In other words, the foregoing and other aims may be achieved by the features of the independent aspects or examples. Further implementation forms are apparent from the dependent examples or aspects, the rest of the specification and the figures.

In any case, the disclosure also provides for the following examples.

Example 1: A MMU-less device for receiving and executing a program comprising an invocation of an API of the MMU-less device, where the MMU-less device comprises an at least one processing unit, a RAM, and a built-in non-volatile memory storing API entities, where the built-in non-volatile memory stores an API table of sorted API name hashes and addresses, comprising a sorted plurality of hash values, calculated based on a plurality of names of API entities and paired with a plurality of addresses of the API entities.

Accordingly, there is a related (Firmware) Example 1: A firmware for a MMU-less device, comprising an at least one processing unit, a RAM, and a built-in non-volatile memory, and for allowing receiving and executing a program comprising an invocation of an API of the firmware by the MMU-less device, where the firmware is configured to be stored in the built-in non-volatile memory and comprises API entities, and the firmware comprises an API table, where the API table is a table of sorted API name hashes and addresses and comprises a sorted plurality of hash values, calculated based on a plurality of names of API entities and paired with a plurality of addresses of the API entities.

Example 1 - Variation: A MMU-less device for receiving and executing a program comprising an invocation of an application program interface (API) of the MMU-less device, where the MMU-less device comprises an at least one processing unit, a RAM, a built-in non-volatile memory storing API entities, and at least two or three antennas, each for receiving and/or transmitting signals at at least its respective associated frequency, where the built-in non-volatile memory stores an API table of sorted API name hashes and addresses, comprising a sorted plurality of hash values, calculated based on a plurality of names of API entities and paired with a plurality of addresses of the API entities.

In a further variation of Example 1, the MMU-less device (and the firmware) may be so adapted that the API entities would comprise among them a first API entity for transmitting a signal using at least a first antenna from the antennas and/or for receiving a signal using the at least first antenna from the antennas; optionally comprise among them a second API entity for transmitting a signal using at least a second antenna from the antennas and/or for receiving a signal using the at least second antenna from the antennas, and optionally comprise among them a third API entity for transmitting a signal using at least a third antenna from the antennas and/or for receiving a signal using the at least third antenna from the antennas.

In yet a further, independent, variation of Example 1, the MMU-less device may be so adapted that it would include a feature that a certain antenna from the at least two or three antennas is operable in a Sub-GHz range, or near-field communication, NFC, range, or a LF RFID range; another antenna from the at least two or three antennas is operable in a range being the Sub-GHz range, or the NFC range, or the LF RFID range and different from the range of the certain antenna; and, optionally, yet another antenna is operable in a range being the Sub-GHz range, or the NFC range, or the LF RFID range and different from the range of the certain antenna and the another antenna.

Example 2: The MMU-less device or the firmware of any of preceding Example(s) (i.e. in any Example, e.g. in any variation of any Example), where the API table comprises at least 500, or 1000, or 2000 hash values.

Example 3: The MMU-less device of any of preceding Examples, where the built-in non-volatile memory or the RAM stores a loader component for loading an at least one executable section from an executable file, comprising the program, into the RAM.

In other words, according to the present Example, the firmware may comprise a loader component, optionally loadable into the RAM, for loading an at least one executable section from an executable file, comprising the program, into the RAM. This loader component is configured to be stored by the built-in non-volatile memory and/or the RAM.

Example 4: The MMU-less device of Example 1 or 2, where the built-in non-volatile memory is rewritable, and the built-in non-volatile memory or the RAM stores a loader component for loading an at least one executable section from an executable file, comprising the program, into the rewritable built-in non-volatile memory.

In other words, the present Example also provides that the firmware may comprise a loader component, optionally loadable into the RAM, for loading an at least one executable section from an executable file, comprising the program, into the built-in non-volatile memory, when it is rewritable. This loader component is configured to be stored by the built-in non-volatile memory and/or the RAM.

Example 5: The MMU-less device or the firmware of Example 3 or 4, where the loader component is configured to determine a relocation value for an at least one bit, corresponding to the invocation, in a section comprising the invocation, which is (a) the at least one executable section or (b) another allocatable section loaded into the RAM or the built-in non-volatile memory from the executable file.

Example 6: The MMU-less device or the firmware of Example 5, where the loader component is configured to determine the relocation value by searching for an address in the API table, where the search is based on a hash value of a name of an API entity.

Example 7: The MMU-less device or the firmware of Example 6, where the loader component is configured to obtain the hash value for the name of the API entity by calculating the hash value.

Example 8: The MMU-less device or the firmware of Example 6 or 7, where the loader component is configured, for obtaining the hash value, to obtain the name of the API entity from a string table section in the executable file.

Example 9: The MMU-less device or the firmware of Example 8, where the loader component is configured to obtain the name of the API entity from the string table section without creating a copy of this section in at least one of the RAM and/or the built-in non-volatile memory; and optionally by sending out a request to fetch this name, where the request specifies a location of this name in the string table section.

Example 10: The MMU-less device or the firmware of any of Examples 6 to 9, where the loader component is configured to obtain the name of the API entity based on a name index of the API entity, upon obtaining this name index from a symbol table section from the executable file.

Example 11: The MMU-less device or the firmware of Example 10, where the loader component is configured to obtain the name index from that entry in the symbol table section whose entry index is recorded in that relocation data section in the executable file, which corresponds to the section comprising the invocation.

Example 12: The MMU-less device or the firmware of Example 11, where the loader component is configured to obtain the entry index from a relocation entry corresponding to the at least one bit in the relocation data section.

Example 13: The MMU-less device or the firmware of Example 11 or 12, where the relocation entry further comprises an offset of the at least one bit in the section comprising the invocation.

Example 14: The MMU-less device or the firmware of any one of Examples 11 to 13, where the relocation entry further comprises a type of the relocation.

Example 15: The MMU-less device or the firmware of any one of Examples 11 to 14, where the loader component is configured to determine the relocation value after checking that the entry in the symbol table section comprises a section header index of a zero value or of a different value not corresponding to any section from the executable file, or does not comprise any section header index.

Example 16: The MMU-less device or the firmware of any one of Examples 3 to 15, where the loader component is configured to modify the at least one bit of the section comprising the invocation based on the determined relocation value.

Example 17: The MMU-less device or the firmware of any one of Examples 3 to 16, where the loader component is configured to load a plurality of allocatable sections from the executable file into available blocks in the RAM, to record in the RAM a table of correspondence between the allocatable sections of the plurality and addresses at which the allocatable sections are loaded, and to perform at least one relocation for an invocation from one of the allocatable sections of the plurality to the same or another of the allocatable sections of the plurality based on the table of correspondence.

Example 18: A MMU-less device comprising an at least one processing unit, a RAM, and a built-in non-volatile memory of the MMU-less device, where the built-in non-volatile memory or the RAM stores a loader component configured to load a plurality of allocatable sections from an executable file into available blocks in the RAM, to record into the RAM a table of correspondence between the allocatable sections of the plurality and addresses at which the allocatable sections are loaded, and to perform at least one relocation for an invocation from a one of the allocatable sections of the plurality to the same or another of the allocatable sections of the plurality based on the table of correspondence.

Accordingly, there is a related (Firmware) Example 18: A firmware for a MMU-less device, comprising an at least one processing unit, a RAM, and a built-in non-volatile memory, where the firmware is configured to be stored in the built-in non-volatile memory and comprises a loader component, optionally loadable into the RAM, and configured to load a plurality of allocatable sections from an executable file into available blocks in the RAM, to record into the RAM a table of correspondence between the allocatable sections of the plurality and addresses at which the allocatable sections are loaded, and to perform at least one relocation for an invocation from a one of the allocatable sections of the plurality to the same or another of the allocatable sections of the plurality based on the table of correspondence.

Example 18 - Variation: A MMU-less device comprising an at least one processing unit, a RAM, a built-in non-volatile memory of the MMU-less device, and at least two antennas, each for receiving and/or transmitting signals at at least its respective associated frequency, where the built-in non-volatile memory or the RAM stores a loader component to load a plurality of allocatable sections from the executable file into available blocks in the RAM, to record into the RAM a table of correspondence between the allocatable sections of the plurality and addresses at which the allocatable sections are loaded, and to perform at least one relocation for an invocation from a one of the allocatable sections of the plurality to the same or another of the allocatable sections of the plurality based on the table of correspondence.

In a further variation of Example 18, the MMU-less device may be so adapted that a certain antenna from the at least two or three antennas is operable in a Sub-GHz range, or near-field communication, NFC, range, or a LF RFID range; another antenna from the at least two or three antennas is operable in a range being the Sub-GHz range, or the NFC range, or the LF RFID range and different from the range of the certain antenna; and, optionally, yet another antenna is operable in a range being the Sub-GHz range, or the NFC range, or the LF RFID range and different from the range of the certain antenna and the another antenna.

In yet a further, independent, variation of Example 18, the MMU-less device may be so adapted that at least one of the allocatable sections comprises an invocation of an API entity for transmitting a signal using at least one antenna from the antennas and/or for receiving a signal using the at least one antenna from the antennas. In other words, the MMU-less device may comprise an API entity for transmitting a signal using at least one antenna from the antennas and/or for receiving a signal using the at least one antenna from the antennas, and thereby the MMU-less device may be configured to respectively transmit or receive the signal upon at least one of the allocatable sections comprising an invocation of the API entity.

Example 19: The MMU-less device or the firmware of Example 17 or 18, where the loader component is configured to load at least one allocatable section thereby occupying a first available byte in the RAM and an at least one allocatable section thereby occupying a second available byte in the RAM, where the loader component avoids writing into a byte in the RAM between the first and the second available bytes, where optionally this byte is allocated to a program different from the received program.

Example 20: The MMU-less device or the firmware of any one of Examples 17 to 19, where the loader component is configured to perform the at least one relocation based on a symbol table section from the executable file.

Example 21: The MMU-less device or the firmware of Example 20, where the loader component is configured to perform the at least one relocation based on a section header index and a value associated symbol in that entry in the symbol table section whose entry index is recorded in a relocation data section located in the executable file and corresponding to the one of the allocatable sections.

Example 22: The MMU-less device or the firmware of any one of Examples 3 to 21, where the executable file is an ELF compatible file.

Example 23: The MMU-less device or the firmware of any one of Examples 3 to 22, where the executable file is partially-linked.

Example 24: The MMU-less device or the firmware of any of preceding Examples, where
(a): the MMU-less device comprises an at least one user interface input and/or at least one output unit; and/or
(b): the MMU-less device is a handheld or mobile device; and/or
(c): the MMU-less device comprises at least two, three, four or five antennas for acting, optionally via at least one wireless transceiver, at respectively at least two, three, four or five frequencies, and/or
(d): the MMU-less device comprises a MMU-less microcontroller comprising two processing units, where one of them is a central processing unit and the other is a dedicated processing unit for processing radio stack data; and/or
(e): the built-in non-volatile memory comprises memory of at least one of EEPROM and flash type, and/or
(f): a total volume of the built-in non-volatile memory of the MMU-less device does not exceed 8 MB, 4 MB, or 2 MB, or 1 MB; and/or
(g): a total volume of the RAM of the MMU-less device does not exceed 1 MB; and/or
(h): the MMU-less device lacks at least a hardware MMU; and/or
(i): the API entities are of a firmware or an operating system of the MMU-less device; and/or
(j): the MMU-less device is configured for receiving the program from an external storage being a communication device or an external memory, which optionally may be a non-volatile memory, which optionally may be a non-volatile chip (and/or a non-volatile on-chip) storage or a card chip; or another memory carrier (a memory record carrier or a data carrier), optionally, passive; or any suitable machine-readable storage medium.

Example 25: A non-volatile chip (and/or a non-volatile on-chip) storage for use as an external memory of a MMU-less device of any one of preceding Examples, where the non-volatile chip storage stores an executable file storing a program for the MMU-less device and comprising at least one allocatable section, which comprises at least one bit recorded as requiring a relocation, the executable file comprises a symbol table section, an entry in the symbol table section corresponding to the at least one bit comprises a section header index of a zero value or of a different value not corresponding to any section from the executable file, or does not comprise any section header index; and the entry comprises a name index of an API entity of an operating system for the MMU-less device.

Example 26: The non-volatile chip storage of Example 25, where the executable file comprises a string table section, which comprises a name of the API entity associated with the name index.

Example 27: The non-volatile chip storage of any one of Examples 25 or 26, where the executable file is an ELF file.

Example 28: The non-volatile chip storage of any one of Examples 25 to 27, where the executable file is partially linked.

Example 29: A system comprising the MMU-less device of any of Examples 1 to 24 and the non-volatile chip storage of any of Examples 25 to 28, where the MMU-less device is configured to communicate with or to access or read the non-volatile chip storage.

Example 30: A method comprising sending an API table from a communication device to a memory management unit-less (MMU-less) device comprising an at least one processing unit, a RAM, and a built-in non-volatile memory storing API entities, where the API table comprises a sorted plurality of hash values, calculated based on a plurality of names of API entities and paired with a plurality of addresses of API entities.

Example 31: The method of Example 30, where the API table sent to the MMU-less device from the communication device is comprised in a firmware for the MMU-less device which is sent to the MMU-less device from the communication device.

Example 32: A method comprising sending from a communication device to a memory management unit-less (MMU-less) device or recording into a non-volatile chip (and/or a non-volatile on-chip) storage an executable file storing a program for the MMU-less device and comprising at least one allocatable section, which comprises at least one bit recorded as requiring a relocation, where the executable file comprises a symbol table section, an entry in the symbol table section corresponding to the at least one bit comprises a section header index of a zero value or of a different value not corresponding to any section from the executable file, or does not comprise any section header index; and the entry comprises a name index of an API entity of an operating system for the MMU-less device.

Example 32 - Variation: A method comprising sending from a communication device to a MMU-less device comprising at least two or three antennas, each for receiving and/or transmitting signals at at least its respective associated frequency, or recording into a non-volatile chip (and/or a non-volatile on-chip) storage an executable file storing a program for the MMU-less device and comprising at least one allocatable section, which comprises at least one bit recorded as requiring a relocation, where the executable file comprises a symbol table section, an entry in the symbol table section corresponding to the at least one bit comprises a section header index of a zero value or of a different value not corresponding to any section from the executable file, or does not comprise any section header index; and the entry comprises a name index of an API entity of an operating system for the MMU-less device.

In a further variation of Example 32, the API entity may be for transmitting a signal using at least one antenna from the antennas and/or for receiving a signal using the at least one antenna from the antennas.

Example 33: The method of Example 32, where the executable file comprises a string table section, which comprises a name of the API entity associated with the name index.

Example 34: The method of Example 32 or 33, where the executable file is an ELF file.

Example 35: The method of any one of Examples 32 to 34, where the executable file is partially linked.

Example 36: A communication device, configured to perform the method of any of Examples 30 to 34.

Example 37: A computer-implemented method for use in preparing an at least one of (a) a firmware with an application program interface (API) comprising a plurality of API entities for an MMU-less device, and (b) a software development kit (SDK) for preparing a software, comprising an at least invocation of the API, for the MMU-less device, the method comprising generating from a firmware source code comprising a plurality of header files, composed of a plurality of top-level header files and a plurality of nested header files and comprising declarations of a plurality of entities for including into the plurality of API entities, an amalgamated header file, composed of each top-level header file from the plurality of header files.

Example 38: The method of the preceding Example, comprising searching in the firmware source code for the plurality of top-level header files for the generation, where the searching comprises reading names and file paths of the plurality of top-level header files, from one or more component manifest file.

Example 39: The method of Example 37 or 38, comprising generating a preprocessed amalgamated header file by invoking an at least one program from (a) a standalone preprocessor; (b) a preprocessor of a compiler, where the preprocessor is separately invokable; and (c) a compiler.

Example 40: The method of the preceding Example, comprising parsing the preprocessed amalgamated header file to generate a deep declaration table comprising a plurality of declarations from the proprocessed amalgamated header file.

Example 41: The method of the preceding Example, comprising storing API indicator data, which indicate for each declaration in the deep declaration table whether the declaration is for an API entity from the API or not for an API entity from the API; where, optionally, the storing comprises adding the API indicator data to the deep declaration table.

Example 42: The method of the preceding Example, comprising displaying at least a part of the deep declaration table on a screen, and collecting at least a part of the API indicator data from a human-computer interface for the storing the API indicator data.

Example 43: The method of Example 41 or 42, where the API indicator data indicates for at least one declaration present in the deep declaration table and in the plurality of header files that this at least one declaration is not for an API entity from the API; and/or the API indicator data indicates for at least one declaration present in the deep declaration table and not present in the plurality of header files that this at least one declaration is for an API entity from the API.

Example 44: The method of any one of Examples 41 to 43, comprising including the deep declaration table along with, and optionally containing the API indicator data, into the SDK.

Example 45: The method of any one of Examples 41 to 44, comprising generating an API version indicator for the API, where the API version indicator indicates whether the API is incompatible with at least one previous API by a difference with respect to a previous API version indicator, where the generating the API version indicator comprises comparing the declarations of the API entities in the deep declaration table with previous declarations of previous API entities in a previous deep declaration table, and finding the lack of the compatibility if at least one of the previous API entities is not presented or is incompatibly presented among the API entities.

Example 46: The method of the preceding Example, comprising including the version indicator into the SDK, optionally by recording it into the deep declaration table.

Example 47: The method of any one of Examples 39 to 46, comprising generating a dependency file by the invoking the at least one program to store the dependency file after an end of the preprocessing and, optionally, after exiting the program, where the dependency file stores a name and file path of a single copy of each file from the plurality of header files.

Example 48: The method of the preceding Example, comprising copying, based on the dependency file, the plurality of header files from the firmware source code, to include the single copy of each of the plurality of header files in the SDK, optionally with an exception of one or more header file, from the plurality of the header files, for which one or more header file the API indicator data indicates that it is not in the API.

Example 49: The method of the preceding Example, comprising placing the plurality of header files into a directory structure in the SDK replicating a corresponding directory structure in the firmware source code, optionally taking into account the exception.

Example 50: The method of any one of Examples 41 to 49, where a header file from the firmware source code declares a hash function with an argument being a string, where optionally this hash-function-declaring header file does not belong to the plurality of the header files.

Example 51: The method of Example 50 comprising generating, based on the deep declaration table along with and optionally including the API indicator data, and based on the firmware source code, a compilable file, optionally being an implementation file or a header file, where the compilable file comprises an array of structures, where each structure comprises an invocation of the hash function with an argument being a name of an API entity, and a reference to an address of the API entity, where the compilable file comprises an invocation of a sorting procedure for the array of the structures according to the hash values calculated by invocations of the hash function, and the invocations of the hash function and the sorting procedure are executable by the at least one program.

Example 52: The method of Example 50 comprising generating, based on the deep declaration table along with and optionally including the API indicator data, and based on the firmware source code, a compilable file, optionally being an implementation file or a header file, where the compilable file comprises an array of structures, where each structure comprises a hash value calculated by applying the hash function to a name of an API entity, and a reference to an address of the API entity, where the array is sorted according to the hash values in the structures.

Example 53: A computer-readable memory storage for use in (computer-implemented) preparing, for an MMU-less device, a firmware comprising an application program interface (API) comprising a plurality of API entities, where the memory storage stores a compilable file, optionally being an implementation file or a header file, where the compilable file comprises an array of structures, where each structure comprises an invocation of a hash function with an argument being a string presenting a name of an API entity, and a reference to an address of the API entity, where the compilable file comprises an invocation of a sorting procedure for the array of the structures according to the hash values calculated by invocations of the hash function, and the invocations of the hash function and the sorting procedure are executable by an at least one from a standalone preprocessor, a preprocessor of a compiler, and a compiler.

In a variation, this Example presents a compilable file for use in (computer-implemented) preparing a firmware for an MMU-less device, where the firmware is to comprise an application program interface (API) comprising a plurality of API entities, and the compilable file is, optionally, an implementation file or a header file; where the compilable file comprises an array of structures, where each structure comprises an invocation of a hash function with an argument being a string presenting a name of an API entity, and a reference to an address of the API entity, where the compilable file comprises an invocation of a sorting procedure for the array of the structures according to the hash values calculated by invocations of the hash function, and the invocations of the hash function and the sorting procedure are executable by an at least one from a standalone preprocessor, a preprocessor of a compiler, and a compiler.

Example 54: A computer-readable memory storage for use in (computer-implemented) preparing, for an MMU-less device, a firmware comprising an application program interface (API) comprising a plurality of API entities, where the memory storage stores a compilable file, optionally being an implementation file or a header file, where the compilable file comprises an array of structures, where each structure comprises a hash value calculated by applying a hash function to a string presenting a name of an API entity, and a reference to an address of the API entity, where the array is sorted according to the hash values in the structures.

In a variation, this Example presents a compilable file for use in (computer-implemented) preparation of a firmware for an MMU-less device, the firmware comprising an application program interface (API) comprising a plurality of API entities, and the compilable file is, optionally, an implementation file or a header file; the compilable file comprising an array of structures, where each structure comprises a hash value calculated by applying a hash function to a string presenting a name of an API entity, and a reference to an address of the API entity, where the array is sorted according to the hash values in the structures.

Example 55: The memory storage or the compilable file of Example 53 or 54, where each reference is a code of a command of obtaining an address applied to the respective API entity referred to by its name.

Example 56: The computer-readable memory storage or the compilable file of any one of Examples 53 to 55, comprising an implementation of the hash function for including the hash function into a loader component of the firmware.

Example 57: The computer-readable memory storage of any one of Examples 53 to 56, storing the compiler.

Example 58: The computer-readable memory storage of any one of Examples 53 to 57, storing a linker configured, for preparing an executable file presenting the firmware, to replace the references to the addresses with addresses configured for a memory of the MMU-less device.

Also, the same or a different computer-readable memory storage or a machine-readable data carrier, which optionally may be computer-readable and/or readable by the MMU-less device, may store the firmware or the loader component of any of the examples in the present disclosure (and, alternatively, or additionally: an executable file, and/or a file set, and/or a pre-updater component, and/or an updater image, and/or updated software image, as disclosed in respective parts of the present disclosure).

In this regard, the disclosure also provides a further group of Examples, which may be called Fast-Loading-Technique (FLT) Examples as follows:
(FLT) Example 1: An executable file for a MMU-less device, where the file comprises a program comprising an invocation of an application program interface (API) of the MMU-less device, where the executable file comprises a data structure comprising (a) an offset of an at least one bit corresponding to the API invocation in a section comprising the API invocation, along with (b) an identifier of an API entity subject to the invocation, where the section comprising the API invocation is an at least one executable section or another allocatable section subject to loading into a RAM of the MMU-less device from the executable file.
(FLT) Example 2: A file set, comprising (a) an executable file comprising a program comprising an invocation of an application program interface (API) of a MMU-less device and (b) an external file, with respect to the executable file, where the external file comprises a data structure, where the data structure comprises an offset of an at least one bit corresponding to the API invocation in a section comprising the API invocation, along with an identifier of an API entity subject to the invocation, where the section comprising the API invocation is an at least one executable section or another allocatable section subject to loading into a RAM of the MMU-less device from the executable file.
(FLT) Example 3: The file set of (FLT) Example 2, where a location and/or name of the external file is referred to in the executable file; and/or the location and/or name of the external file relates according to one of a plurality of predetermined rules to a location of the executable file and/or a name of the executable file.
(FLT) Example 4: The executable file or file set of any one of preceding (FLT) Examples, where the data structure does not include or intersect with a relocation data section corresponding to the section comprising the API invocation, if the relocation data section is present in the executable file, and/or the offset recorded in the data structure is a copy of an offset recorded, for the at least one bit corresponding to the API invocation, in a relocation data section of the executable file corresponding to the section comprising the API invocation.
(FLT) Example 5: The executable file or file set of any one of preceding (FLT) Examples, where the data structure does not include or intersect with a string table section of the executable file, and/or the identifier of the API entity subject to the invocation is a copy of a name stored for the API invocation in a string table section of the executable file or a hash value calculated based on the name of the API entity.
(FLT) Example 6: The executable file or file set according to any one of preceding (FLT) Examples, comprising at least one more invocation of the same API entity in the section comprising the API invocation, and comprising in the data structure at least one more offset of an at least one bit corresponding to the at least one more invocation of the same API entity where, optionally, the at least one more offset is a copy of an least one more offset recorded in a relocation data section of the executable file corresponding to the section comprising the API invocation.
(FLT) Example 7: The executable file or file set according to any one of preceding (FLT) Examples, comprising an invocation of another API entity in the section comprising the API invocation, and comprising in the data structure an offset of an at least one bit corresponding to the invocation of the another API entity along with an identifier of the another API entity, where, optionally, the offset of the at least one bit corresponding to the invocation of the another API entity is a copy of an offset recorded, for the at least one bit corresponding to the invocation of the another API entity, in a relocation data section of the executable file corresponding to the section comprising the API invocation, and/or optionally, the identifier of the another API entity is a copy of a name of the another API entity in a string table section of the executable file or a hash value calculated based on the name of the another API entity.
(FLT) Example 8: The file set or executable file according to any one of preceding (FLT) Examples, comprising in the section comprising the API invocation an invocation to the same or another allocatable section of the program, and comprising in the data structure: an offset of an at least one bit corresponding to the invocation to the the same or another allocatable section; a section header index of the the same or another allocatable section; and a value associated symbol relating to the invocation to the the same or another allocatable section, where, optionally, the offset of the at least one bit corresponding to the invocation to the the same or another allocatable section is a copy of an offset recorded, for the at least one bit corresponding to the invocation to the the same or another allocatable section, in a relocation data section of the executable file corresponding to the section comprising the API invocation; and/or where, optionally, the section header index of the the same or another allocatable section and the value associated symbol relating to the invocation to the the same or another allocatable section are copies of, respectively, a section header index of the the same or another allocatable section and a value associated symbol relating to the invocation to the the same or another allocatable section includes a symbol table section of the executable file.
(FLT) Example 9: The executable file or file set according to any one of preceding (FLT) Examples, where the data structure comprises all offsets corresponding to invocations requiring relocation in the section comprising the API invocation, and, optionally, does not comprise an offset of any invocation requiring relocation in a different section of the executable file.
(FLT) Example 10: An executable file comprising a program for a MMU-less device with a RAM, where the program comprises a first and a second allocatable section, and the first allocable section comprises an invocation from it to the second allocatable section, where the executable file comprises a data structure comprising an offset of an at least one bit, corresponding to the invocation, in the first allocatable section; a section header index of the second allocatable section; and a value associated symbol relating to the invocation.
(FLT) Example 11: A file set, comprising (a) an executable file comprising a program for a MMU-less device with a RAM, where the program comprises a first allocatable section, and a second allocatable section, and the first allocable section comprises an invocation from it to the second allocatable section, and (b) an external file, with respect to the executable file, where the external file comprises a data structure, where the data structure comprises an offset of an at least one bit, corresponding to the invocation, in the first allocatable section; a section header index of the second allocatable section; and a value associated symbol relating to the invocation.
(FLT) Example 12: The file set of (FLT) Example 11, where a location and/or name of the external file is referred to in the executable file; and/or the location and/or name of the external file relates according to one of a plurality of predetermined rules to a location of the executable file and/or a name of the executable file.
(FLT) Example 13: The file set or executable file according to any one of (FLT) Examples 10 to 12, where the data structure does not include or intersect with a relocation data section corresponding to the section comprising the invocation, if the relocation data section is present in the executable file, and/or the offset recorded in the data structure is a copy of an offset recorded, for the at least one bit corresponding to the invocation, in a relocation data section of the executable file corresponding to the section comprising the invocation.
(FLT) Example 14: The file set or executable file according to any one of (FLT) Examples 10 to 13, where the data structure does not include or intersect with a symbol table section of the executable file, and/or the section header index of the second allocatable section and the value associated symbol relating to the invocation are copies of, respectively, a section header index of the second allocatable section and a value associated symbol relating to the invocation in the symbol table section.
(FLT) Example 15: The file set or executable file according to any one of (FLT) Examples 10 to 14, where the first allocatable section comprises an at least one more invocation, the at least one more invocation is to an allocatable section the same or different from the first allocatable section, and the data structure comprises an at least one more offset of an at least one bit corresponding to the at least one more invocation in the first allocatable section.
(FLT) Example 16: The file set or executable file of (FLT) Example 15, where the data structure comprises for the at least one more invocation a same information or data, with an exception of the offset, as for the invocation.
(FLT) Example 17: The file set or executable file of any of the (FLT) Examples 10 to 16, where the data structure comprises all offsets corresponding to invocations requiring relocation in the first allocatable section, and, optionally, does not comprise an offset of any invocation requiring relocation in a different section of the executable file.
(FLT) Example 18: The file set or executable file according to any of the preceding (FLT) Examples, where the data structure presents only a part of the executable file and, optionally, is a section in the executable file or, optionally, is an orphan data structure in the executable file; and/or where the data structure is less than 32, or 64, or 128, or 256 kB in volume.
(FLT) Example 19: A storage or memory medium, readable by a computer, or by an MMU-less device for receiving and executing a program, where the medium stores the file set or executable file according to any one of the preceding (FLT) Examples.
(FLT) Example 20: A method of generation of at least one of an executable file and a file set, the method comprising accessing a partially-linked executable file, generating a data structure based on the partially-linked executable file, and at least one of:
   (a) storing the data structure in an external file, with respect to the partially-linked executable file, to generate a file set, where the data structure is configured to complete the partially-linked executable file to the file set according to any one of the preceding (FLT) Examples; and
   (b) merging the data structure into the partially-linked executable file, or its copy, where the data structure is configured to modify the partially-linked executable file into the executable file according to any one of the preceding (FLT) Examples.
(FLT) Example 21: The method of (FLT) Example 20, comprising copying the offset of the at least one bit corresponding to the invocation into the data structure from a relocation data section in the partially-linked executable file.
(FLT) Example 22: The method of (FLT) Example 20 or 21, comprising obtaining the identifier of the API entity by accessing an entry corresponding to the invocation in a symbol table section in the partially-linked executable file and reading a name of the API entity based on this entry in a string table section in the partially-linked executable file.
(FLT) Example 23: The method of (FLT) Example 22, where the obtaining the identifier comprises using the name of the API entity as the identifier of the API entity, or calculating a hash function of the name of the API entity and using it as the identifier of the API entity, where the hash function is a same with which the API table of the MMU-less device is built.
(FLT) Example 24: The method according to any one of (FLT) Examples 20 to 23, comprising copying the section header index and the value associated symbol into the data structure from a symbol table section in the partially-linked executable file.
(FLT) Example 25: The method according to any one of (FLT) Examples 20 to 24, comprising modifying a section header table of the partially-linked executable file to refer to the data structure as a section.
(FLT) Example 26: The method of any one of (FLT) Examples 20 to 25, comprising removing or modifying at least one of the relocation data section, the symbol table section, and the string table section from the partially-linked executable file.
(FLT) Example 27: A method for use in preparing for or performing a relocation, for a program for a MMU-less device, and/or for use in preparing the MMU-less device for executing the program, the method comprising loading into a RAM of the MMU-less device, from the executable file or the file set according to any one of (FLT) Examples 1 to 18, the data structure, and loading into the RAM, from the executable file or the file set according to any one of (FLT) Examples 1 to 18, the section comprising the API invocation, or the first allocatable section and the second allocatable section.
(FLT) Example 28: A method for use in preparing for or performing a relocation, for a program for a memory management unit-less (MMU-less) device, and/or for use in preparing the MMU-less device for executing the program, the method comprising loading an allocatable section from the program into a RAM of the MMU-less device, where the allocatable section comprises at least one bit corresponding to an invocation of an API entity requiring the relocation, and loading into the RAM a data structure, comprising (a) an offset of the at least one bit corresponding to the API invocation in a section comprising the API invocation, along with (b) an identifier of an API entity subject to the invocation.
(FLT) Example 29: A method for use in preparing for or performing a relocation, for a program for a memory management unit-less (MMU-less) device, and/or for use in preparing the MMU-less device for executing the program, the method comprising loading a first and a second allocatable sections from the program into a RAM of the MMU-less device, where the first allocatable section comprises at least one bit corresponding to an invocation from the first allocatable section of the program to the second allocatable section requiring the relocation, and loading into the RAM a data structure, comprising an offset of the at least one bit in the first allocatable section along with a section header index of the second allocatable section and with a value associated symbol relating to the invocation.
(FLT) Example 30: The method according to any one of (FLT) Examples 27 to 29, comprising releasing a part of the RAM occupied by the data structure before executing the program.
(FLT) Example 31: The method according to any one of (FLT) Examples 27 to 30, where the MMU-less device performs the loading the data structure by reading the data structure stored in an external memory or an external communication device.
(FLT) Example 32: The method according to (FLT) Example 31, where the MMU-less device performs the loading the allocatable section comprising the invocation of the API entity, or the first and second allocatable sections, by reading the allocatable section comprising the invocation of the API entity, or the first and second allocatable sections, from the external memory or the external communication device.
(FLT) Example 33: The method according to any one of (FLT) Example 20 to 32, where the MMU-less device comprises a built-in non-volatile memory storing an API table of API entity identifiers and addresses, comprising a plurality of identifiers, being or corresponding to a plurality of names of API entities and paired with a plurality of addresses of the API entities.
(FLT) Example 34: A memory management unit-less (MMU-less) device for receiving and executing a program comprising an invocation of an application program interface (API) of the MMU-less device, where the MMU-less device comprises an at least one processing unit, a RAM, and a built-in non-volatile memory storing API entities, where the built-in non-volatile memory stores an API table of API entity identifiers and addresses, comprising a plurality of identifiers, being or corresponding to a plurality of names of API entities and paired with a plurality of addresses of the API entities, the built-in non-volatile memory or the RAM stores a loader component for reading the executable file or the file set according to any one of (FLT) Examples 1 to 9, 18 and 19 to load the at least one executable section from the executable file, comprising the program, into the RAM, the loader component is configured to perform a relocation at an at least one bit, corresponding to the API invocation, in the section comprising the API invocation and being (a) the at least one executable section or (b) another allocatable section subject to loading into the RAM from the executable file, by accessing the data structure from the file set or the executable file according to any one of (FLT) Examples 1 to 9, 18 and 19.
In other words, this Example also provides a firmware for a MMU-less device, comprising an at least one processing unit, a RAM, and a built-in non-volatile memory, and for allowing receiving and executing a program comprising an invocation of an API of the firmware by the MMU-less device, where the firmware is configured to be stored in the built-in non-volatile memory and comprises API entities, the firmware comprises an API table of API entity identifiers and addresses, comprising a plurality of identifiers, being or corresponding to a plurality of names of API entities and paired with a plurality of addresses of the API entities, the firmware comprises a loader component, optionally loadable into the RAM, for reading the executable file or the file set according to any one of (FLT) Examples 1 to 9, 18 and 19 to load the at least one executable section from the executable file, comprising the program, into the RAM, the loader component is configured to perform a relocation at an at least one bit, corresponding to the API invocation, in the section comprising the API invocation and being (a) the at least one executable section or (b) another allocatable section subject to loading into the RAM from the executable file, by accessing the data structure from the file set or the executable file according to any one of (FLT) Examples 1 to 9, 18 and 19.
(FLT) Example 35: A memory management unit-less (MMU-less) device for receiving and executing a program comprising an invocation of an application program interface (API) of the MMU-less device, where the MMU-less device comprises an at least one processing unit, a RAM, and a built-in non-volatile memory storing API entities, where the built-in non-volatile memory stores an API table of API entity identifiers and addresses, comprising a plurality of identifiers, being or corresponding to a plurality of names of API entities and paired with a plurality of addresses of the API entities, the built-in non-volatile memory or the RAM stores a loader component for loading an at least one executable section from an executable file, comprising the program, into the RAM, the loader component is configured to perform a relocation for an at least one bit, corresponding to the API invocation, in a section comprising the API invocation and being (a) the at least one executable section or (b) another allocatable section subject to loading into the RAM from the executable file, by accessing a data structure, being a part of the executable file or being external to the executable file, and comprising an offset of the at least one bit in the section comprising the API invocation along with an identifier of an API entity subject to the invocation.
That is, equivalently, Example 35 also provides a firmware for a MMU-less device, comprising an at least one processing unit, a RAM, and a built-in non-volatile memory, and for allowing receiving and executing a program comprising an invocation of an API of the firmware by the MMU-less device, where the firmware is configured to be stored in the built-in non-volatile memory and comprises API entities, the firmware comprises an API table of API entity identifiers and addresses, comprising a plurality of identifiers, being or corresponding to a plurality of names of API entities and paired with a plurality of addresses of the API entities, the firmware comprises a loader component, optionally loadable into the RAM, for loading an at least one executable section from an executable file, comprising the program, into the RAM, and the loader component is configured to perform a relocation for an at least one bit, corresponding to the API invocation, in a section comprising the API invocation and being (a) the at least one executable section or (b) another allocatable section subject to loading into the RAM from the executable file, by accessing a data structure, being a part of the executable file or being external to the executable file, and comprising an offset of the at least one bit in the section comprising the API invocation along with an identifier of an API entity subject to the invocation.
(FLT) Example 36: The MMU-less device or the firmware of (FLT) Example 35, where the loader component is configured to perform at least one more relocation by, optionally, use a same relocation value as for the relocation, for at least one more invocation of the same API entity in the section comprising the API invocation, by accessing in the data structure an at least one more offset of an at least one bit corresponding to the at least one more invocation of the same API entity.
(FLT) Example 37: The MMU-less device or the firmware of (FLT) Example 35 or 36, where the loader component is configured to perform another relocation for an invocation of another API entity in the section comprising the API invocation, by accessing in the data structure an offset of an at least one bit corresponding to the invocation of the another API entity along with an identifier of the another API entity.
(FLT) Example 38: The MMU-less device or the firmware according to any one of (FLT) Examples 35 to 37, where the loader component is configured to perform a relocation for an invocation in the section comprising the API invocation to the same or another allocatable section of the program, by accessing in the data structure an offset of an at least one bit corresponding to the invocation to the the same or another allocatable section along with a section header index of the the same or another allocatable section and a respective value associated symbol relating to the invocation to the the same or another allocatable section.
(FLT) Example 39: The MMU-less device or the firmware according to any one of (FLT) Examples 35 to 38, where the loader component is configured to access the data structure comprising all offsets corresponding to invocations requiring relocation in the section comprising the API invocation, and, optionally, not comprising an offset of an invocation requiring relocation in a different section.
(FLT) Example 40: A memory management unit-less (MMU-less) device for receiving and executing a program comprising an invocation from a first allocatable section of the program to a second allocatable section of the program, where the MMU-less device comprises an at least one processing unit, a RAM, and a built-in non-volatile memory, where the built-in non-volatile memory or the RAM stores a loader component for loading the first and second allocatable sections from an executable file, comprising the program, into the RAM, and the loader component is configured to perform a relocation at an at least one bit, corresponding to the invocation, by accessing the data structure from the file set or the executable file according to any one of (FLT) Examples 10 to 19.

Accordingly, the present Example 40 also provides a firmware for a MMU-less device, comprising an at least one processing unit, a RAM, and a built-in non-volatile memory, and for allowing receiving and executing a program comprising an invocation from a first allocatable section of the program to a second allocatable section of the program, where the firmware is configured to be stored in the built-in non-volatile memory, and comprises a loader component, optionally loadable into the RAM, for loading the first and second allocatable sections from an executable file, comprising the program, into the RAM, and the loader component is configured to perform a relocation at an at least one bit, corresponding to the invocation, by accessing the data structure from the file set or the executable file according to any one of (FLT) Examples 10 to 19.

(FLT) Example 41: A memory management unit-less (MMU-less) device for receiving and executing a program comprising an invocation from a first allocatable section of the program to a second allocatable section of the program, where the MMU-less device comprises an at least one processing unit, a RAM, and a built-in non-volatile memory, where the built-in non-volatile memory or the RAM stores a loader component for loading the first and second allocatable sections from an executable file, comprising the program, into the RAM, and the loader component is configured to perform a relocation at an at least one bit, corresponding to the invocation by accessing a data structure, being a part of the executable file or being external to the executable file, and comprising an offset of the at least one bit in the first allocatable section along with a section header index of the second allocatable section and with a value associated symbol relating to the invocation.

Similarly, the present Example 41 also provides a firmware for a MMU-less device, comprising an at least one processing unit, a RAM, and a built-in non-volatile memory, and for allowing receiving and executing a program comprising an invocation from a first allocatable section of the program to a second allocatable section of the program, where the firmware is configured to be stored in the built-in non-volatile memory, and comprises a loader component, optionally loadable into the RAM, for loading the first and second allocatable sections from an executable file, comprising the program, into the RAM, and the loader component is configured to perform a relocation at an at least one bit, corresponding to the invocation by accessing a data structure, being a part of the executable file or being external to the executable file, and comprising an offset of the at least one bit in the first allocatable section along with a section header index of the second allocatable section and with a value associated symbol relating to the invocation.

(FLT) Example 42: The MMU-less device or the firmware of (FLT) Example 41, where the loader component is configured to perform an at least one more relocation for an at least one more invocation in the first allocatable section to an allocatable section being the same or different from the first allocatable section, by accessing in the data structure an at least one more offset of an at least one bit corresponding to the at least one more invocation in the first allocatable section.

(FLT) Example 43: The MMU-less device or the firmware of (FLT) Example 42, where the loader component is configured to use a same relocation value, as for the relocation, for the at least one more invocation for which the data structure comprises a same information or data, with an exception of the offset, as for the invocation.

(FLT) Example 44: The MMU-less device or the firmware of any of the (FLT) Examples 41 to 43, where the loader component is configured to access the data structure comprising all offsets corresponding to invocations requiring relocation in the first allocatable section, and, optionally, not comprising an offset of an invocation requiring relocation in a different section.

(FLT) Example 45: The MMU-less device or the firmware according to any one of (FLT) Examples 34 to 44, where the loader component is configured to load the data structure into the RAM.

(FLT) Example 46: The MMU-less device or the firmware according to any one of (FLT) Examples 34 to 45, where the loader component is configured to load the data structure presented by a section in the executable file; or presented by an orphan data structure in the executable file; or presented by or included into an external file, with respect to the executable file, a location and/or name of the external file being referred to in the executable file; and/or the location and/or name of the external file relating according to one of a plurality of predetermined rules to a location of the executable file and/or a name of the executable file.

(FLT) Example 47: The MMU-less device or the firmware of any one of (FLT) Examples 34 to 46, where the plurality of API entity identifiers is presented by a plurality of names of the API entities, or by a plurality of API name hashes calculated based on the plurality of names of the API entities.

(FLT) Example 48: The MMU-less device or the firmware of any one of (FLT) Examples 34 to 47, where the API table is a table of sorted API entity identifiers, paired with respective addresses.

(FLT) Example 49: The MMU-less device or the firmware of any one of (FLT) Examples 34 to 48, comprising at least two or three antennas, each for receiving and/or transmitting signals at at least its respective associated frequency.

(FLT) Example 50: The MMU-less device or the firmware of (FLT) Example 49, where the API entities comprise among them a first API entity for transmitting a signal using at least a first antenna from the antennas and/or for receiving a signal using the at least first antenna from the antennas; optionally comprise among them a second API entity for transmitting a signal using at least a second antenna from the antennas and/or for receiving a signal using the at least second antenna from the antennas, and optionally comprise among them a third API entity for transmitting a signal using at least a third antenna from the antennas and/or for receiving a signal using the at least third antenna from the antennas.

(FLT) Example 51: The MMU-less device or the firmware of (FLT) Example 49 or 50, where a certain antenna from the at least two or three antennas is operable in a Sub-GHz range, or near-field communication, NFC, range, or a LF RFID range; another antenna from the at least two or three antennas is operable in a range being the Sub-GHz range, or the NFC range, or the LF RFID range and different from the range of the certain antenna; and, optionally, yet another antenna is operable in a range being the Sub-GHz range, or the NFC range, or the LF RFID range and different from the range of the certain antenna and the another antenna.

(FLT) Example 52: The MMU-less device or the firmware of any one of (FLT) Examples 34 to 51, where the API table comprises at least 500, or 1000, or 2000 hash values.

(FLT) Example 53: The MMU-less device or the firmware of any one of (FLT) Examples 34 to 52, where the loader component is configured to determine a relocation value by searching for an address in the API table based on the identifier of the API entity.

(FLT) Example 54: The MMU-less device or the firmware of any of (FLT) Examples 34 to 53, where at least one of the allocatable sections comprises an invocation of an API entity for transmitting a signal using at least one antenna from antennas of the MMU-less device and/or for receiving a signal using the at least one antenna from antennas of the MMU-less device.

(FLT) Example 55: The MMU-less device or the firmware of any of (FLT) Examples 34 to 54, where:
(a) the MMU-less device comprises an at least one user interface input and/or at least one output unit; and/or
(b) the MMU-less device is a handheld or mobile device; and/or
(c) the MMU-less device comprises at least four or five antennas for acting at respectively at least four or five frequencies, and/or
(d) the MMU-less device comprises a MMU-less microcontroller comprising two processing units, where one of them is a central processing unit and the other is a dedicated processing unit for processing radio stack data; and/or
(e) the built-in non-volatile memory comprises memory of at least one of EEPROM and flash type, and/or
(f) a total volume of the built-in non-volatile memory of the MMU-less device does not exceed 8 MB, 4 MB, or 2 MB, or 1 MB; and/or
(g) a total volume of the RAM of the MMU-less device does not exceed 1 MB; and/or
(h) the MMU-less device lacks at least a hardware MMU; and/or
(i) the API entities are of a firmware or an operating system of the MMU-less device; and/or
(j) the MMU-less device is configured for receiving the program from an external storage being a communication device or an external memory, which optionally may be a non-volatile memory, which optionally may be a non-volatile chip (and/or a non-volatile on-chip) storage.

(FLT) Example 56: An executable file comprising a program for a MMU-less device with a RAM; where the program comprises an allocatable section comprising an invocation from this allocatable section to itself, where the invocation requires relocation, where the executable file comprises a data structure comprising an offset of an at least one bit, corresponding to the invocation, in the allocatable section; and a value associated symbol relating to the invocation.

(FLT) Example 57: A file set, comprising (a) an executable file comprising a program for a MMU-less device with a RAM, where the program comprises an allocatable section comprising an invocation from this allocatable section to itself, and (b) an external file, with respect to the executable file, where the external file comprises a data structure, where the data structure comprises an offset of an at least one bit, corresponding to the invocation, in the allocatable section; and a value associated symbol relating to the invocation.

The present disclosure provides yet a further group of Examples, which may be called Access to Assets in the External Memory Technique (AAEMT) Examples as follows.

(AAEMT) Example 1: A memory management unit-less (MMU-less) device for receiving a program and with an application program interface (API) for executing the program, where the MMU-less device comprises an at least one processing unit, a RAM, and a built-in non-volatile memory storing API entities, where the built-in non-volatile memory or the RAM stores a loader component for loading an at least one executable section from an executable file comprising the program into the RAM, the loader component is configured to access an asset section in the executable file, where the asset section is a section storing content for an at least one asset file, and record the at least one asset file in an external memory based on the content, and the loader component is configured to perform a relocation for an at least one bit, corresponding to an API invocation, in a section comprising the API invocation.

(AAEMT) Example 2: A firmware for a memory management unit-less (MMU-less) device comprising an at least one processing unit, a RAM, and a built-in non-volatile memory, where the firmware is configured for installation into the built-in non-volatile memory and comprises an application program interface (API) comprising API entities for, optionally, receiving, and for executing a program, where the firmware comprises a loader component configured to run from the built-in non-volatile memory or the RAM and configured to load an at least one executable section from an executable file comprising the program into the RAM, the loader component is configured to access an asset section in the executable file, where the asset section is a section storing content for an at least one asset file, and record the at least one asset file in an external memory based on the content, and the loader component is configured to perform a relocation for an at least one bit, corresponding to an API invocation, in a section comprising the API invocation.

(AAEMT) Example 3: The MMU-less device or the firmware of any of preceding (AAEMT) Examples, where the loader component is configured to use for the recording at least one file name stored in the asset section for the at least one asset file.

(AAEMT) Example 4: The MMU-less device or the firmware of any of preceding (AAEMT) Examples, where the loader component is configured to perform the loading from the external memory.

(AAEMT) Example 5: The MMU-less device or the firmware of any of preceding (AAEMT) Examples, where the loader component is configured to perform the recording of the at least one asset file before performing the loading, or before performing the relocation, or before transferring control to the program; and/or by decompressing or copying the content.

(AAEMT) Example 6: The MMU-less device or the firmware of any of preceding (AAEMT) Examples, where the program is configured to refrain from accessing the asset section, and/or lacks an invocation of an access, optionally by an API function, to the asset section.

(AAEMT) Example 7: The MMU-less device or the firmware of any of preceding (AAEMT) Examples, where the loader component is configured to access an at least one relative path specified in the asset section, and generate an at least one path for the recording of the at least one asset file by (a) adding at least a root directory name to the at least one relative path, where, optionally, the root directory name is a mount point name for the external memory, and/or (b) modifying the at least one relative path by using an identifier used by the MMU-less device for the program.

(AAEMT) Example 8: The MMU-less device or the firmware of any of preceding (AAEMT) Examples, where the API entities comprise an API function invokable by the API invocation and configured to provide access to a particular asset file, specified as its argument, from the at least one asset file.

(AAEMT) Example 9: The MMU-less device or the firmware of (AAEMT) Example 8, where the API function is configured to translate a path specified in the program for the particular asset file at the call of the API function into a path at which the particular asset file is to be located in the external memory, by replacing a root directory virtually corresponding to the external memory in the specified path by a prefix comprising (a) a mount point name for the external memory, and, optionally (b) an identifier used by the MMU-less device for the program.

(AAEMT) Example 10: The MMU-less device or the firmware of (AAEMT) Example 8 or 9, where the API function is configured to recognize at least two root directory names for the external memory.

(AAEMT) Example 11: The MMU-less device or the firmware of (AAEMT) Example 10, where the at least two root directory names comprise a mount point name for the external memory, and a virtual root directory name for the external memory.

(AAEMT) Example 12: The MMU-less device or the firmware of any of preceding (AAEMT) Examples, where the loader component is configured to access a signature in the asset section, optionally, in its header, and to record it in a signature file in the external memory.

(AAEMT) Example 13: The MMU-less device or the firmware of (AAEMT) Example 12, where the loader component is configured to generate a signature file path for the recording of the signature in the signature file by (a) using a mount point name for the external memory, and/or (b) using an identifier used by the MMU-less device for the program.

(AAEMT) Example 14: The MMU-less device or the firmware of any of preceding (AAEMT) Examples, where the loader component is configured to access a signature in the asset section, optionally, in its header, to check if a signature file is stored in the external memory and to access a signature in the signature file in case of a positive result of the check; and to proceed to (a) the loading the program into the RAM and/or (b) transferring control to the program, only if the signature in the asset section coincides with the signature in the signature file.

(AAEMT) Example 15: The MMU-less device or the firmware of any of preceding (AAEMT) Examples, where the loader component is configured to access a signature in the asset section, optionally, in its header, to check if a signature file is stored in the external memory and to proceed to the recording the at least one asset file, and to recording a signature file, in case of a negative result of the check.

(AAEMT) Example 16: The MMU-less device or the firmware of any of preceding (AAEMT) Examples, where the loader component is configured to access a signature in the asset section, optionally, in its header, to check if a signature file is stored in the external memory and to access a signature in the signature file in case of a positive result of the check; and to proceed to the recording the at least one asset file, and to recording a signature file, in case of a non-coincidence of the signatures.

(AAEMT) Example 17: An executable file for a MMU-less device with an application program interface (API), where the executable file comprises a program, where the program comprises an at least one executable section subject to loading into a RAM of the MMU-less device and, in a same or another allocatable section, at least one bit, corresponding to an API invocation and requiring a relocation, and the executable file comprises an asset section storing content for at least one asset file for the program, where the program is configured to access, after the relocation, the at least one asset file from an external memory.

(AAEMT) Example 18: The executable file of (AAEMT) Example 17, storing in the asset section at least one file name for the at least one asset file.

(AAEMT) Example 19: The executable file of (AAEMT) Example 17 or 18, where the program is configured to refrain from accessing the asset section, and/or lacks an invocation of an access, optionally by an API function, to the asset section.

(AAEMT) Example 20: The executable file of any of (AAEMT) Examples 17 to 19, where the asset section was merged into the executable file after generating the program by partially linking object code.

(AAEMT) Example 21: The executable file of any of (AAEMT) Examples 17 to 20, where the executable file, optionally the asset section, specifies an at least one relative path for the at least one asset file.

(AAEMT) Example 22: The executable file of any of (AAEMT) Examples 17 to 21, where the API invocation is for an API function called to access a particular asset file from the at least one asset file.

(AAEMT) Example 23: The executable file of (AAEMT) Example 22, where a path specified in the program for the particular asset file at the call of the API function has a prefix presented by a root directory virtually corresponding to the external memory.

(AAEMT) Example 24: The executable file of (AAEMT) Example 23, where the called API function is to translate the path specified in the program into a path at which the particular asset file is to be recorded in the external memory, by replacing the root directory virtually corresponding to the external memory in the specified path by a prefix comprising (a) a mount point name for the external memory, and, optionally (b) an identifier which is to be used by the MMU-less device for the program.

(AAEMT) Example 25: The executable file of any of (AAEMT) Examples 17 to 24, where the asset section, optionally, its header, comprises a signature based on at least the content for at least one asset file.

(AAEMT) Example 26: The executable file of (AAEMT) Example 25, where the signature is further based on at least one file name stored in the asset section for the at least one asset file.

(AAEMT) Example 27: The executable file of (AAEMT) Example 26, where the signature is based on at least one relative path stored in the asset section for the at least one asset file.

(AAEMT) Example 28: A computer-readable or MMU-less device-readable memory, where the memory stores the firmware of any of (AAEMT) Examples 2 to 16 and/or the executable file of any of (AAEMT) Examples 17 to 27, and where the memory is optionally a read-only memory, ROM.

(AAEMT) Example 29: The computer-readable or MMU-less device-readable memory of (AAEMT) Example 28, where the memory is a non-volatile chip storage (and/or a non-volatile on-chip) storage.

(AAEMT) Example 30: The computer-readable or MMU-less device-readable memory of (AAEMT) Example 28 or 29, where the memory stores the at least one asset file.

(AAEMT) Example 31: A computer-implemented method for generating an executable file, the method comprising: accessing an at least one asset file, access to which is to be invoked in a partially-linked executable file comprising a program and configured for a memory management unit-less (MMU-less) device comprising an at least one processing unit, a RAM, and a built-in non-volatile memory storing API entities, where an at least one executable section of the executable file is to be executed from the RAM of the MMU-less device, and at least one bit in a same or another allocatable section is to correspond to an API invocation and require a relocation, using content of the at least one asset file to form an asset section for the partially-linked executable file and merging the asset section into the partially-linked executable file.

(AAEMT) Example 32: The method of (AAEMT) Example 31, comprising recording into the asset section at least one file name for the at least one asset file.

(AAEMT) Example 33: The method of (AAEMT) Example 31 or 32, where the program is thereby configured to refrain from accessing the asset section, and/or lacks an invocation of an access, optionally by an API function, to the asset section.

(AAEMT) Example 34: The method of any of (AAEMT) Examples 31 to 33, comprising generating the program by partially linking object code.

(AAEMT) Example 35: The method of any of (AAEMT) Examples 31 to 34, comprising recording in the asset section, an at least one relative path for the at least one asset file.

(AAEMT) Example 36: The method of any of (AAEMT) Examples 31 to 35, where the API invocation is for an API function for accessing a particular asset file, from the at least one asset file.

(AAEMT) Example 37: The method of (AAEMT) Example 36, where a path specified in the program for the particular asset file at the call of the API function has a prefix presented by a root directory virtually corresponding to an external memory of the MMU-less device.

(AAEMT) Example 38: The method of (AAEMT) Example 37, where the called API function is to translate the path specified in the program into a path at which the particular asset file is to be recorded in an external memory of the MMU-less device, by replacing the root directory virtually corresponding to the external memory in the specified path by a prefix comprising (a) a mount point name for the external memory, and, optionally (b) an identifier which is to be used by the MMU-less device for the program.

(AAEMT) Example 39: The method of any of (AAEMT) Examples 31 to 38, comprising generating a signature and recording in it in the asset section, optionally, its header, where the generating the signature optionally comprises calculating a hash value and is based on at least the content for the at least one asset file.

(AAEMT) Example 40: The method of (AAEMT) Example 39, where the signature is further based on at least one file name of the at least one asset file.

(AAEMT) Example 41: The method of (AAEMT) Example 40, where the signature is based on at least one relative path of the at least one asset file.

(AAEMT) Example 42: A computer program or a computer program product comprising instructions which, when the computer program is executed by a computer, cause the computer to carry out the method of any of (AAEMT) Example 31 to 41.

(AAEMT) Example 42: A computer-readable memory or data carrier having stored thereon the computer program or the computer program product of (AAEMT) Example 42.

(AAEMT) Example 43: The subject matter of any of preceding (AAEMT) Examples, where the executable file comprises at least one relocation section, and/or a symbol table section, and/or a string table section.

(AAEMT) Example 44: The subject matter of any of preceding (AAEMT) Examples, where the built-in non-volatile memory stores an API table of API entity identifiers and addresses, comprising a plurality of identifiers, being or corresponding to a plurality of names of API entities and paired with a plurality of addresses of the API entities.

(AAEMT) Example 45: The subject matter of (AAEMT) Example 45, where the plurality of API entity identifiers is presented by a plurality of names of the API entities, or by a plurality of API name hashes calculated based on the plurality of names of the API entities.

(AAEMT) Example 46: The subject matter of (AAEMT) Example 46, where the API table is a table of sorted API entity identifiers, paired with respective addresses.

(AAEMT) Example 47: The subject matter of any one of preceding (AAEMT) Examples, where the MMU-less device comprises at least two or three antennas, each for receiving and/or transmitting signals at at least its respective associated frequency.

(AAEMT) Example 48: The subject matter of (AAEMT) Example 48, where the API entities comprise among them a first API entity for transmitting a signal using at least a first antenna from the antennas and/or for receiving a signal using the at least first antenna from the antennas; optionally comprise among them a second API entity for transmitting a signal using at least a second antenna from the antennas and/or for receiving a signal using the at least second antenna from the antennas, and optionally comprise among them a third API entity for transmitting a signal using at least a third antenna from the antennas and/or for receiving a signal using the at least third antenna from the antennas.

(AAEMT) Example 49: The subject matter of (AAEMT) Example 48 or 49, where in the MMU-less device a certain antenna from the at least two or three antennas is operable in a Sub-GHz range, or near-field communication, NFC, range, or a LF RFID range; another antenna from the at least two or three antennas is operable in a range being the Sub-GHz range, or the NFC range, or the LF RFID range and different from the range of the certain antenna; and, optionally, yet another antenna is operable in a range being the Sub-GHz range, or the NFC range, or the LF RFID range and different from the range of the certain antenna and the another antenna.

(AAEMT) Example 50: The subject matter of any one of preceding (AAEMT) Examples, where in the MMU-less device an API table comprises at least 500, or 1000, or 2000 hash values.

(AAEMT) Example 51: The subject matter of any one of preceding (AAEMT) Examples, where
(a) the MMU-less device comprises an at least one user interface input and/or at least one output unit; and/or
(b) the MMU-less device is a handheld or mobile device; and/or
(c) the MMU-less device comprises at least four or five antennas for acting at respectively at least four or five frequencies, and/or
(d) the MMU-less device comprises a MMU-less microcontroller comprising two processing units, where one of them is a central processing unit and the other is a dedicated processing unit for processing radio stack data; and/or
(e) the built-in non-volatile memory comprises memory of at least one of EEPROM and flash type, and/or
(f) a total volume of the built-in non-volatile memory of the MMU-less device does not exceed 8 MB, 4 MB, or 2 MB, or 1 MB; and/or
(g) a total volume of the RAM of the MMU-less device does not exceed 1 MB; and/or
(h) the MMU-less device lacks at least a hardware MMU; and/or
(i) the API entities are of a firmware or an operating system of the MMU-less device; and/or
(j) the MMU-less device is configured for receiving the program from an external memory, optionally being a non-volatile memory, and/or optionally being a non-volatile chip (and/or non-volatile on-chip) storage.

The present disclosure provides yet a further group of Examples, which may be called (DEB) Examples as follows.

(DEB) Example 1: A MMU-less device comprising an at least one processing unit, a RAM, and a built-in non-volatile memory of the MMU-less device storing a plurality of API entities of the MMU-less device, where the built-in non-volatile memory or the RAM stores a loader component configured to load one or more allocatable sections of a program from an executable file into available blocks in the RAM and to store in the RAM, by static allocation, an allocation address for allocation data configured to store a table of correspondence between one or more allocatable sections and respective one or more addresses at which the one or more allocatable sections are subject to loading or have been loaded into the RAM, and the loader component is configured to record the allocation data into the RAM based on the allocation address.

(DEB) Example 2: A firmware for a MMU-less device comprising an at least one processing unit, a RAM, and a built-in non-volatile memory of the MMU-less device, where the firmware comprises a plurality of API entities of the MMU-less device configured to be stored in the built-in non-volatile memory, and comprises a loader component configured to be stored in the built-in non-volatile memory or loaded into the RAM, the loader component is configured to load one or more allocatable sections of a program from an executable file into available blocks in the RAM and to store in the RAM, by static allocation, an allocation address for allocation data configured to store a table of correspondence between one or more allocatable sections and respective one or more addresses at which the one or more allocatable sections are subject to loading or have been loaded into the RAM, and the loader component is configured to record the allocation data into the RAM based on the allocation address.

(DEB) Example 3: The MMU-less device or the firmware of preceding (DEB) Examples, where the loader component is configured to perform at least one relocation for an invocation from a one of the one or more allocatable sections to the same or another from the one or more allocatable sections.

(DEB) Example 4: The MMU-less device or the firmware of any of the preceding (DEB) Examples, where the loader component is configured to identify the one or more sections in the table of correspondence by respective one or more section names, or other one or more identifiers based on one or more section names, where, optionally, the other one or more identifiers are one or more hash values of the one or more section names, where, optionally, the loader component is configured to obtain the one or more section names from the executable file.

(DEB) Example 5: The MMU-less device or the firmware of any of preceding (DEB) Examples, where the loader component is configured to store the allocation address as an absolute address or an offset from a start of a heap.

(DEB) Example 6: The MMU-less device or the firmware of any of preceding (DEB) Examples, where the loader component is configured to store the allocation data in a list.

(DEB) Example 7: The MMU-less device or the firmware of any of preceding (DEB) Examples, where the loader component is configured to be settable to operate in a debugging mode, in which the recording the allocation data into the RAM based on the allocation address is invoked.

(DEB) Example 8: The MMU-less device or the firmware of (DEB) Example 7, where the loader component is settable to operate in a lower memory usage mode, in which the recording the allocation data into the RAM based on the allocation address is not invoked.

(DEB) Example 9: The MMU-less device or the firmware of any of preceding (DEB) Examples, where the MMU-less device comprises a debug subsystem, and/or an in-system programmer, and/or a debug interface, optionally a SWD or JTAG interface.

(DEB) Example 10: The MMU-less device or the firmware of any of preceding (DEB) Examples, where the allocation data comprises a debug link data from the executable file.

(DEB) Example 11: The MMU-less device of (DEB) Example 10, where the loader component is configured to obtain the debug link data from a debug link, being a section in the executable file and comprising a name and a checksum, optionally, CRC32, of another executable file, which comprises a debug information for the program.

(DEB) Example 12: The MMU-less device of (DEB) Example 11, where the debug information comprises information at a level sufficient to generate a backtrace, or at a source-level debugging and single-stepping level, or at the source-level debugging and single-stepping level with information about macros.

(DEB) Example 13: The MMU-less device of any one of (DEB) Examples from 10 to 12, where the loader component is configured to record the debug link data and the correspondence table for the executable file in a predetermined order within the allocation data.

(DEB) Example 14: An executable file, storing a program invoking an API of an MMU-less device and comprising a plurality of allocatable sections and a debug link, being a section in the executable file and comprising a debug link data comprising a name of another executable file and a checksum, optionally CRC32, of the another executable file, which comprises the program and a debug information for the program.

(DEB) Example 15: The executable file of (DEB) Example 14, where at least one of the one or more allocatable sections comprises at least one relocation for an invocation from the same or another from the one or more allocatable sections.

(DEB) Example 16: A debugger, or a debugger client, for debugging an MMU-less device with an installed firmware, configured to form an API of the MMU-less device and comprising a loader component for a program for the MMU-less device, or for debugging yet not installed firmware for the MMU-less device, where the debugger or the debugger client is a software, configured, when implemented at a computer, to cause it: to access the firmware and a debug information for the firmware, to access in the firmware, based on the debug information, an address subject to be located in a statically allocated part of a RAM of the MMU-less device, where the address is configured to be an address of an allocation address for dynamically allocatable allocation data for storing a table of correspondence between one or more allocatable sections of the program and respective one or more addresses at which one or more allocatable sections of the program have been loaded or are to be loaded into the RAM, to enable debugging requested by a user via an IDE or another interface, optionally a command line interface, based on the address subject to be located in the statically allocated part.

(DEB) Example 17: The debugger, or the debugger client, of (DEB) Example 16, configured to access the allocation address for the dynamically allocatable allocation data, where the debugging is based on the allocation address.

(DEB) Example 18: The debugger, or the debugger client, of (DEB) Example 17, configured to access the table of correspondence in the dynamically allocated allocation data, where the debugging is based on the table of correspondence.

(DEB) Example 19: The debugger, or the debugger client, of (DEB) Example 18, configured to access in the table of correspondence the one or more addresses at which the one or more allocatable sections of the program have been loaded or are to be loaded into the RAM, where the debugging is based on the one or more addresses.

(DEB) Example 20: The debugger, or the debugger client, of (DEB) Example 19, configured to access the one or more allocatable sections of the program in the RAM based on the one or more addresses, where the debugging is based on the one or more allocatable sections.

(DEB) Example 21: The debugger, or the debugger client, of any of (DEB) Examples 16 to 20, configured to access a debug information for the program, where the debugging is based on the debug information for the program.

(DEB) Example 22: The debugger, or the debugger client, of (DEB) Example 21, configured to access the debug information by accessing a debug link data for the program in the allocatable data and searching for an executable file with a name comprised in the debug link data and matching a checksum recorded in the debug link data.

(DEB) Example 23: A computer-readable or MMU-less device-readable memory, where the memory stores the firmware of any of (DEB) Examples 2 to 13 and/or the executable file of (DEB) Example 14 or 15, or the debugger or the debugger client of any of (DEB) Examples 16 to 22.

(DEB) Example 24: The computer-readable or MMU-less device-readable memory of (DEB) Example 23, where the memory is a non-volatile chip storage (and/or non-volatile on-chip) storage.

(DEB) Example 25: The subject matter of any of (DEB) Examples 1 to 13, where the MMU-less device or the firmware comprises a plurality of API entity identifiers presented by a plurality of names of the API entities, or by a plurality of API name hashes calculated based on the plurality of names of the API entities.

(DEB) Example 26: The subject matter of (DEB) Example 25, where the API table is a table of sorted API entity identifiers, paired with respective addresses.

(DEB) Example 27: The subject matter of any one of preceding (DEB) Examples, where the MMU-less device comprises at least two or three antennas, each for receiving and/or transmitting signals at at least its respective associated frequency.

(DEB) Example 28: The subject matter of (DEB) Example 27, where the API entities comprise among them a first API entity for transmitting a signal using at least a first antenna from the antennas and/or for receiving a signal using the at least first antenna from the antennas; optionally comprise among them a second API entity for transmitting a signal using at least a second antenna from the antennas and/or for receiving a signal using the at least second antenna from the antennas, and optionally comprise among them a third API entity for transmitting a signal using at least a third antenna from the antennas and/or for receiving a signal using the at least third antenna from the antennas.

(DEB) Example 29: The subject matter of (DEB) Example 27 or 28, where in the MMU-less device a certain antenna from the at least two or three antennas is operable in a Sub-GHz range, or near-field communication, NFC, range, or a LF RFID range; another antenna from the at least two or three antennas is operable in a range being the Sub-GHz range, or the NFC range, or the LF RFID range and different from the range of the certain antenna; and, optionally, yet another antenna is operable in a range being the Sub-GHz range, or the NFC range, or the LF RFID range and different from the range of the certain antenna and the another antenna.

(DEB) Example 30: The subject matter of any one of preceding (DEB) Examples, where in the MMU-less device an API table comprises at least 500, or 1000, or 2000 hash values.

(DEB) Example 31: The subject matter of any one of preceding (DEB) Examples, where
(a) the MMU-less device comprises an at least one user interface input and/or at least one output unit; and/or
(b) the MMU-less device is a handheld or mobile device; and/or
(c) the MMU-less device comprises at least four or five antennas for acting at respectively at least four or five frequencies, and/or
(d) the MMU-less device comprises a MMU-less microcontroller comprising two processing units, where one of them is a central processing unit and the other is a dedicated processing unit for processing radio stack data; and/or
(e) the built-in non-volatile memory comprises memory of at least one of EEPROM and flash type, and/or
(f) a total volume of the built-in non-volatile memory of the MMU-less device does not exceed 8 MB, 4 MB, or 2 MB, or 1 MB; and/or
(g) a total volume of the RAM of the MMU-less device does not exceed 1 MB; and/or
(h) the MMU-less device lacks at least a hardware MMU; and/or
(i) the API entities are of a firmware or an operating system of the MMU-less device; and/or
(j) the MMU-less device is configured for receiving the program from an external memory, optionally being a non-volatile memory, and/or optionally being a non-volatile chip storage (and/or a non-volatile on-chip) storage.

The present disclosure provides another group of Examples, which may be called (UPD) Examples as follows.

(UPD) Example 1: A method for a memory management unit-less (MMU-less) device, the method comprising executing, for setting the MMU-less device into a configuration with a possibility to update a software of the MMU-less device, a pre-updater component by an at least one processing unit of the MMU-less device from a built-in rewritable non-volatile memory of the MMU-less device, where the pre-updater component invokes during the executing at least a part of a code from one or more of: a starting operating system, a starting driver and a starting service for accessing an external memory, storing an updater image from the MMU-less device; where the part of the code is stored in and is executable from the built-in rewritable non-volatile memory of the MMU-less device, so that the pre-updater component causes the at least one processing unit of the MMU-less device to perform operations comprising accessing, upon a reset of the MMU-less device, the updater image in the external memory and writing it into a RAM of the MMU-less device, and transferring control to the updater image.

In a variation, this Example provides: A method for a memory management unit-less (MMU-less) device, comprising an at least one processing unit, a RAM, and a built-in rewritable non-volatile memory, optionally storing API entities, where, the built-in non-volatile memory, optionally, stores an API table of API entity identifiers and addresses, including a plurality of identifiers, being or corresponding to a plurality of names of API entities and paired with a plurality of addresses of the API entities, where the method comprises executing, for setting the MMU-less device into a configuration with a possibility to update a software, optionally, firmware of the MMU-less device, a pre-updater component by an at least one processing unit of the MMU-less device from a built-in rewritable non-volatile memory of the MMU-less device, where the pre-updater component invokes during the executing at least a part of a code from one or more of: a starting operating system, a starting driver and a starting service for accessing an external memory, storing an updater image from the MMU-less device; where the part of the code is stored in and is executable from the built-in rewritable non-volatile memory of the MMU-less device, so that the pre-updater component causes the at least one processing unit of the MMU-less device to perform operations comprising accessing, upon a reset of the MMU-less device, the updater image in the external memory and writing it into a RAM of the MMU-less device, and transferring control to the updater image.

(UPD) Example 2: A machine-readable storage medium storing a pre-updater component, configured to provide a possibility of an update to a software of a memory management unit-less (MMU-less) device, by the pre-updater component comprising instructions that, when executed by an at least one processing unit of the MMU-less device from a built-in rewritable non-volatile memory of the MMU-less device and invoking at least a part of a code from one or more of: a starting operating system, a starting driver and a starting service for accessing an external memory storing an updater image from the MMU-less device, where the part of the code is to be found stored in the built-in rewritable non-volatile memory of the MMU-less device and be executable from the built-in rewritable non-volatile memory of the MMU-less device, cause the at least one processing unit of the MMU-less device to perform operations comprising accessing, upon a reset of the MMU-less device, the updater image in the external memory and writing it into a RAM of the MMU-less device, and transferring control to the updater image.

In a variation, this Example provides: A machine-readable storage medium storing a pre-updater component, configured to provide a possibility of an update to a software, optionally, firmware of a memory management unit-less (MMU-less) device, comprising a built-in rewritable non-volatile memory optionally storing API entities and further optionally storing an API table of API entity identifiers and addresses, including a plurality of identifiers, being or corresponding to a plurality of names of API entities and paired with a plurality of addresses of the API entities, by the pre-updater component comprising instructions that, when executed by an at least one processing unit of the MMU-less device from the built-in rewritable non-volatile memory of the MMU-less device and invoking at least a part of a code from one or more of: a starting operating system, a starting driver and a starting service for accessing an external memory storing an updater image from the MMU-less device, where the part of the code is to be found stored in the built-in rewritable non-volatile memory of the MMU-less device and be executable from the built-in rewritable non-volatile memory of the MMU-less device, cause the at least one processing unit of the MMU-less device to perform operations comprising accessing, upon a reset of the MMU-less device, the updater image in the external memory and writing it into a RAM of the MMU-less device, and transferring control to the updater image.

Also, this Example provides the pre-updater component, as in any of the variations above (separate from the machine-readable storage medium) or in this whole disclosure. The Example also provides a firmware for the MMU-less device, the firmware including such a pre-updater component.

(UPD) Example 3: A memory carrier, optionally passive, for communication with or for reading by the MMU-less device via a contact or a wired or a contactless connection, where the memory carrier comprises the machine-readable storage medium of (UPD) Example 2.

(UPD) Example 4: A server for communication with the MMU-less device via a wireless or a contact or a wired connection, where the server comprises the machine-readable storage medium of (UPD) Example 2.

(UPD) Example 5: An MMU-less device comprising an at least one processing unit, a RAM, a built-in rewritable non-volatile memory, and a pre-updater component for setting the MMU-less device into a configuration with a possibility to update a software of the MMU-less device, where the pre-updater component comprises instructions that, when executed by the at least one processing unit from the built-in rewritable non-volatile memory of the MMU-less device and invoking at least a part of a code from one or more of: a starting operating system of the MMU-less device, a starting driver and a starting service for accessing an external memory storing an updater image from the MMU-less device, cause the at least one processing unit to perform operations comprising accessing, upon a reset of the MMU-less device, the updater image in the external memory and writing it into the RAM, and transferring control to the updater image, where the part of the code is stored in the built-in rewritable non-volatile memory of the MMU-less device and is executable from the built-in rewritable non-volatile memory of the MMU-less device.

In a variation, this Example provides: An MMU-less device comprising an at least one processing unit, a RAM, a built-in rewritable non-volatile memory, and a pre-updater component for setting the MMU-less device into a configuration with a possibility to update a software, optionally, firmware of the MMU-less device, where the built-in rewritable non-volatile memory optionally stores API entities and further optionally stores an API table of API entity identifiers and addresses, including a plurality of identifiers, being or corresponding to a plurality of names of API entities and paired with a plurality of addresses of the API entities, and where the pre-updater component comprises instructions that, when executed by the at least one processing unit from the built-in rewritable non-volatile memory of the MMU-less device and invoking at least a part of a code from one or more of: a starting operating system of the MMU-less device, a starting driver and a starting service for accessing an external memory storing an updater image from the MMU-less device, cause the at least one processing unit to perform operations comprising accessing, upon a reset of the MMU-less device, the updater image in the external memory and writing it into the RAM, and transferring control to the updater image, where the part of the code is stored in the built-in rewritable non-volatile memory of the MMU-less device and is executable from the built-in rewritable non-volatile memory of the MMU-less device.

(UPD) Example 6: A system comprising the MMU-less device of (UPD) Example 5 and the external memory; or the memory carrier of (UPD) Example 3, optionally further comprising the external memory; or the server of (UPD) Example 4, optionally further comprising the external memory.

(UPD) Example 7: The subject matter of any of preceding (UPD) Examples, comprising any single feature or any combination of features from a following list:
(a) the software, optionally, firmware comprises a loader component configured for loading an at least one executable section from an executable file including a program invoking at least one of the API entities into the RAM; and/or
(b) the starting operating system comprises the starting driver and the starting service; and/or
(c) the starting operating system comprises the starting driver, the starting service, and the pre-updater component; and/or
(d) the update is to modify or to delete the code invocable by the pre-updater component; and/or
(e) the update is to modify or to delete at least one of the starting operating system, the starting driver, and the starting service, and/or
(f) the pre-updater component presents by itself a code compiled and linked for the execution from the built-in rewritable non-volatile memory of the MMU-less device;
(g) the pre-updater component and the at least the part of the code are stored in and are executable from a same partition of the built-in rewritable non-volatile memory of the MMU-less device, where the same partition may optionally be a sole partition; and/or
(h) the pre-updater component is configured to be invocable, by a user or a service, before the reset, and/or
(i) the operations comprise (i1) accessing the updater image before the reset of the MMU-less device to check one or both from an integrity of the updater image and a compatibility of the updater image with the MMU-less device, and (i2) proceeding to the reset only provided and after the updater image is determined to be valid or compatible with the MMU-less device, or both, depending on a requirement of the check; and/or
(j) the operations comprise: (j1) writing before the reset an indication, for example, a flag, in any memory which retains its contents during the reset that the at least one processing unit of the MMU-less device is to proceed to the accessing the updater image; and reading this indication at a start-up upon the reset from the any memory, where the memory is internal to or is accessible by the at least one processing unit; or receiving at a start-up upon the reset an indication from an I/O interface of the MMU-less device that the at least one processing unit of the MMU-less device is to perform the accessing the updater image, and (j2) proceeding to the accessing the updater image only provided and after the indication is determined to be present, and/or
(k) the operations comprise: recording before the reset a pointer to the updater image into any memory which retains its contents during the reset, where the memory is internal to or is accessible by the at least one processing unit, and/or
(l) the operations comprise: initializing upon the reset a memory allocator for the RAM and reading a pointer to the updater image stored in the external memory before the accessing the updater image, optionally without completing a start-up routine of the starting operating system before the accessing the updater image and/or before the writing it into the RAM of the MMU-less device, for example, by not initializing at least one of peripherals, for example, a screen, of the MMU-less device, and/or the writing is configured to write the updater image into a heap in the RAM allocated by a memory allocator serving the starting operating system,
(m) the writing is configured to write the updater image into a single continuous partition in a dynamically allocated block of the RAM; and/or
(n) the operations comprise: (o1) checking an integrity of the updater image stored in the dynamically allocated block of the RAM, and (o2) proceeding to the transferring, and as an option before that relocating the updater image in the RAM, only provided and after the updater image is determined to be valid, and/or
(o) the operations comprise: relocating the updater image, before the transferring, from an address in the RAM where the updater image was written with a use of a memory allocator and to a pre-defined for the transferring and compatible with a further execution of the updater image address in the RAM; and/or
(p) the transferring comprises issuing an instruction of an unconditional jump; and/or
(q) the updater image is configured to be compatible with that state of the at least one of processing unit which it acquires upon the transferring and which differs from an initial or default state, defined by the reset, with the difference being pre-defined by operations of the at least one processing unit, comprising operations of the pre-updater component upon the reset.

(UPD) Example 8: The subject matter of any of preceding (UPD) Examples, where: the updater image presents by itself a code compiled and linked for execution from the RAM, and comprises a updating stage operating system, a updating stage driver and a updating stage service for accessing an external memory storing an updated software image from the MMU-less device, and an updater component configured to use the updating stage operating system, the updating stage driver and the updating stage service, so that: the updater image thereby comprises instructions that, when executed by the at least one processing unit from the RAM, cause the at least one processing unit to perform operations comprising accessing the updated software image and writing it into the built-in rewritable non-volatile memory, where, optionally, the updated software image is an updated firmware image and comprises respective API entities and a respective API table of sorted API name hashes and addresses, comprising a sorted plurality of hash values, calculated based on a plurality of names of the respective API entities and paired with a plurality of addresses of the respective API entities; and/or where, optionally, the external memory storing the updater image and the external memory storing the updated software image present a same memory device, a memory carrier (optionally, passive), or a server.

(UPD) Example 9: A method for a memory management unit-less (MMU-less) device, the method comprising: executing, for updating a software of the MMU-less device, an updater image presenting by itself a code compiled and linked for execution from a RAM of the MMU-less device and comprising an updating stage operating system, an updating stage driver and an updating stage service for accessing an external memory storing an updated software image from the MMU-less device, and an updater component configured to use the updater operating system, the updating stage driver and the updating stage service, so that: the updater image thereby comprises instructions that, when executed by the at least one processing unit from the RAM, cause the at least one processing unit to perform operations comprising accessing the updated software image and writing it into a built-in rewritable non-volatile memory of the MMU-less device, where, optionally, the updated software image is an updated firmware image and comprises respective API entities and a respective API table of API entity identifiers and addresses, including a plurality of identifiers, being or corresponding to a plurality of names of the respective API entities and paired with a plurality of addresses of the respective API entities.

(UPD) Example 10: A machine-readable storage medium storing an updater image, configured to update a software of a memory management unit-less (MMU-less) device by presenting by itself a code compiled and linked for execution from a RAM of the MMU-less device and comprising an updating stage operating system, a updating stage driver and a updating stage service for accessing an external memory storing an updated software image from the MMU-less device, and an updater component configured to use the updating stage operating system, the updating stage driver and the updating stage service, so that: the updater image thereby comprises instructions that, when executed by the at least one processing unit from the RAM, cause the at least one processing unit to perform operations comprising accessing the updated software image and writing it into a built-in rewritable non-volatile memory of the MMU-less device, where, optionally, the updated software image is an updated firmware image and comprises respective API entities and a respective API table of API entity identifiers and addresses, including a plurality of identifiers, being or corresponding to a plurality of names of the respective API entities and paired with a plurality of addresses of the respective API entities. Herein, the machine-readable storage medium may be a computer-readable storage medium or a storage medium readable storage medium by the MMU-less device (and, optionally, the computer, such as a general-purpose computer).

(UPD) Example 11: A memory carrier, optionally, passive, for communication with or for reading by the MMU-less device via a contactless, or a contact, or a wired connection, where the memory carrier comprises the machine-readable storage medium of (UPD) Example 8 or 10; or comprises the machine-readable storage medium of (UPD) Example 10 and the updated software image.

(UPD) Example 12: A server for communication with the MMU-less device via a wireless or a contact or a wired connection, where the server comprises the machine-readable storage medium of (UPD) Example 8 or 10; or comprises the machine-readable storage medium of (UPD) Example 10 and the updated software image.

(UPD) Example 13: A method for use in updating a software of an MMU-less device comprising an at least processing unit, a RAM, a built-in rewritable non-volatile memory, a communication unit for establishing a wireless or a contact or a wired connection to an update server, and a port for establishing a contact or a wired or a contactless connection to an external rewritable non-volatile memory, where the software comprises a starting operating system, a plurality of starting drivers, a plurality of starting services, and a pre-updater component, the method comprising operations of sending by the update server to the device an update package comprising an updater image and an updated software image, for allowing the device to store the update package in the external rewritable non-volatile memory, and for allowing the software subject to update, to write, by the pre-updater component and upon a respective reset of the device, the updater image from the external rewritable non-volatile memory via the port into the RAM, and then transfer control to the updater image, where the updater image comprises an updating stage operating system, an updating stage driver and an updating stage service for communicating with the external rewritable non-volatile memory, and an updater component, and the updater image is configured to run from the RAM and, under control of the updater component, use the updating stage driver and the updating stage service to write the updated software image from the external rewritable non-volatile memory via the port into the built-in rewritable non-volatile memory, where, optionally, the updated software image is an updated firmware image and comprises respective API entities and a respective API table of API entity identifiers and addresses, including a plurality of identifiers, being or corresponding to a plurality of names of the respective API entities and paired with a plurality of addresses of the respective API entities.

(UPD) Example 14: The subject matter of any of (UPD) Examples 8 to 13, comprising any single feature or any combination of features from a following list:
(a) at least a portion of the software, which is subject to update, is recorded in the built-in rewritable non-volatile memory, and
(b) the updating stage operating system comprises the updating stage driver and the updating stage service, and/or
(c) the updating stage operating system comprises the updating stage driver, the updating stage service, and the updater component, and/or
(d) the operations comprise: (d1) checking any one, or both, from an integrity and a compatibility with the MMU-less device of the updated software image in the external memory, and (d2) proceeding to the writing the updated software image into the built-in rewritable non-volatile memory only provided and after the updated software image is determined to be valid and/or compatible with the MMU-less device, or both, depending on a requirement of the check; and/or
(e) the updated software image comprises a respective loader component configured for loading an at least one executable section from an executable file including a program invoking at least one of the API entities into the RAM; and/or
(f) the updated software image presents a modification or a deletion of a code of an at least one of the starting operating system, the starting driver, and the starting service; and/or
(g) the updated software image is compiled and linked for execution by the at least one processing unit of the MMU-less device from the built-in rewritable non-volatile memory, and/or
(h) the operations comprise pre-setting the MMU-less device to execute upon a reset the updated software from the built-in rewritable non-volatile memory and, optionally, initiating the reset to execute thus updated software from the built-in rewritable non-volatile memory; and/or
(i) the updater component is configured to write the updated software image starting at a start address of the built-in rewritable non-volatile memory; and/or
(j) the updater component is configured to write the updated software image into the built-in rewritable non-volatile memory treating it as a single continuous partition; and/or
(k) the updater component is configured to write the updated software image into the built-in rewritable non-volatile memory having no a dedicated bootloader partition, or by reformatting the built-in rewritable non-volatile memory to delete the dedicated bootloader partition; and/or
(l) the updated software image comprises an operating system, at least one service and least one driver, and as a further option, the operating system comprises the at least one service and the least one driver, and/or
(m) the updated software image comprises an executable code, for example, a storage service, which, when executed by the at least one processing unit, causes an operation of applying a dynamic partitioning of the built-in rewritable non-volatile memory upon run of the updated software from the built-in rewritable non-volatile memory; and/or
(n) the updated software image comprises a code of an at least one component, for example, a memory allocator, a scheduler and/or a storage service, which coincides with a code of the same component included in the updater image, with an exception for parts reflecting that the updater and the updated software image are compiled and linked for execution from the RAM and the built-in rewritable non-volatile memory, respectively; and/or
(o) the updated software image comprises at least two, three, four or five applications for wireless communication of the MMU-less device at different frequencies, and is configured to provide for an execution on MMU-less device of only one of the at least two, three, four or five applications at a time; and/or
(p) the updated software image has a size exceeding 50% of a total volume of the built-in rewritable non-volatile memory of the MMU-less device, or exceeding a volume of each free partition in the built-in rewritable non-volatile memory of the MMU-less device.

(UPD) Example 15: The subject matter of any of (UPD) Examples 1 to 14, where
(a) the MMU-less device comprises an at least one user interface I/O unit; and/or
(b) the MMU-less device is a handheld or mobile device; and/or
(c) the MMU-less device comprises at least two, three, four or five antennas for acting, optionally via at least one wireless transceiver, at respectively at least two, three, four or five frequencies, and/or
(d) the MMU-less device comprises a MMU-less microcontroller comprising two processing units, where one of them is a central processing unit and the other is a dedicated processing unit for processing radio stack data; and/or
(e) the built-in rewritable non-volatile memory comprises memory of at least one of EEPROM and flash type, and/or
(f) a total volume of the built-in rewritable non-volatile memory of the MMU-less device does not exceed 8 MB, 4 MB, or 2 MB, or 1 MB; and/or
(g) a total volume of the RAM of the MMU-less device does not exceed 1 MB; and/or
(h) the MMU-less device lacks at least a hardware MMU; and/or
(i) the software subject to update comprises a part or a whole of a starting firmware of the MMU-less device, or a part or a whole of an executable code of a starting firmware of the MMU-less device; and, optionally, (i1) the updated software image comprises an executable code presenting at least a part of an updated firmware of the MMU-less device.

In the present disclosure, the expression "and/or" means either or both of two possibilities.

The above Examples and example embodiments are described below in more detail, but it is important to understand that embodiments can be provided in many alternate forms and should not be construed as limited to the examples set forth herein.

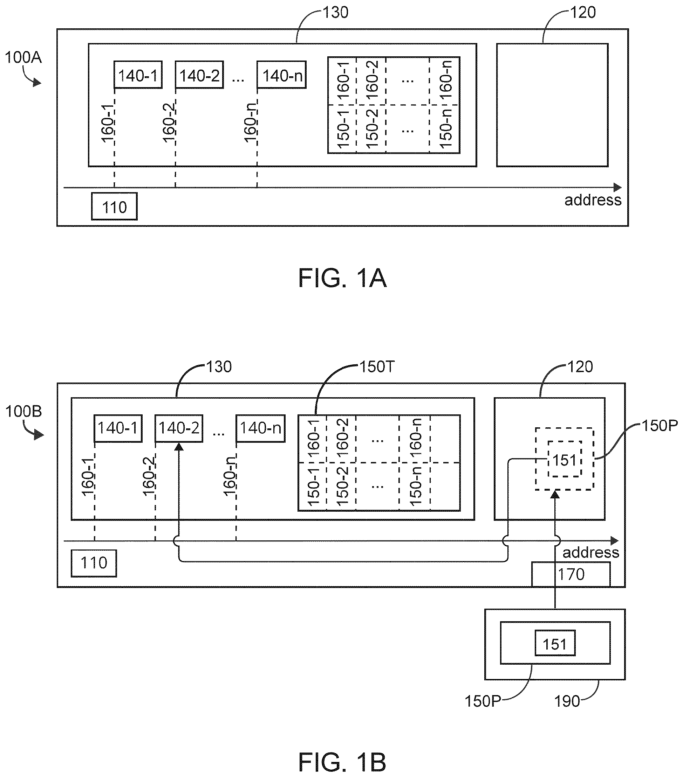

Fig. 1A shows a schematic diagram of a MMU-less device 100A, which is configured in agreement with the requirements and, optionally, any combination of other, optional, features mentioned above. The MMU-less device 100A includes an at least one processing unit 110, a RAM 120, and a built-in non-volatile memory 130 storing a plurality of API entities 140-1, 140-2, ..., 140-n of the MMU-less device 100A. The MMU-less device 100 is configured for receiving a program, which includes an invocation of an API of the MMU-less device 100, for example, of one or more of the API entities 140-1, 140-2, ..., 140-n: 140-2. For increasing the usability of the MMU-less device 100, the built-in non-volatile memory 130 stores an API table 150T including a sorted plurality of hash values 150-1, 150-2, ..., 150-n, calculated based on a plurality of names of API entities 140-1, 140-2, ..., 140-n and paired with a plurality of addresses 160-1, 160-2, ..., 160-n of the API entities 140-1, 140-2, ..., 140-n in the built-in non-volatile memory 130.

For example, the API entities 140-1, 140-2, ..., 140-n may include a function called "malloc" or some data called "_global_impure_ptr". In general, the API entities 140-1, 140-2, ..., 140-n may include at least one API function or at least one API object being not an API function. Hash values 150-1, 150-2, ..., 150-n may be placed in the hash table 150T, for example, in an increasing order. Alternatively, a decreasing order may be applied instead.

For example, the API table may look like:

**TABLE 1**

| Hash of a name of an API entity | Address of this API entity |
|---|---|
| 0x0549bd0a | 0x080012f0 |
| 0x0d39ad3d | 0x08005320 |
| 0x0f11ed7d | 0x080054e4 |
| ... | ... |
| 0x7c96f087 | 0x080001e8 |
| 0x9f8ba228 | 0x0800668c |

Or, the API table may look, for example, like a TABLE 1 (Modified Example), with a reference to the RAM in the penultimate address (for the case in which an API entity is to be placed into the RAM):

**TABLE 1 (Modified Example)**

| Hash of a name of an API entity | Address of this API entity |
|---|---|
| 0x0549bd0a | 0x080012f0 |
| 0x0d39ad3d | 0x08005320 |
| 0x0f11ed7d | 0x080054e4 |
| ... | ... |
| 0x7c96f087 | 0x080001e8 |
| 0x8133722B | 0x2000B00C |
| 0x9f8ba228 | 0x0800668c |

Fig. 1B shows a schematic diagram of a MMU-less device 100B, a variation of the MMU-less device 100A. Similar parts of the MMU-less devices 100A and 100B have the same reference numerals. The MMU-less device 100B is configured for receiving a program 150P, which includes an invocation 151 of API entity 140-2 in this example. Since the MMU-less device 100B is configured for receiving a program, it includes an interface for receiving it. In Fig. 1B the MMU-less device 100B receives the program 150P from an external communication device or external memory 190. In contrast to Fig. 1A, the interface of the MMU-less device 100B for receiving the program 150P is shown explicitly, at 170, in Fig. 1B. The MMU-less device 100B can execute the program 150P when it is loaded into the RAM 120 as it is meant by indications in Fig. 1B.

On the one hand, such configurations of the MMU-less device as above lead to the need to calculate one or more hash values during the relocation. On the other hand, in the configuration as 100A or 100B the MMU-less device does not need to store an API address table, i.e. the table of correspondence between the names of the API entities 140-1, 140-2, ..., 140-n (in their explicit, string forms) and addresses 160-1, 160-2, ..., 160-n of the API entities 140-1, 140-2, ..., 140-n. That is, in the MMU-less device 100A or 100B, the RAM 120 and the built-in non-volatile memory 130 may not store any one or more names of the API entities 140-1, 140-2, ..., 140-n in the string form. As the inventors of the present disclosure have assessed, such configurations of the MMU-less device allow to decrease the size of the table containing the API addresses 160-1, 160-2, ..., 160-n for the same number of API entities, because names of the API entities, as strings of different lengths, in average occupy more space that it is expected from their hash values. For example, the hash value may consist, for example, of 2, 3 or 4 bytes, i.e. of a smaller number of bytes than the longest API entity name.

The configurations as above allow speeding up the search by making smaller and/or more predictable jumps, and consequently quicker finding the needed API entities' addresses stored in the non-volatile memory 130. That is, the search may be performed quicker in the API table than in the API address table, due to the equal length of the hash values. Consequently, according to the present disclosure, the MMU-less device in the configurations 100A and 100B is pre-configured for allowing the improvement in the speed of the search to overcompensate for the introduction of the delay used to calculate the hash value for starting the search.

The above effect is more pronounced with the growth of the number of the API entities. For example, the time complexity of finding a single value in an unsorted array is proportional to the size of this array, that is, O(N), where N is the size of the array. In contrast, the search in the API table as presented in this disclosure may be approximated as a logarithmic time of its size, O(log N), or bounded by such time: the address of any API entity may be found using a binary search, thanks to the sorting of the hash values in this API table. That is, it is possible to calculate the hash value and then compare it to the value in the middle of the table; if the hash value being looked up is greater, the process is repeated using new range, from the middle of the table to its end. Otherwise, it is repeated on the lower part of the table, until a match has been found or the search is exhausted. Hence, according to the present disclosure, the API table 150T may include 200 or more, 500 or more, or 1000 or more, or 2000 or more hash values (and the corresponding number of addresses). If, for example, 32 bits are allocated for storing each hash value, then the overall number of hash values may be up to 232.

In special cases, for example, when the API table is structured more rigidly, the search may require even less time. For example, if the API table presents a hash table, then the search would require approximately a constant time. According to the present disclosure, the API table may be a hash table, and is such in some embodiments. However, the API table is not required to be a hash table, and is unlikely to present a hash table, unless an accordingly selected hash function is used to obtain hash values presenting a sequence of indexes differing by one (e.g. 0, 1, 2, 3, ..., (n-1), but not 0, 2, ... , k+(n-1), where k is a natural number, or not like in Table 1 above). The embodiments or variations, where the API table is not a hash table, allow for simpler generating and updating the API table, as well as higher reliability during invocations by avoidance of hash buckets.

The above also means that more addresses may be stored in the API table 150T than in a conventional API address table if they were allowed to occupy the same size in the memory. Also, the effect of saving time and memory is more pronounced with the increase in the number of the API entities: the increase of lookup time scales much slower than the table size.

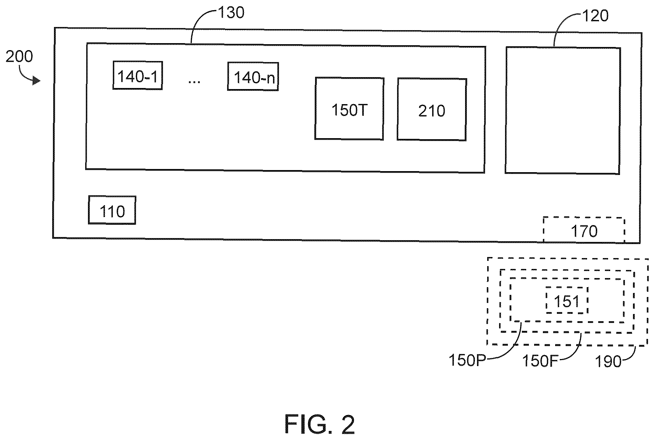

Fig. 2 shows a schematic diagram of a MMU-less device 200, which differs from the MMU-less device 100A or 100B in that it has an installed (or loaded) loader component (relocating loader) 210, so that the built-in non-volatile memory 130 (as shown in Fig. 2) and/or RAM 120 stores it. The loader component 210 is configured to load an at least one executable section from an executable file 150F into the RAM 120 upon the MMU-less device 200 receiving the program 150P. The executable file 150F, accessible from the communication device or external memory 190, includes the program 150P. While the executable section is a part of the program 150P, the file 150F includes headers and not executable sections, based on which the loader component 210 may perform the relocation for the one or more executable sections, as well as for any other allocatable section, if present.

In a variation, the loader component 210, as mentioned, may be recorded, i.e. loaded, in the RAM 120, for example, from the built-in non-volatile memory 130, for quicker performing the relocating loading if the amount of free space in the RAM 120 allows this. Alternatively, or additionally to loading the at least one executable section into the RAM 120, the built-in non-volatile memory 130 of the MMU-less device 200 (and 100A, and 100B) may be rewritable, and the loader component, located in it or the RAM 120, may be configured to load an at least one executable section from the executable file 150F into such rewritable built-in non-volatile memory 130.

Any of the executable sections mentioned above may be the one which includes the invocation 151. Alternatively, the invocation 151 may belong rather to another allocatable (also called allocable), but not executable section of the program 150P.

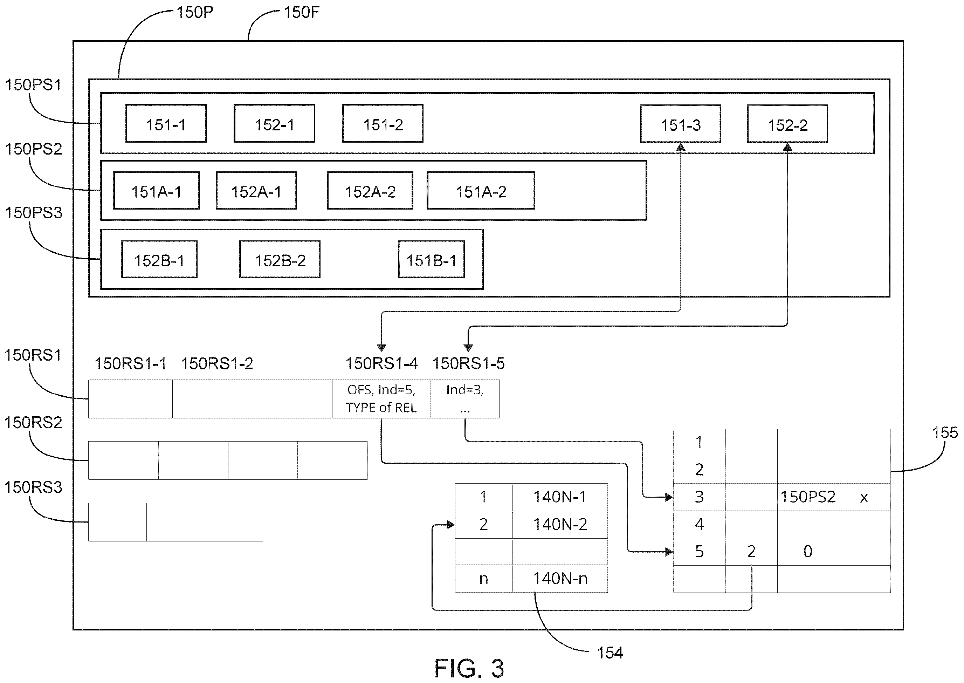

Fig. 3 schematically shows a different, detailed, example of the executable file 150F including a program 150P understood to include a set of allocatable sections 150PS1, 150PS2 and 150PS3, from which the sections 150PS1 and 150PS3 are executable and the section 150PS2 is not executable. The executable section 150PS1 includes invocations 151-1, 152-1, 151-2, 151-3 and 152-2 in this order with an increasing offset from the start of the section 150PS1. Invocations 151-1, 151-2 and 151-3 are for API entities, and invocations 152-1 and 152-2 are for code or data in the same allocatable section or other allocatable sections, 150PS1-150PS3. The allocatable, non-executable section 150PS2 includes invocations 151A-1, 152A-1, 152A-2, 151-A2: those, which start with 151, for API entities; and those, which start with 152 for code or data in the same or other allocatable sections, 150PS1-150PS3. Similarly, the executable section 150PS3 includes invocations 152B-1, 152B-2 and 151B-1, with an increasing offset from the start of the section.

In the examples of the MMU-less device, having the loader component 210 installed, this component may determine a relocation value for an at least one bit in the executable or merely allocatable section loaded into the RAM 120 (again, loading into the RAM is used as an example because it may allow for a smaller delay during loading and relocation and higher speed during execution of the program than loading into the built-in non-volatile memory 130. The loading into the RAM would be applicable to more use cases; however, the present disclosure is applicable also in the case when the built-in non-volatile memory 130 is rewritable, and the program or its at least one allocatable section is loaded into it).

Herein, the at least one bit may correspond to any of the invocations starting with 151 in Fig. 3, in the executable sections 150PS1 and 150PS3 or merely allocatable section 150PS2. By the relocation value is meant a new address which is to replace the original address recorded in the executable or merely allocatable section before relocation, or which is to be inserted there to replace an address missing from this section before relocation. Alternatively, or additionally, the relocation value may replace a record indicating that the relocation is required. That is, the at least bit may have some value or no value before the relocation, but in any case it corresponds to a position or a location at which the relocation is to be performed in the respective allocatable and possibly executable section, and it has to acquire the relocation value, being an address of an API entity, after the relocation. For example, for the MMU-less device 100A or 100B the relocation value for any of the invocations starting with 151 has to be equal to one of the addresses 160-1, ... 160-n, depending on which API entity is to be invoked.

In particular, the loader component 210 may determine the relocation value by searching for an address in the API table 150T, with the search based on a hash value of a name of an API entity which is to be invoked by the invocation. That is, the loader component 210 may find in the executable file 150F that the invocation is for some API entity, for example 140-2, because the executable file 150F includes a record with the corresponding API entity name. Then, the loader component 210 finds the address 160-2 in the API table 150T.

In this example, the loader component 210 may obtain the hash value 150-2 for the name of the API entity 140-2, found from the executable file 150F, by calculating this hash value. The same hash function is to be used, with which the table 150T has been built.

As for the name of the API-entity 140-2 for that invocation which is subject to the relocation, the loader component 210 may obtain this name from a string table section in the executable file 150F. For example, in the ELF format such section is also called String Table Section. Fig. 3 includes a string table section 154 with indexes 1, 2, ...n and names 140N-1, 140N-2, ... 140N-n for API entities 140-1, 140-2, ... 140-n to provide an example.

The loader component 210 may obtain the name of the API entity from the string table section 154 without creating a copy of this section in at least one of the RAM 120 and/or the built-in non-volatile memory 130 of the MMU-less device. For example, the loader component 210 may send out a request to fetch the name 140N-2 from the external memory or communication device 190. The request may specify a location, such as specified by an index (in this example, of value 2), of this API entity name 140N-2 in the string table section 154. For example, the request may be directed to a reader device of the external memory 190, which may present, for example, a non-volatile medium carrier or a non-volatile chip (and/or a non-volatile on-chip) storage.

The loader component 210 may, for obtaining the name 140N-2 of the API entity 140-2, for example, from the string table section 154 and based on the API entity name index (in this example, of value 2) indicating the location of this name 140N-2 in the string table section 154, obtain this name index (in this example, of value 2) from a symbol table section 155 from the executable file 150F and also shown in Fig. 3. For example, in the ELF format such section is also called Symbol Table Section. Thus, obtaining the name 140N-2 of API entity 140-2 may be based on the name index (in this example, of value 2) of the API entity 140-2, as found in the symbol table section 155, and used for querying the string table section 154.

For example, the loader component 210 may obtain the name index (in this example, of value 2) of the API entity 140-2 by accessing that entry in the symbol table section 155, whose entry index (in this example, of value 5) is recorded in a relocation data section 150RS1. Herein, the relocation data section 150RS1 in the executable file 150F is relevant because it corresponds to the allocatable section 150PS1 including the invocation 151-3, being subject to relocation; in other words, the relocation data section 150RS1 is relevant because it is recorded in the executable file 150F (in a header in this file) as relating to the allocatable section 150PS1. For example, in the ELF format such section is also called Relocation Data Section.

There may be a plurality of different relocation entries, such as 150RS1-1, 150RS1-2 ... 150RS-5, in the same relocation data section, such as 150RS1. The loader component 210 may obtain the name index (in this example, of value 2) of the API entity 140-2 from that relocation entry (150RS1-4, the fourth in the section 150RS1), which relates to the invocation 151-3 (the fourth in the section 150PS1) being subject to the relocation, i.e. from the relocation entry which relates to the at least one bit, relating to the invocation as discussed above.

That is, the loader component 210 may obtain the entry index (in this example, of value 5), for querying the symbol table section 155 for the name index (in this example, of value 2), from the relocation entry 150RS1-4 corresponding, in the relocation data section 150RS1, to the invocation 151-3 subject to the relocation. Such relocation entry may be located in that relocation data section, which corresponds to the allocatable section.

This relocation entry 151RS1-4 may further include an offset OFS of the at least one bit at 151-3 in the allocatable section 150PS1. The loader component 210 may determine, which at least one bit is subject to relocation, based on this offset, by reading the relocation data section 150RS1 entry by entry.

Also, the relocation entry, such as 151RS1-4, may further include a type of the relocation. The loader component 210 may replace as many bits starting from or including the at least one bit (i.e. starting from the relocation address) as it is determined by the type of the relocation which the at least one bit has to undergo (i.e. which has to be performed at this relocation location).

The relocation value does not have to be found in the ways as described above in all cases: the above steps may be useful for the direct invocation of the API entity, which address is not resolved in the executable file 150F. In other cases, where the invocation directly relates to an entity (e.g. code or data) in the same or another allocatable section in the executable file 150F, a relocation may need to be performed as well, but such relocation does not have to be based on the table 150T. For example, the allocatable section 150PS1 as above, corresponds to the relocation data section 150RS. The invocation 152-2, fifth in the allocatable section 150PS1, thus corresponds to the relocation entry 151 RS1-5, fifth in the relocation section 150RS. The relocation entry 151RS1-5 includes a record that entry index of value 3 is relevant in the symbol table section 155 to this invocation; and the respective entry (of index 3 in the left column in the symbol table section 155) includes in the third column a section header index of value 2, meaning that the invocation 152-2 is for a data in the allocatable section 150PS2. In contrast, the entry of index 5 in the symbol table section 155 includes in the third column a section header index of value 0, which is in the present example not assigned to any of the executable sections 150PS1-150PS3 of the program 150P and means that the invocation (151-3) is for an API entity.

That is, the loader component 210 may determine for an invocation the relocation value based on the API table after checking (i.e. ascertaining) that the respective entry in the symbol table section 155 includes a section header index of a zero value: for example, such value is typically used in the ELF for the case in which the invocation, which is subject to relocation, relates to an API entity rather than a different allocatable section in the executable file 150F. However, the zero value is not the only possibility, and the executable file 150F does not have to be in the ELF format; hence, alternatively the loader component 210 may be configured to proceed to determining the relocation value in the ways described above only after checking that the entry in the symbol table section includes a section header index of any value not corresponding to any allocatable section, such as 150PS1-150PS3 from the executable file 150F. For example, such value could be 7 since there is no the 7th allocatable section in the executable file 150F in Fig. 3. As a further alternative, the loader component 210 may proceed to determining the relocation value in the ways described above only after checking that the entry in the symbol table section does not include a section header index (as a value or as a field).

Furthermore, in the above example, the loader component 210 may be configured to perform, upon determining the relocation value. the relocation by modifying the at least one bit of the at least one executable section, such as any section from 150PS1-150PS3, loaded, for example, into the RAM 120, based on the determined relocation value.

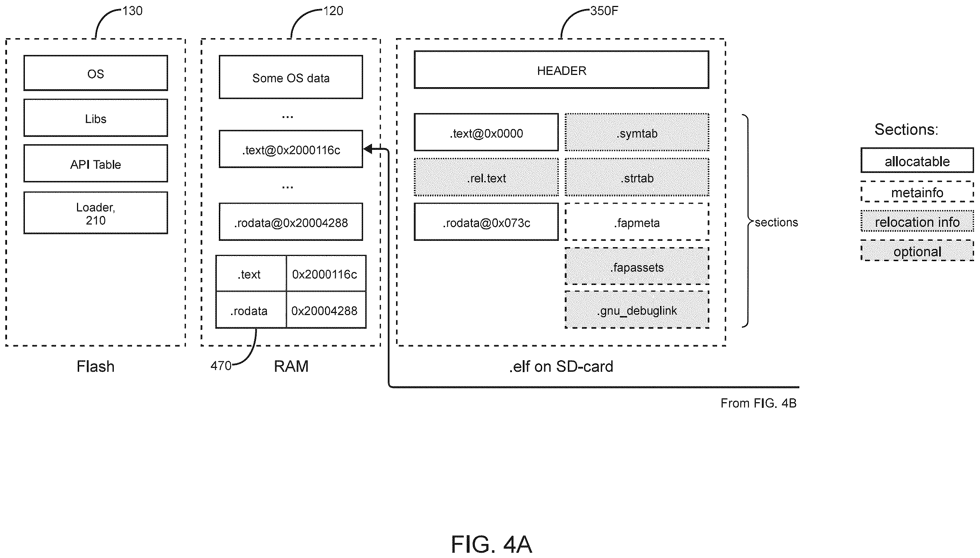

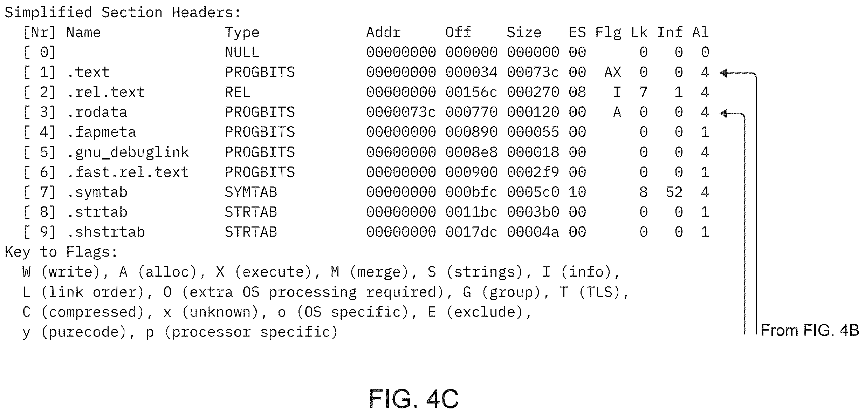

Figs. 4A-4C present an example illustrating how the loader component 210 may perform relocations. In Fig. 4A another exemplary implementation, 350F, of the executable file 150F is schematically shown. The executable file 350F is stored on the SD-card in the ELF format. It includes a header and various sections, including an executable (and allocatable) section ".text" and an allocatable section ".rodata", which are recorded with offsets of 0x0000 and 0x073c, respectively (with respect to the start of the elf file). Such offsets may be used to query the SD-card reader for data from the respective sections, and may be used for other sections too: for example, in the request to fetch the API entity name from the string table section, with its respective offset. The loader component 210 is called "Loader" and is shown as recorded in the built-in non-volatile memory 130 implemented by the flash memory in Fig. 4A. Also, this flash memory has a record of the API table (shown as "API Table" in Fig. 4A). The loader component has read the header in Fig. 4A, detailed in Fig. 4C, and found which sections are executable and allocatable; then it has loaded such sections into the RAM, which, as shown in Fig. 4A, therefore similarly to the SD-card includes sections ".text" and "rodata". In particular, the copies of the sections ".text" and ".rodata" have been loaded by the loader at addresses 0x2000116c and 0x20004288, respectively. These addresses belong to the RAM, in the address space of the MCU of the present example MMU-less device.

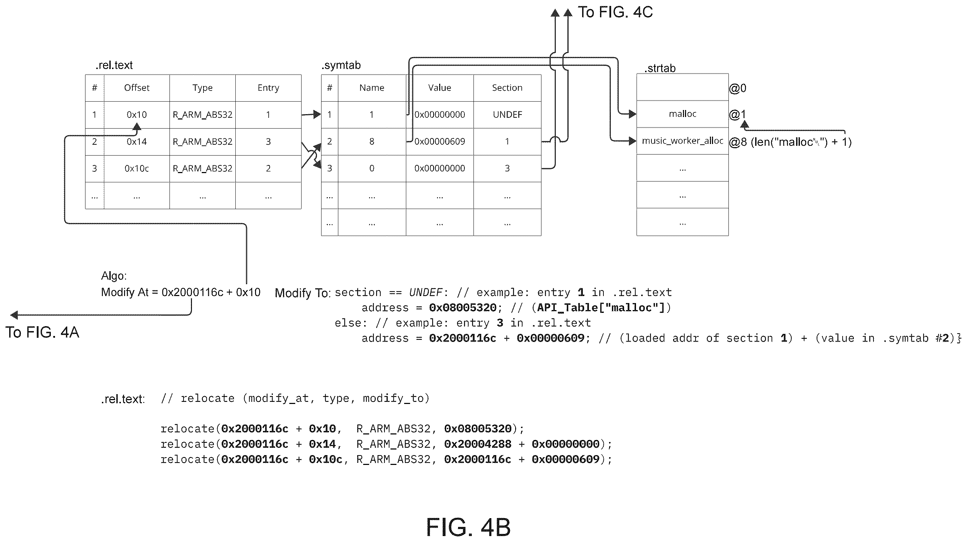

Fig. 4B schematically shows a Relocation Data Section ".rel.text" for the executable section ".text". While analysing this relocation data section, the loader finds from its relocation entry #1 that at least one bit with offset 0x10 is subject to relocation. Also, the loader finds from the relocation entry #1 that the entry index (in the fourth column) is 1 (by coincidence) for this at least bit, and then, based on this entry index, finds entry #1 in the Symbol Table Section (".symtab"), where the header row is added just for readability. There is no definition of a section header index in this entry: the column "Section" has a value "UNDEF" for the clarity of presentation, recorded as zero in the actual ELF file. Thus, a direct invocation of some API entity is presented by the at least one bit at the offset 0x10 mentioned above. Consequently, the loader finds from .symtab, entry #1, second column, that the corresponding index of the name of the API entity is 1 (by coincidence). The loader then finds the name of the API entity in the String Table Section (".strtab") in Fig. 4B: the name corresponding to index with value 1 is "malloc". The loader calculates the hash function of the "malloc" and finds from the API table 150 the address 0x08005320. Hence, this address is to be used as the relocation value and is mentioned after "if" in the example of "Modify to" in Fig. 4B.

In a further example, the loader component 210 may have another feature allowing the loaded programs to be bigger, and capable of bringing the usability of the MMU-less device at a new level when this feature is used in combination with the ways to perform relocations for the API entity invocations discussed above, or even when this feature is used separately. In particular, in the example shown in Fig. 4A, the loader component 210 has loaded a plurality of allocatable sections (.text and .rodata in Fig. 4A) from the executable file 350F into available blocks of the RAM 120 and has recorded in the RAM a table 470 of correspondence between these allocatable sections and their loading addresses 0x20001116c and 0x20004288. Further, the loader component 210 is configured to perform at least one relocation for an invocation from one section to the same or another section. For example, such invocations start with 152 in Fig. 3 or correspond to an offset of 0x14 and/or 0x10c in the section .text. Herein, the invocation corresponding to the offset 0x14 is from the section .text to the section .text. The invocation corresponding to the offset .0x10c is from the section .text to the section .rodata. The relocation may be performed based on the table of correspondence 470.

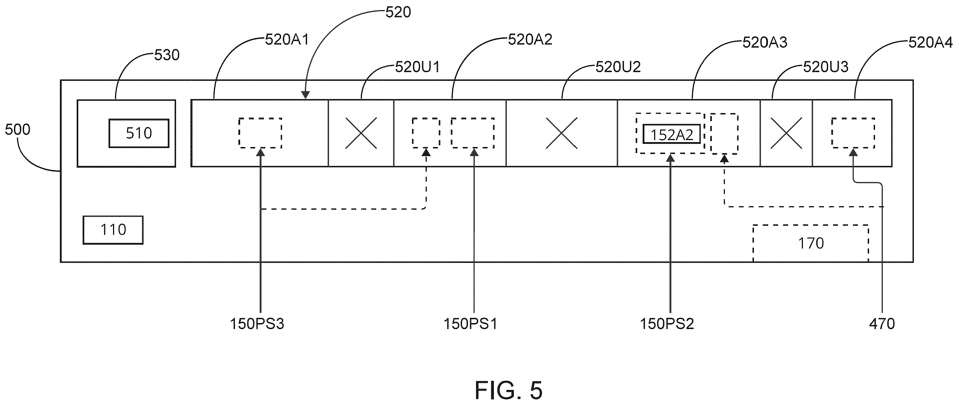

Fig. 5 schematically shows another example, of a MMU-less device 500, using the above approach with respect to invocations of one allocatable section to another allocatable section. The MMU-less device 500 includes a processing unit 110, a RAM 520, and a built-in non-volatile memory 530. In the shown example, the built-in non-volatile memory 530 stores a loader component 510. This component 510 is configured to load a plurality of allocatable sections 150PS1-150PS3 shown in Fig. 3 from the executable file 150F into available blocks 520A1-520A4 in the RAM 520. Also, it records into the RAM 520 a table 470 of correspondence between the allocatable sections 150PS1-150PS3 and addresses at which the allocatable sections are loaded. In other words. For example, the section 150PS1 fits only in the block 520A2 and is loaded there; and section 150PS2 is loaded then into block 520A3. The section 150PS3 may be loaded either into block 520A1 or 520A2; and the table of correspondence 470 may be recorded into either a block 520A3 or block 520A4. Additionally, the loader component 510 performs a relocation, for example, for the invocation 152A-2. The relocation is performed based on the table of correspondence 470. With such loading and relocation approach, the loader component 510 allows increasing the size of the programs and keeping the required RAM size lower.

As for the API invocations, such as starting with 151 in Fig. 3, the difference between the MMU-less device 500 and the MMU-less devices 100A, 100B and 200 above is in that the MMU-less device 500 may process the API invocations conventionally, for example in a case in which the API entity addresses are stored in a table along with the API entity names in the built-in non-volatile memory 530. However, the MMU-less device 500 may be also configured to perform relocations for the API invocations as presented above in the present disclosure, in particular, in the case of the API entity addresses being stored in the API table along with the respective (pre-)sorted hash values of API entity names in the built-in non-volatile memory 530.

Further, the loader component 520 may avoid loading the allocatable sections 150PS1-150PS3 and the table of correspondence 470 into unavailable blocks 520U1-520U3 in the RAM 520. In other words, the loader component 520 may load at least one allocatable section (e.g. 150PS2) thereby occupying some first available byte in the RAM 520 and load an at least one allocatable section (e.g. 150PS3) thereby occupying some second available byte in the RAM; but the loader component 510 avoids writing into some byte in the RAM 520 between the first and the second available bytes. For example, the latter byte may belong to the block 520U2 in the RAM if the section 150PS3 is loaded into block 520A2, or it may belong either to a block 520U1 or block 520U2 in the RAM if the section 150PS3 is loaded into block 520A1. This byte may be allocated to a program different from the received program 150P.

The loader component may perform the relocation for the invocation such as 152A-2 (mentioned above with reference to the example of Fig. 5) or the invocation at the offset of 0x14 and/or 0x10c in the section .text based on the symbol table section, such as 155 in Fig. 3 or .symtab in Fig. 4B, from the executable file.

For example, the loader component may perform the relocation by using a value associated symbol in that entry in the symbol table section whose entry index is recorded in the relocation data section corresponding to the allocatable section. For example, in Fig. 4B the third invocation in the section .text is at the offset of 0x10c, as it is seen from the respective relocation data section .rel.text . The entry #3 in .rel.text refers to entry #2 in .symtab. The entry #2 in symtab has a value associated symbol of 0x00000609 (determined by or assigned by a compiler or a linker, especially if separate from the compiler, when preparing the partially linked executable file; and presenting an offset in the target allocatable section). The relocation value in "modify to" example in Fig. 4B is based on this value associated symbol, as well as the address of 0x2000116c of the section .text taken from the table 470 in Fig. 4A. The address 0x2000116c of the section .text is relevant for this relocation because the invocation is to the section .text: the value of the section header index is 1 in the entry #2 in .symtab, and according to the header in Fig. 4C this is an index of the section .text.

Similarly, the loader component may perform the relocation for the invocation at the offset of 0x14 in the section .text based on the symbol table section. However, in this case the value associated symbol is 0, and the invocation is from the section .text, but to the section .rodata (the value of the section header index is 3 in the entry #3 in .symtab, and according to the header in Fig. 4C this is an index of the section .rodata). Hence, the relocation value is based on the address 0x2000428 of the section .rodata in the table 470 in Fig. 4A.

Similarly, the value-added (i.e. value associated) symbol set to x in the symbol table 155 in Fig. 3 may be used by the loader component 510 in Fig. 5 for the invocation 152-2 in Fig. 3.

In the above examples, the executable file may be an ELF compatible file. Additionally, or alternatively, the executable file may be partially-linked.

In all above examples, the MMU-less device may have any of the features below, or any combination of these features:
(a) the MMU-less device may include an at least one user interface input and/or at least one output unit; and/or
(b) the MMU-less device may be a handheld or mobile device; and/or
(c) the MMU-less device may include at least two, three, four or five antennas for acting, optionally via at least one wireless transceiver, at respectively at least two, three, four or five frequencies, and/or
(d) the MMU-less device may include a MMU-less microcontroller including two processing units, where one of them is the central processing unit (e.g. 110) and the other is a dedicated processing unit for processing radio stack data; and/or
(e) the built-in non-volatile memory may include memory of at least one of EEPROM and flash type, and/or
(f) a total volume of the built-in non-volatile memory of the MMU-less device may not exceed 8 MB, 4 MB, or 2 MB, or 1 MB; and/or
(g) a total volume of the RAM of the MMU-less device may not exceed 1 MB; and/or
(h) the MMU-less device may lack at least a hardware MMU; and/or
(i) the API entities may be of a firmware or an operating system of the MMU-less device; and/or
(j) the MMU-less device may be configured for receiving the program from an external storage being a communication device or an external memory, which optionally may be a non-volatile memory, which optionally may be a non-volatile chip (and/or a non-volatile on-chip) storage.

With regard to the at least one user interface input and/or at least one output unit, the MMU-less device may have a screen 104 and/or another output module, and/or an output port. The screen may be, for example, a touch screen, presenting an input module for human-computer interaction. Additionally, or alternatively to the input module presented by the touch function of the touch screen, the MMU-less device may include one or more other input modules, such as a keyboard, mouse, and touchpad.

In view of the above, in another aspect the present disclosure provides a non-volatile chip (and/or a non-volatile on-chip) storage for use as an external memory of a MMU-less device. An example of such storage may be provided by an SD-card 350 in Fig. 4A the source 190 of the executable file 150F in Figs. 1B, 2 and 3 implemented as the non-volatile chip storage. The non-volatile chip storage stores an executable file 150F to 250F storing a program 150P for the MMU-less device and including at least one allocatable section (such as sections .text and .rodata in Fig. 4A and sections 150PS1-150PS3 in Fig.3). This at least one section includes at least one bit recorded as requiring a relocation. Furthermore, the executable file includes a symbol table section (such as .symtab in Figs. 4A and 4B and symbol table section 155 in Fig, 3). Further, in the executable file, an entry in the symbol table section corresponding to the at least one bit includes a section header index of a zero value or of a different value not corresponding to any section from the executable file, or does not include any section header index. Additionally, this entry includes a name index of an API entity for the MMU-less device; for example, of an operating system for the MMU-less device.

Further, the executable file may include a string table section (such as .strtab in Figs. 4A and 4B or 154 in Fig. 3), which includes a name of the API entity associated with the name index. The executable file may be an ELF compatible file or in other words an ELF file. The executable file, optionally being the ELF compatible file, may be partially linked.

In another aspect of the present disclosure, the MMU-less device in any variation according to the present disclosure and the non-volatile chip storage in any variation according to the present disclosure may be considered to form a system, upon the MMU-less device being configured to communicate with the non-volatile chip storage.

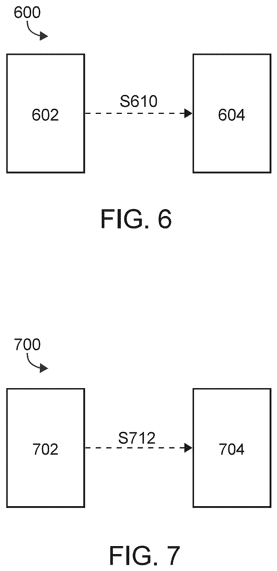

In yet another aspect of the present disclosure, there is provided a method which may be used, for example, by a software developer, or a vendor, or a distributor. The method is schematically illustrated in Fig. 6: it shows such a method 600 including a step S610 of sending an API table from a communication device 602 to a MMU-less device 604, which may or may not have another API table in its memory. The communication device may be for example a computer connected to the internet or another network, or a specialized device, for example, a server, or a cloud service, or a telecommunication node. In the step S610, the API table being sent includes a plurality of sorted hash values, calculated based on a plurality of names of API entities and paired with a plurality of addresses to be used by API entities, while the MMU-less device includes an at least one processing unit, a RAM, and a built-in non-volatile memory storing API entities. The API table may relate to some different API entities than the MMU-less device stores and is able to provide to independent programs before receiving the API table. That is, the API of the MMU-less device may be updated, and optionally expanded, by using the method 600; and addresses of API entities common between the two versions of API may be updated.

For example, in the method 600, the API sent to the MMU-less device from the communication device may be included in a firmware for the MMU-less device which is sent to the MMU-less device from the communication device. That is, the step S610 includes sending the rest of the firmware along with the API table.

In yet a further aspect of the present disclosure, there is provided a method which again may be used, for example, by a software developer, or vendor, or distributor, the same or different from the aspect immediately above. The method includes sending from a communication device to a MMU-less device or recording into a non-volatile chip storage (and/or a non-volatile on-chip) storage an executable file storing a program for a MMU-less device and including at least one allocatable section, which includes at least one bit recorded as requiring a relocation. The method is schematically illustrated in Fig. 7, showing such a method 700 including such a sending or recording step S712. The executable file includes a symbol table section. An entry in the symbol table section corresponding to the at least one bit includes a section header index of a zero value or of a different value not corresponding to any section from the executable file, or does not comprise any section header index. Also, this entry includes a name index of an API entity of an operating system for the MMU-less device, at 704 in Fig. 7. Alternatively, 704 in Fig. 7 may relate to a non-volatile chip (and/or a non-volatile on-chip) storage. The communication device, at 702 in Fig. 7, may be, for example, a computer connected to the internet or another network, or a specialized device, for example, a server, or a cloud service, or a telecommunication node, i.e. may be configured similarly to the communication device 602 or be the same device as the device 602.

In the above method 700, the executable file, being sent to the MMU-less device or recorded into the non-volatile chip storage, may include a string table section, which includes a name of the API entity associated with the name index. The executable file may be an ELF file, and/or the executable file may be partially linked.

In a different aspect, the present disclosure provides a computer-implemented method for use in preparing an at least one of (a) a firmware with an API including a plurality of API entities for an MMU-less device, and (b) an SDK for preparing a software, including an at least invocation of the API, for the MMU-less device. The inventors have designed such a method because they have sought to increase the number of API entities stored in an MMU-less device, and it is more convenient, reliable and quick to use their method for preparing the firmware with such an API and for preparing an SDK allowing various developers to develop programs for the firmware with such an API. Consequently, the computer-implemented method may be performed by a computer used by the software developer.

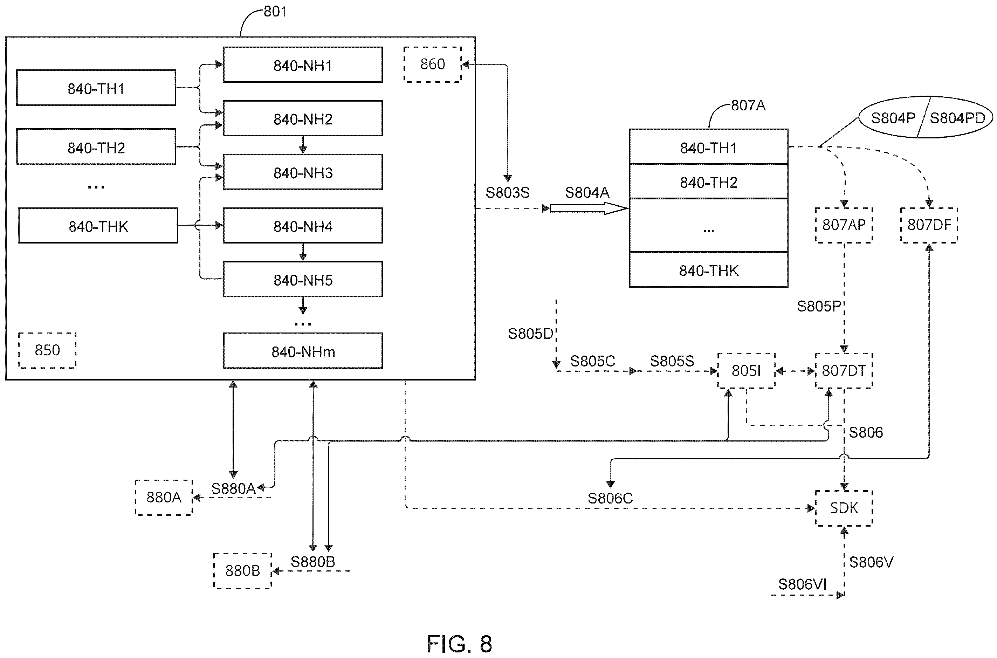

Fig. 8 schematically shows such an example method 800. The method includes a step S804A of generating from a firmware source code 801 an amalgamated header file 807A. The firmware source code includes a plurality of header files 840, composed of a plurality of top-level header files 840-TH1, 840-TH2, ..., 840-THk and a plurality of nested header files 840-NH1, 840-NH2, ..., 840-NHm. These header files 840 include declarations of a plurality of entities for including into the plurality of API entities. The amalgamated header file 807 is to be composed of each top-level header file 840-TH1, 840-TH2, ..., 840-THk from the plurality of header files 840. It may be composed without including any of the nested header files 840-NH1, 840-NH2, ..., 840-NHm. The source code further includes implementation files corresponding to the header files 840. Furthermore, the source code may include a different one or more header file 850, which declarations are not intended to be included in the SDK. The source code files may be located in one, single, directory or folder, or they may be distributed between one or more directory tree. The source code may be written in one or more of programming languages, for example, in C, with, for example, instructions for the preprocessor, which do not belong to the programming language as such.

Also, the method 800 may include a step S803S of searching in the firmware source code 801 for the plurality of top-level header files 840 for the generating step S804A. The searching step S803 may include reading names and file paths of the plurality of top-level header files 840-TH1.... 840-THk from one or more optional component manifest file, shown at 860 in Fig. 8A, and accessing the plurality of top-level header files 840-TH1. ... 840-THk based on these file paths and names.

In the above variations of the method 800, the method may include a step S804P of generating a preprocessed amalgamated header file 807AP by invoking an at least one program from (a) a standalone preprocessor; (b) a preprocessor of a compiler, where the preprocessor is separately invokable; and (c) a compiler. Herein, the compiler may be a cross-compiler. The preprocessor, in the compiler or a standalone, and the compiler may belong to a toolchain. The preprocessor substitutes various preprocessor instructions and adds to the declarations from the top-level header files lower level declarations from the nested header files, as well as declarations from the programming language realization. Thus, it allows including needed declarations from the nested header files and the language realization into the API and needed declarations from the nested header files into the SDK. For example, the GNU C compiler's preprocessor may perform such preprocessing if invoked with the specific option.

Then, the method may include a step S805P of parsing the preprocessed amalgamated header file 807AP to generate a deep declaration table 807DT including a plurality of declarations from the proprocessed amalgamated header file 807AP. This step is useful for filtering out those declarations, which are clearly not needed in the SDK and API; for example, in many cases such declarations may come from the programming language realization.

Also, the method 800 may include a step S805S of storing API indicator data 805I, which indicate for each declaration in the deep declaration table 807DT whether the declaration is for an API entity from the API or not for an API entity from the API. Optionally, the storing includes adding the API indicator data 805S to the deep declaration table 807DT (thereby updating it).

In a further example, the method 800 may include a step S805D of displaying at least a part of the deep declaration table 807DT on a screen, and a step S805C of collecting at least a part of the API indicator data 805I from a human-computer interface for the step S805S of storing the API indicator data. Alternatively, the step S805S may be based on data received by the computer implementing method 800 in a file via a network, for example, from a customer who has ordered the development of the SDK.

In the variations of the method 800 including the step S805S the API indicator data 805I may indicate for at least one declaration present in the deep declaration table 807DT and in the plurality of header files 840 that this at least one declaration is not for an API entity from the API. Alternatively, or additionally the API indicator data 805I may indicate for at least one declaration present in the deep declaration table 807DT and not present in the plurality of header files 840 that this at least one declaration is for an API entity from the API. Such options allow creating APIs and SDKs with an improved usability and customizability of the firmware and independent programs for the MMU-less device.

Also, the method 800 may include a step S806 of including (i.e. adding) the deep declaration table S805DT along with, and optionally containing the API indicator data S805I, into the SDK.

The method 800 in its different variations may include a step S806VI of generating an API version indicator for the API. The API version indicator indicates whether the API is incompatible with at least one previous API by a difference with respect to a previous API version indicator. This step S806VI may include comparing the declarations of the API entities in the deep declaration table 807DT with previous declarations of previous API entities in a previous deep declaration table, and finding the lack of the compatibility if at least one of the previous API entities is not presented or is incompatibly presented among the API entities. The incompatibility may arise, for example, from a change in a data type of some input in some declaration, or a change in a data type of some output, or a change in order or quantity of inputs or outputs in this declaration. There may be more than AP version indicator: for example, a major indicator and a minor indicator, with the increase in the major indicator (series, for example 7 in the version 7.0) indicating an incompatibility with the previous version (for example, 6.5).

Also, this method 800 may include a step S806V of including (i.e. adding) the version indicator into the SDK, optionally by recording it into the deep declaration table. This recording may be performed before or after copying this deep declaration table into the SDK.

The version indicator may be used to avoid loading an executable file, formed by using the SDK, or running a program from the executable file by the MMU-less device: the device may be configured to compare the version indicators in the executable file and in the firmware of the MMU-less device, to check whether the executable file is compatible with the firmware.

The method 800 in any of its variations may include a step S804PD being a modification of the step S804P. comprising generating a dependency file 807DF besides the preprocessed amalgamated header file 807AP. This may be implemented, for example, by invoking the at least one program (as one of the above: (a) the standalone preprocessor; (b) the preprocessor of the compiler, where the preprocessor is separately invokable; and (c) the compiler) with a further specific option, for example, -MMD and/or -MF in case of the GNU C preprocessor. Also, step S804PD is used to store the dependency file 807DF after an end of the preprocessing S804PD and, optionally, after exiting the program, such as the compiler. Consequently, the dependency file 807DF stores a name and file path of a single copy of each file from the plurality of header files.

Further, the above method may include a step S806C of copying, based on the dependency file 807DF, the plurality of header files 840 from the firmware source code 801, to include the single copy of each of the plurality of header files 840 in the SDK. However, optionally one or more header file from the plurality 840 may be excepted from inclusion into the SDK: the API indicator data 805I may indicate that this one or more header file is not included in the API.

Additionally, the above method may include placing the plurality of header files 840 into a directory structure in the SDK replicating a corresponding directory structure in the firmware source code 801. Optionally, the exception discussed above is taken into account: there is no need to create a folder or a branch or a leaf of the directory tree in the SDK if it would be only for a header file which would not be included into the SDK.

In all variations of the method 800, a header file from the firmware source code 801 may declare a hash function with an argument being a string. Optionally, this hash-function-declaring header file does not belong to the plurality 840 of the (potentially public) header files (i.e. the plurality that may be arranged by using the component manifest file and finding the respective nested header files by using the preprocessor or the compiler, e.g. by using the dependency file 807DF). In other words, this hash-function-declaring header file may belong to the different one or more header file 850 (i.e. to be a private header file).

Furthermore, the method 800 may include a step S880A of generating, based on the deep declaration table 807DT along with and optionally including the API indicator data 805I, and based on the firmware source code 801, a compilable file 880A, which may be an implementation file or a header file. The compilable file 880A includes an array of structures. Each structure in this array includes an invocation of the hash function with an argument being a name of an API entity, and a reference to an address of the API entity.

Further, the compilable file includes an invocation of a sorting procedure for the array of the structures according to the hash values calculated by invocations of the hash function. Also, the invocations of the hash function and the sorting procedure may be executable by the at least one program (from the standalone preprocessor; the preprocessor of the compiler, where the preprocessor is separately invokable; and the compiler).

Alternatively, the method 800 may include a step S880B of generating, based on the deep declaration table 807DT along with and optionally including the API indicator data 805I, and based on the firmware source code 801, a compilable file 880B, which may be an implementation file or a header file. In this case the compilable file also includes an array of structures, but each structure includes a hash value calculated by applying the hash function to a name of an API entity, and a reference to an address of the API entity,

Herein, the array may be sorted according to the hash values in the structures.

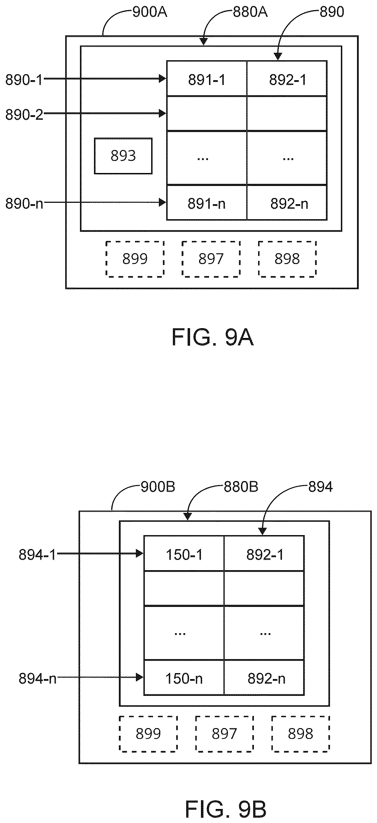

In a further aspect of the present disclosure, there is provided a computer-readable memory storage for use in preparing a firmware for an MMU-less device. An example of such storage 900A is provided in Fig. 9A. The firmware is to include an application program interface (API) including a plurality of API entities. The memory storage 900A stores a compilable file 880A, as above, optionally being an implementation file or a header file. The compilable file 880A includes an array 890 of structures 890-1, ... , 890-n, and each structure includes a respective invocation from 891-1, ... , 890-n of a hash function with an argument being a string presenting a name of an API entity (respective API entity), and a respective reference 892-1, ...892-n to an address of the API entity.

Also, the compilable file includes an invocation 893 of a sorting procedure for the array 890 of the structures according to the hash values calculated by invocations of the hash function. These invocations 891-1, ... , 890-n and 893 of the hash function and the sorting procedure may be executable by an at least one from a standalone preprocessor, a preprocessor of a compiler, and a compiler.

Alternatively, a computer-readable memory storage 900B is schematically shown in Fig. 9B. This storage is also suitable for use in preparing, for an MMU-less device, a firmware including an API with a plurality of API entities. The memory storage 900B stores a compilable file 880B, optionally being an implementation file or a header file. The compilable file 880B includes an array 894 of structures 894-1, ... 894-n. Each structure includes a respective hash value from 150-1, ...150-n calculated by applying a hash function to a string presenting a name of an API entity, and a respective reference 892-1, ...892-n to an address of the API entity. The array may be sorted according to the hash values 150-1, ...150-n in the structures, in an increasing or decreasing order.

According to an example, each reference 892-1, ...892-n used in either variation of the computer-readable memory storage may be a code of a command of obtaining an address applied to the respective API entity referred to by its name (for instance: ".address=&LL_Comp_Init").

Also, the computer-readable memory storage i.e. in any variation such as 900A and 900B may include an implementation 897 of the hash function for including the hash function into a loader component of the firmware.

The computer-readable memory storage 900A or 900B may be presented by a hard drive or another memory device of the software developer computer. It may store the compiler 898, optionally being a cross-compiler. Furthermore, the computer-readable memory storage may store a linker 899 for preparing an executable file presenting the firmware and configured to replace the references to the addresses with addresses configured for a memory of the MMU-less device.

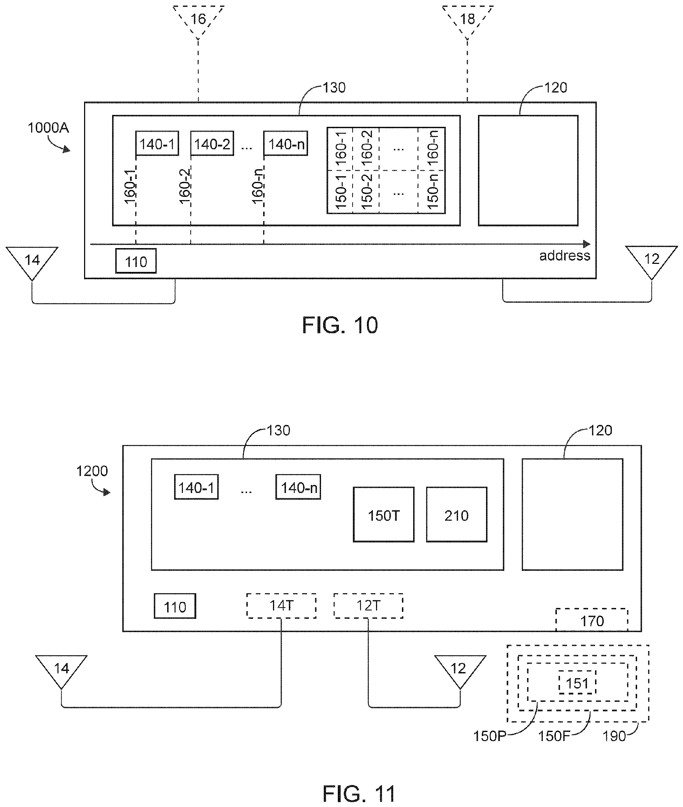

In view of the above, in Fig. 10 there is schematically shown a MMU-less device 1000A configured similarly the MMU-less device 100A, but with explicitly shown antennas 12 and 14, and optional antennas 16 and 18. That is, the device 1000A presents an example of a MMU-less device according to the present disclosure with at least two antennas, and in a configuration with at least one of the optional antennas 16 and 18 being present, an example of a MMU-less device according to the present disclosure with at least three antennas. Each antenna, with which the MMU-less device 1000A is equipped, may be used for receiving or transmitting signals at at least its respective associated frequency or channel. The MMU-less device may include one or more channel selection section for setting each such frequency. For example, the channel selection section may include a fractional PLL (phase-locked loop), Additionally, or alternatively, each antenna may be tunable (i.e. reconfigurable); and the device MMU-less device 1000A may include an antenna tuner (an antenna tuning section) for one or more of the antennas for changing the respective one or more frequency. Also, the device 1000A may include one or more switches (switching sections) for switching between receiving and transmitting for one or more of the antennas. Each antenna may be directional or omni-directional. For another example, one or more of the antennas may be included in the interface for receiving the program (for instance, from an external communication device or an external memory, for example, a non-volatile chip storage (and/or a non-volatile on-chip) storage or a card chip; or another memory carrier, optionally, passive).

Also, a MMU-less device may be configured as any of other MMU-less devices above, by using antennas and various sections in a similar way as explained with the reference to Fig. 10. For example, the device 100B in Fig. 1B may be equipped with antennas 12 and 14, and optionally with at least one of the antennas 16 and 18. The interface 170 in Fig. 1B may use one or more of these antennas.

Fig. 11 presents another example, a MMU-less device 1200, configured similarly the MMU-less device 200, but with explicitly shown antennas 12 and 14. Similarly to the above examples, the device 1200 may include more antennas than explicitly shown in Fig. 11. This figure also explicitly shows transceiving sections 12T and 14T, each, for example, for choosing between reception and transmission for a respective antenna. Each transceiving section may include a switch controllable, for example, by the at least one processor 110. Each of the transceiving sections may include the channel selection section and/or the tuning section. The transceiving sections, for example, 12T and 14T, may form a greater transceiving section serving more than one antenna.

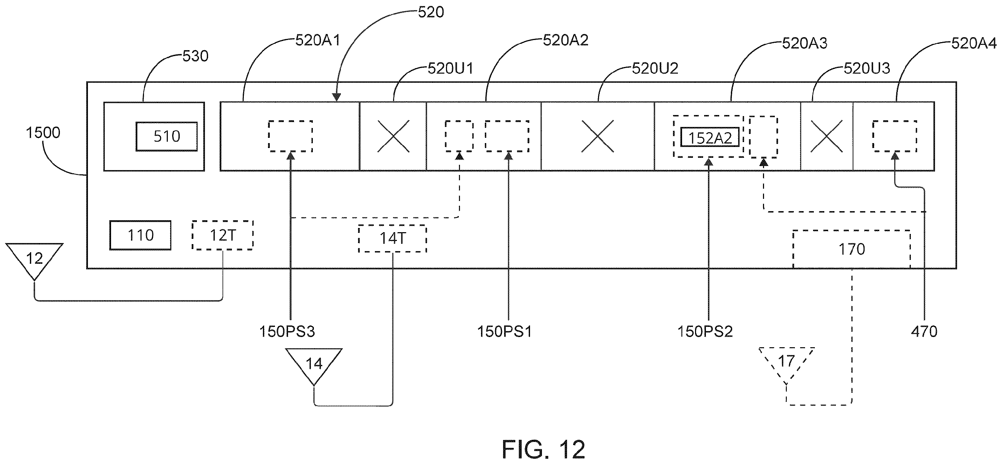

In Fig. 12 a further example of a MMU-less device, 1500, is presented. The MMU-less device is configured similarly to the MMU-less device 500, but further includes antennas 12 and 14 with respective optional transceiving sections. Also, it includes an optional antenna 17 usable by the interface 170 for receiving the program 150P.

Similarly, the method 700 described with reference to Fig. 7, and other methods according to the present disclosure may be applied to the MMU-less device as above, including at least two or three antennas, each for receiving and/or transmitting signals at at least its respective associated frequency.

According to the present disclosure, the API entities, such as 140-1, 140-2, ..., 140-n, may include among them a first API entity for transmitting a signal using at least a first antenna from the antennas of the MMU/less device and/or for receiving a signal using the at least first antenna from the antennas of the MMU/less device. For example, in the devices 1000A, 1200, 1500, any antenna from 12, 14, 16, 17 and 18 may be the first antenna; for instance, antenna 14 may be the first antenna. The first API entity may be any of the entities 140-1, 140-2, ..., 140-n, for example, 140-2. It, for example, may present an instruction, which, when implemented by the at least one processor 110, causes it to send an appropriate switching signal, optionally along with transmission data, to the first antenna (for example, to a transceiving section or switching section of the first antenna for starting the transmission or reception). Also, the first API entity may have such a code that it would invoke the transmission and/or reception for more antennas: for example, antenna 12.

Further, the API entities of the MMU-less device may similarly include among them a second API entity for transmitting signals using at least a second antenna from the antennas of the MMU-less device and/or for receiving using the at least second antenna from the antennas of the MMU-less device. For example, in the devices 1000A, 1200, 1500 the second antenna may be the antenna 12.

Optionally, the API entities of the MMU-less device may similarly include among them a third API entity for transmitting a signal using at least a third antenna from the antennas of the MMU-less device and/or for receiving a signal using the at least third antenna from the antennas of the MMU-less device.

Furthermore, for the MMU-less device with at least one changeable frequency, one or more from the first to third API entities, or a different API entity, may include a code for changing this frequency. For example, the code, when implemented by the processor, may cause the channel selection section for one or more of the antennas 12, 14, 16, 17 and 18 to change the channel, and/or it may cause the antenna tuning section to change the frequency.

A certain antenna from the antennas of the MMU-less device (for example, 1000A, 1200 or 1500) may be operable in a Sub-GHz range, or near-field communication, NFC, range, or a LF RFID range, i.e. may be configured to have a peak gain in the respective region. In this context, any antenna of the of the MMU-less device may be such a certain antenna. For example, antenna 12 may be the certain antenna, and it may be operable in a Sub-GHz range (and may be not useful in NFC and LF RFID range). Another antenna from antennas of the MMU-less device may be operable in a range being the Sub-GHz range, or the NFC range, or the LF RFID range and different from the range of the certain antenna. That is, when the certain antenna is antenna 12, another antenna may be antenna 14, and when the antenna 12 is operable in the Sub-GHz range, antenna 14 may be operable in NFC or LF RFID range (and may be not useful in the Sub-GHz range). Similarly, optionally, yet another antenna is operable in a range being the Sub-GHz range, or the NFC range, or the LF RFID range and different from the range of the certain antenna and the above mentioned another antenna. For example, antenna 18 may be present in the MMU-less device, and it may be operable in the LF RFID range (while antenna 12 is operable in the Sub-GHz range and antenna 14 is operable in the NFC range).

Additionally, in the MMU-less device (for example, 1500, presented above with reference to Fig. 12), at least one of the allocatable sections (for example, 150PS1-150PS3 in Fig.3) may include an invocation of an API entity for transmitting a signal using at least one antenna from antennas of the MMU-less device (in Fig. 12 the antennas 12 and 14 and the optional antenna 17 are explicitly shown) and/or for receiving a signal using the at least one antenna from the antennas of the MMU-less device. For example, In Fig. 3 any invocation starting with 151 may be the invocation of such an API entity. Furthermore, one or more of the at least one of the allocatable sections may include an invocation of the same or a different API entity to cause the channel selection section for one or more of the antennas of the MMU-less device to change its frequency channel, and/or it may cause the antenna tuning section to change this frequency.

Also, in the method 700 described with reference to Fig. 7, and various other methods according to the present disclosure, applied to the MMU-less device including at least two or three antennas, a certain API entity may be for transmitting a signal using at least one antenna from the antennas of the MMU-less device and/or for receiving a signal using the at least one antenna from the antennas of the MMU-less device. Furthermore, as above, the same or a different API entity may include a code which, when implemented by the processor, would cause the channel selection section for one or more of the antennas of the MMU-less device to change the frequency channel of some respective antenna, and/or cause the antenna tuning section for one or more of the antennas of the MMU-less device to change the frequency channel of the respective antenna.

In a yet further aspect of the present disclosure, the inventors have found that it is possible to shorten the load time of various programs by the MMU-less device according to any of the examples above, as well as by other MMU-less devices: for example, by MMU-less devices with different API tables, in which identifiers of API entities are not the hash values discussed above. For instance, a suitable API table may be a table of API entity identifiers and addresses; in some cases, a table including a plurality of identifiers, being or corresponding to a plurality of names of API entities, and paired with a plurality of addresses of the API entities, respectively. In previous examples, such a plurality of identifiers, corresponding to the plurality of names of API entities, was presented by the plurality of the hash values of the names of the API entities. However, for the aspect of acceleration of the load time of the program, the plurality of identifiers may be presented even just by the names of the API entities, or by other identifiers of API entities based on the names of the API entities. For example, the identifiers may be of different lengths, when they are not presented by the hash values. The identifiers may be sorted or not sorted in the API table, independently of whether they are presented by the hash values or not. At the same time, the case, in which the identifiers are presented by the hash values of the names of the API entities, and the identifiers are sorted in the API table, remains among preferred.

In particular, the load acceleration may be achieved by merging into an executable file (for example, an ELF file) an at least one certain data structure, or by recording this at least one data structure into an external file, with respect to the executable file. The executable file and the at least one external file, when present, thus form a file set. The data structure (also called in this disclosure "accelerating data structure") includes an offset for an at least one bit corresponding to an invocation of an API entity and data for determining the relocation value. The acceleration is already achieved thanks to the decrease in the number of data structures (and functions) which need to be accessed to perform the relocation: for example, instead of the relocation data section, the symbol table section, and further structures or functions (e.g. the string table section and the hash function) with their own addresses, only the accelerating data structure may need to be accessed (i.e., for example, instead of at least three addresses which have to be obtained via a section header table of the executable file, one such address may need to be obtained). However, the acceleration is even higher in case of the use of further features, favourably combining with the above. For example, the accelerating data structure does not need to contain as many indexes as a set consisting of the relocation data section, the symbol table section, and the string table section. Hence, the accelerating data structure with a higher probability may be loaded into the RAM (e.g. from an external memory or an external communication device) and consequently accessed more quickly than the sequence of the sections, for example, 150RS1, 155 and 154, in Fig. 3. Also, for example, the section comprising the at least one bit corresponding to the API invocation may include further bits, corresponding to more invocations of the same API entity or to other invocations requiring relocation. In such cases, performing the relocations based on accessing still the same accelerating data structure, rather than repeating the sequence of readings from the relocation data section, symbol table section and string table section, allows further improving the load time of the program. Additionally, in cases of API identifiers (as used in the API table) being different from the API entity names, the accelerating data structure allows finding the identifier while bypassing accessing the API entity name and calculating an identifier function (for example, the hash function). Overall, the inventors have been able to accelerate the loading in some tests about twenty times.

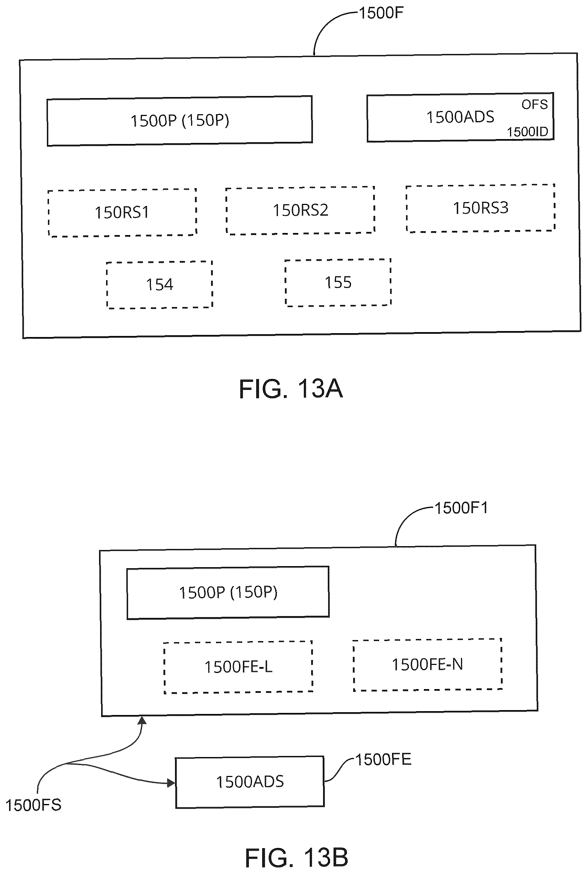

Fig. 13A schematically shows an example of an executable file 1500F according to the present disclosure, for a MMU-less device, which may be configured as any of the MMU-less devices described previously with a change in a loader component to make use of the acceleration capability provided by the executable file 1500F. Also, as already discussed, the MMU-less device may use different API entity identifiers, i.e. not necessarily the hash values of the names of the API entities. The file 1500F comprises a program 1500P which may be the same as, for example, the program 150P in Fig. 3. That is, the program 150P may include an invocation of an API of the MMU-less device (such as invocations 151-1, 151-2, 151-3; 151A-1,151A-2; 151B-1 in Fig. 3; but 151-3 for a particular example). Also, the executable file 1500F includes a data structure 1500ADS (the accelerating data structure). The data structure 1500ADS includes (a) an offset OFS of an at least one bit corresponding to the API invocation 151-3 in the section 150PS1 comprising the API invocation 151-3, along with (b) an identifier 1500ID of an API entity subject to the invocation 151-3. Herein, the section 150PS1 including the API invocation 151-3 is an example of an allocatable section subject to loading into the RAM of the MMU-less device from the executable file 1500F.

The identifier 1500ID may be the same as the name 140N-2, or it may be presented by a hash value of the name 140N-2 (this hash value may be any of 150-1 to 150-n, for example, it may be assumed to be 150-1), or it may be based on another identifier function of the name 140N-2 (for example, an injective function defined on the whole set of the API entity names). The identifier being the name is more useful, i.e. provides a larger share of possible acceleration for MMU-less devices with the API table composed of names of the API entities paired with addresses of the API entities; although, it is useful also for other MMU-less devices, in which the API table has identifiers based on the identifier function, because the loader component may be configured to calculate the identifier function. The identifier presented by the hash value of the name is useful for the MMU-less devices with the API table based on hash values of the API entity names.

The data structure 1500ADS may present only a part of the executable file 1500F. Also, it may be external to the program 1500P. It may be presented by a section in the executable file 1500F, i.e. the section header table of this file may be modified to appropriately include an address of the data structure 1500ADS. Alternatively, the data structure 1500ADS may be presented by an orphan data structure in the file 1500F, for example, an orphan data structure placed after a certain symbol.

Further, the data structure 1500ADS may correspond to one whole relocation data section, for example, it may correspond only to the relocation data section 150RS1 (i.e. include all offsets from the relocation data section 150RS1, along with identifiers of the API entities for relocations for API invocations 151-1, 151-2 and 151-3, along with section header indices and associated value symbols for cross-section relocations 152-1 and 152-2; and optionally along with types of relocations) and not include offsets copied from other relocation sections, such as 150RS2 and 150RS3; or the data structure 1500ADS may correspond to a plurality of relocation data sections, for a particular example all relocation data sections present in the executable file (150RS1, 150RS2 and 150RS3 in Fig. 3). On the one hand, when the accelerating data structure such as 1500ADS in the file 1500F corresponds to one relocation data section (and consequently to one allocatable section of the program 150P), similarly configured data structures may correspond to the rest of relocation data sections, and also merged into the file 1500F. In such a case, each individual accelerating data structure is smaller in volume than when the accelerating data structure corresponds to two or more relocation data sections, and hence each individual accelerating data structure with a higher chance is loadable into the RAM. On the other hand, when the accelerating data structure corresponds to two or more relocation data sections, less time is needed for searching for such data structures in the executable file and possibly attempting to load them into the RAM.

Optionally, the executable file 1500F may include sections 150RS1-150RS3, symbol table 155, and string table 154. The file with such data may be used by MMU-less devices with different loader components: the MMU-less device with a loader component changed to search only for the accelerating data structure would find, besides the program, only them in the executable file; however, if the executable file 1500F includes all data from the file 150F, also the MMU-less device would be capable of using this file, just without the acceleration. In a further example, the loader component may be configured first to determine if the file includes the accelerating data section(s), or not; and use either the accelerating data section 1500ADS or the sections 150RS1-150RS3, symbol table 155, and string table 154 from the file 150F when such data are included into the executable file 1500F, depending on result of the determination.

Fig. 13B schematically shows an example of a file set 1500FS according to the present disclosure. The file set includes (a) an executable file 1500F1 including the program 1500P and (b) an external file 1500FE, with respect to the executable file 1500F1. The external file 1500FE comprises the accelerating data structure 1500ADS. That is, in the present example, the executable file 1500F1 is different from 1500F because the file 1500F1 does not need to be adapted to include the accelerating data structure. The search for the accelerating data structure 1500ADS outside of the file 1500F1 may be performed by an accordingly modified loader component of the MMU-less device. Fig. 13B does not show relocation data sections 150RS1-150RS3, symbol table 155 and string table 154 as present in the executable file 1500F1, but these data structures may be present in this executable file 1500F1, i.e. they are optional, in the same way as for the file 1500F, and may provide compatibility for MMU-less devices with differently configured loader components.

Also optionally, a location 1500FE-L and/or name 1500FE-N of the external file 1500FE is referred to in the executable file 1500F1. Alternatively, or additionally, the location 1500FE-L and/or name 1500FE-N of the external file 1500FE relates according to one of a plurality of predetermined rules to a location of the executable file 1500F1 and/or a name of the executable file 1500F1. The location 1500FE-L may be presented, for example, a Uniform Resource Locator (URL), for instance, an absolute URL or a relative URL (or link). The name 1500FE-N may, for example, be presented by a longer string than the name of the executable file 1500F1, having the same prefix as the name of the executable file 1500F1. For instance, for the executable file named "AlarmApp.elf", the name 1500FE-N may start with "AlarmApp-FastLoadingData", "AlarmApp-FL", or "AlarmApp-QuckLoading", etc. The predetermined rule, employable by the loader component modified to try the accelerated loading may then, for example, include at least one from: search for an external file called with the first possible name 1500FE-N in the same directory as the executable file 1500F1 (and try loading the program 1500P into the RAM using the data structure from this external file, possibly after checking the validity by a checksum or another technique); search for a file called with the second possible name 1500FE-N in the same directory executable file 1500F1, etc.; search for any file in the same directory as the executable file 1500F1; search for an external file called with the first possible name 1500FE-N in a neighboring directory in the same external memory as the executable file 1500F1; search for an external file called with the second possible name 1500FE-N in the neighboring directory in the same external memory, etc; search for any file in the same external memory as the executable file 1500F1; search for an external file using a first absolute URL; for an external file using a second absolute URL, etc. The loader component may thus be configured to process the respective strings to try to read the external file 1500FE using one of the predetermined rules.

Further, as it can be seen from Figs. 13A and 13B, the data structure 1500ADS included in the executable file 1500F or the file set 1500FS may not include or intersect with the relocation data section 150RS1 corresponding to the section 150PS1 including the API invocation 151-3 (even when the relocation data section 150RS1 is present in the executable file, e.g. when such an option is realized in Fig. 13A for the file 1500F). Alternatively, or additionally, the offset OFS recorded in the data structure 1500ADS is a copy of the offset OFS recorded in the relocation data section, in this example 150RS1, of the executable file 1500F (or 1500F1, when the option that relocation data sections 150RS1-150RS3, symbol table 155 and string table 154 are included in the executable file is implemented).

Similarly, as it can be seen from Figs. 13A and 13B, the data structure 1500ADS included in the executable file 1500F or the file set 1500FS may not include or intersect with a string table section of the executable file, e.g. the string table section 154 (when it is present in the file 1500F or 1500F1). Alternatively, or additionally, the identifier 1500ID stored in the data structure 1500ADS is a copy of a name stored for the API invocation (such as 151-3) in a string table section (such as 154) in the executable file 1500F or 1500F1, e.g. the name 140N-2; or is a hash value calculated based on this name (assumed above to be 150-1, where the hash function matching the MMU-less device's API table is used).

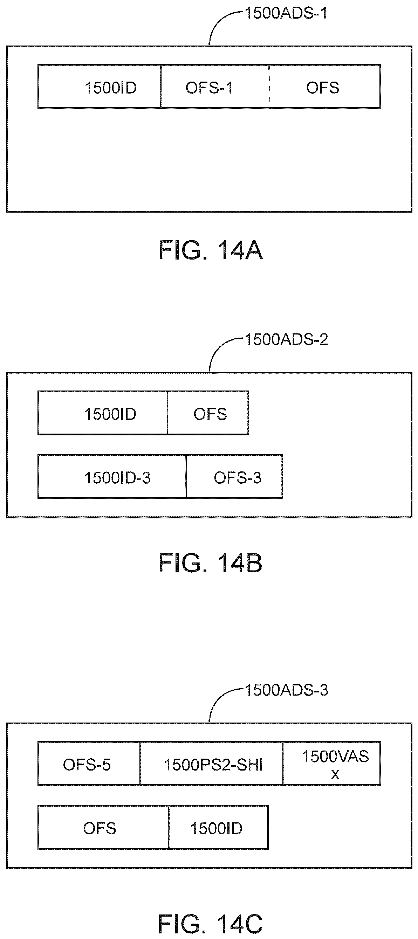

Referring to Fig. 14A, it schematically provides an example of the data structure 1500ADS-1 according to the present disclosure which allows the MMU-less device to load the program such as 150P with even more acceleration, when the section including the API invocation (for example, the section 150PS1, including the invocation 151-3 in the above examples) includes at least one more invocation of the same API entity (i.e. for example, the invocation 151-1 is for the same API entity, corresponding to the name 140N-2 or hash value 150-1 of the name 140N-2). In such a case, the accelerating data structure may include, and in the example 1500ADS-1 of Fig. 14 includes, at least one more offset of an at least one bit corresponding to this at least one more invocation of the same API entity: in the example of Fig. 14A, there is one more such offset, OFS-1. This offset could be recorded into the data structure 1500ADS-1 from the relocation entry 150RS1-1, shown in Fig. 3. Further, when the option that the relocation data section 150RS1 is present in the executable file such as 1500F (modified to include the data structure 1500ADS-1) or 1500F1 is implemented, then the at least one more offset 150RS1-1 in the data structure 1500ADS-1 is a copy of this an least one more offset recorded in the relocation entry 150RS1-1 in the relocation data section 150RS1 in the same executable file. The data structure 1500ADS-1 may be used instead of the data structure 1500ADS in the examples of Figs. 13A and 13B.

Additionally, as shown in Fig. 14A, the offset OFS-1 may be placed or recorded immediately adjacent within the data structure 1500ADS-1 to the offset OFS. In such a case, the loader component of the MMU-less device may more quickly perform two relocations using the same identifier 1500ID at two different offsets.

Fig. 14B schematically provides another example of a data structure (1500ADS-2) which according to the present disclosure allows the MMU-less device to load the program such as 150P with more acceleration than when the accelerating data structure is used for only one API invocation. In the present example, the section including the API invocation (for example, the section 150PS1, including the invocation 151-3 in the above examples, of the API entity with the name 140N-2) includes an invocation of another API entity (for example, 151-2 in Fig. 3, assumed herein to invoke the API entity with the name 140N-1). To allow the acceleration, the data structure 1500ADS-2 includes an offset OFS-3 of an at least one bit corresponding to the invocation of this another API entity along with an identifier 1500ID-3 of this another API entity. For example, the offset OFS-3 may be a replica or a copy of the offset stored in the middle relocation entry in the relocation data section 150RS1 in Fig. 3 (this entry could be referred to as 150RS1-3, but this reference is omitted in Fig. 3). The identifier 1500ID-3 may be presented by the name 140N-1 or its hash, if it is to completely match the key in the API table of the MMU-less device, and the API table is based on hash values or sorted hash values, paired with addresses of the API entities, as discussed above. When the identifier 1500ID-3 is the name 140N-1, and the string table 154 is present in the executable file, this identifier is a copy of the name stored in the string table section, in the sense that it presents the second instance of the record of this name in the executable file. If the string table 154 is removed or modified in the executable file, such as 1500F or 1500F1, so that there is no name 140N-2 in the second entry of this table, then the identifier 1500ID-3 may be a copy of the name 140N-1 in the generation sense, i.e. there may be even only one instant left of the record with this name in the executable file.

Fig. 14C provides another example of a data structure (1500ADS-3) according to the present disclosure allowing the MMU-less device to load the program such as 150P with more acceleration than when the accelerating data structure is used for only one API invocation. In the present example, the section including the API invocation (for example, the section 150PS1, including the invocation 151-3 in the above examples, of the API entity with the name 140N-2) includes an invocation to the same or another allocatable section of the program: such invocations are referred to as 152-1 and 152-2 in the section 150PS1 in Fig. 3. In the present example, the data structure 1500ADS-3 includes an offset OFS-5 of an at least one bit corresponding to the invocation 152-2; a section header index 1500PS2-SHI of the allocatable section 150PS2 (based on the symbol table 155 in Fig. 3, this section is "another allocatable section" for the invocation 152-2); and a value associated symbol 1500VAS of value x (as it is recorded in the third line in the symbol table 155 in Fig. 3) relating to the invocation 152-2 to the aforementioned, in this case another, allocatable section 150PS2. Optionally, i.e. when unmodified relocation section 150RS1 is kept in the executable file, the offset OFS-5 may be a copy, i.e. the second instant, of the offset recorded, for the at least one bit corresponding to the invocation 152-2 to the section 150PS2, in the relocation data section 150RS1 (in its entry 150RS1-5) of the executable file corresponding to the section 150PS1 including the API invocation 151-3. Additionally, or alternatively, when the unmodified symbol table 155 is kept in the executable file, the section header index 1500PS2-SHI of the section 150PS2 and the value associated symbol 1500VAS may be copies, i.e. second instances, stored in the symbol table section of, respectively, a section header index of the section 150PS2 and a value associated symbol x relating to the invocation 152-2 to the allocatable section 150PS2. The additional acceleration provided by such a data structure is due to avoiding the need to access the relocation data section and the symbol table.

Further, the executable file 1500F or the file set 1500FS may use instead of the data structure 1500ADS not only one of the modifications 1500ADS-1, 1500ADS-2 or 1500ADS-3 above, but also a further modification including all offsets corresponding to invocations requiring relocation in the section including the API invocation (i.e. all offsets which originally are recorded in the relocation data section 150RS1 corresponding to the allocatable section 150PS1 including the API invocation 151-3 in the present example). On the one hand, optionally, such a modification does not include an offset of any invocation requiring relocation in a different section of the executable file, i.e., for example, does not include a copy of any offset recorded in the relocation data sections 150RS2 and 150RS3 in Fig. 3. This allows loading the data structure into the RAM with a higher chance. On the other hand, optionally, the accelerating data structure includes one or more, or even all offsets, for invocations requiring relocation in different sections of the executable file. In such a case, search and readings of a plurality of different structures, such as relocation data sections, symbol table and string table, would not be needed.

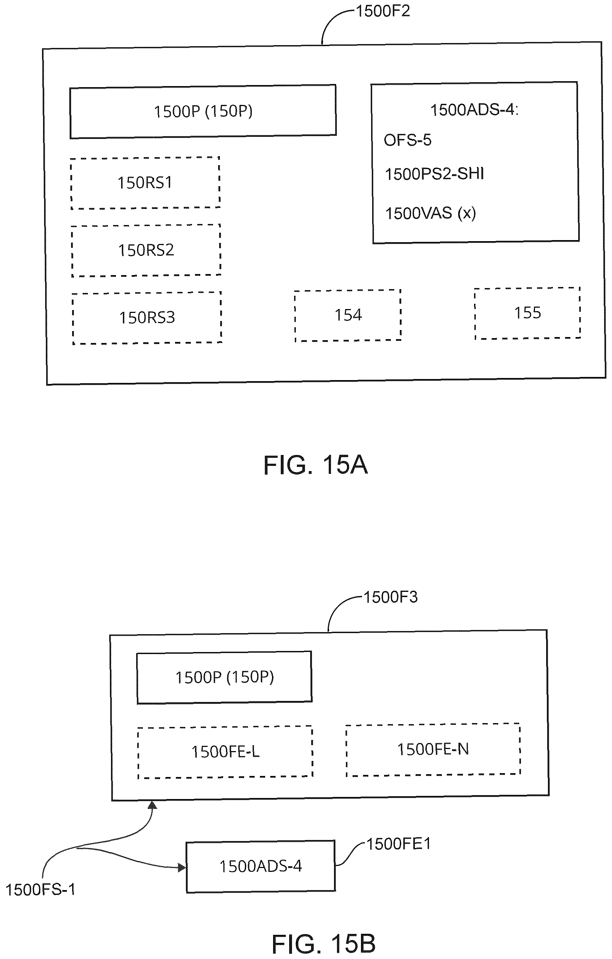

In yet a further, but a similar aspect, the present disclosure provides for acceleration of the loading based on packing the information used by one or more cross-sectional invocations into one data structure. For example, irrespectively on how relocations are performed for invocations 151-1, 151-2 and 151-3 shown in Fig. 3, the acceleration may be independently provided based on accelerating the relocation of invocation 152-1 and/or 152-2. In this regard, Fig. 15A schematically presents an example of an executable file 1500F2 including the program 1500P (or 150P) for the MMU-less device with the RAM. The program includes a first and a second allocatable sections, 150PS1 and 150PS2, and the first allocable section 150PS1 includes an invocation 152-2 from this section 150PS1 to the second allocatable section 150PS2. The executable file 1500F2 includes a data structure 1500ADS-4 including the offset OFS-5 of an at least one bit, corresponding to the invocation 152-2, in the first allocatable section 150PS1; the section header index 1500PS2-SHI of the second allocatable section 150PS2; and the value associated symbol 1500VAS (of value x) relating to the invocation 152-2. It should be noted that the actual order of the sections is irrelevant here: by the first section any section which includes the cross-section invocation such as 152-1, 152-2, 152A-1, 152A-2, 152B-1, and 152B-2 is meant, that is also the section 150PS2 or 150PS3 may be understood as the first allocatable section for the respective invocation; and the second allocatable section is any section into which the invocation is directed. While the acceleration is generally not so high as in the API invocation case (because without the acceleration only the relocation data section and the symbol table 154 may be involved in the relocation of the cross-sectional invocation, while the string table, in contrast to the API invocations, did not have to be involved in any case), still there is a reduction in the number of data structures whose addresses, within the executable, such as ELF, file, would need to be found and which would then need to be accessed; and, consequently, there is a reduction in the load time.

Similarly to as it has been described with the reference to Fig. 13B, also the accelerating data structure 1500ADS-4 may be placed in an external file: this is presented in the example of Fig. 15B. Therein, the executable file 1500F3 may correspond to the executable file 1500F1, and it forms a file set 1500FS-1 with the external file, 1500FE1, presenting by itself or including therein the accelerating data structure 1500ADS-4.

Also for the external file 1500FE1 and the executable file 1500F3 of the file set 1500FS-1 it remains that a location and/or name of the external file may be referred to in the executable file; and/or the location and/or name of the external file may relate according to one of a plurality of predetermined rules to a location of the executable file and/or a name of the executable file.

In the same way, the data structure 1500ADS-4 may not include or intersect with the relocation data section 150RS1 corresponding to any section, and in particular the section 150PS1 including the invocation 152-2, if the relocation data section 150RS1 is present in the executable file (this section 150RS1 is shown as optional in the file 1500F2, and is optional, but not shown as such, in the file 1500F3). Similarly, alternatively or additionally, the offset OFS-5 recorded in the data structure 1500ADS-4 may be a copy of the offset recorded, for the at least one bit corresponding to the invocation 152-2, in the relocation data section 150RS1 (in its entry 150RS1-5).

Additionally, or alternatively, the data structure 1500ADS-4 may not include or intersect with the symbol table (if it is present) in the executable file, such as the symbol table 155. Also additionally, or alternatively, the section header index (such as 1500PS2-SHI) of the second allocatable section (such as 150PS2) and the value associated symbol (such as 1500VAS) relating to the invocation (such as 152-2) may be copies of, respectively, the section header index of the second allocatable section 150PS2 and the value associated symbol (x) relating to the invocation 152-2 in the symbol table (e.g. 155).

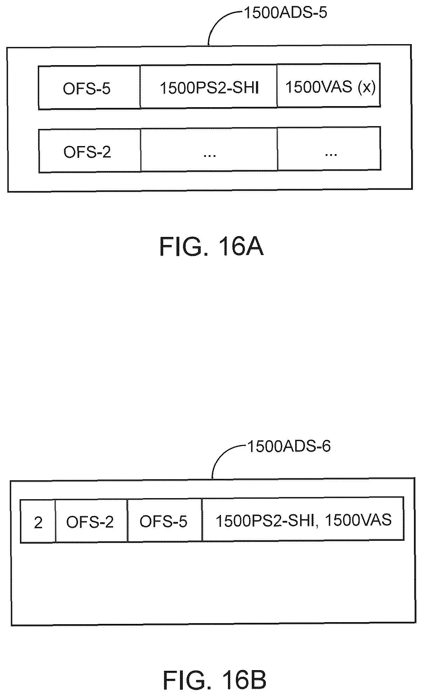

Fig. 16A schematically shows an example of the data structure 1500ADS-5 which presents a modification of the structure 1500ADS-4 and may be used instead of it in the file set 1500FS1 or the executable file 1500F2. In particular, the data structure 1500ADS-5 is useful in the case of the first allocatable section 150PS1 including an at least one more invocation: for example, invocation 152-1, to any of the allocatable sections 150PS1, 150PS2 and 150PS3, i.e. the same or different section with respect to the first allocatable section 150PS1. The data structure 1500ADS-5 includes an at least one more offset OFS-2 of an at least one bit corresponding to this at least one more invocation 152-1 in the first allocatable section 150PS1. Also, it may include a section header index and a value associated symbol, corresponding to this at least one more offset OFS-2.

In this regard, Fig. 16B shows an example of a further modification, 1500ADS-6, of the accelerating data structure, which may be used instead of the structure 1500ADS-5 in the file set 1500FS1 or the executable file 1500F2. The data structure 1500ADS-6 includes for the at least one more invocation 152-1 a same information or data (the section header index, the value associated index, and possibly a type of the relocation), with an exception of the offset, as for the invocation 152-2. The data structure 1500ADS-6 may be packed by placing the respective different offsets immediately adjacent to each other, as shown in Fig. 16B, in any order. Also, a number of the offsets corresponding to the same other relocation information may be specified in this and other data structures (starting from 1500ADS); for example, "2" indicates such a number in Fig. 16B.

Also, the acceleration of the relocation process would be provided for an invocation from the first allocatable section to itself, i.e. to the intra-section invocation, irrespectively of the presence of any other allocatable section, in the case when the invocation requires relocation. That is, an executable file may include a program for a MMU-less device with a RAM; and the program may include an allocatable section including an invocation from this section to itself, where the invocation may require relocation. In such a case, loading may be accelerated by including into the executable file a data structure including. an offset of an at least one bit, corresponding to the invocation, in the allocatable section; and a value associated symbol relating to the invocation. Further, optionally, the data structure may include a section header index of the allocatable section (it may be used by the loader component, if, for example, there is no flag indicating that the invocation is of intra-section type). Consequently, all above examples relating to the first and section allocatable sections would apply to the present case, just in the modified form, by conflation of the first and second allocatable sections. For example, the accelerating data structure may be recorded in a different file of the same file set which includes the executable file.

The accelerating data structure may be modified to include all offsets corresponding to invocations requiring relocation in the first allocatable section, such as the section 150PS1, 150PS2, or 150PS3, or even a section with three or more cross-section or intra-section invocations and without any API invocations. Optionally, the accelerating data structure may not include an offset of any invocation requiring relocation in a different section of the executable file; this is useful for increasing the chance that the data structure would be loadable into the RAM. Alternatively, the data structure may include offsets of all invocations, including at least one cross-section or intra-section invocation, in a plurality of the allocatable sections, or even in all allocatable sections.

Each of the data structures, starting from 1500ADS, may be only a part of the respective executable file. Alternatively, or additionally, each of these modifications may be a section in this executable file or an orphan data structure in this executable file.

Alternatively, or additionally, each of the data structures, starting from 1500ADS, may be less than 32 kB; or 64 kB, or 128 kB, or 256 kB in volume.

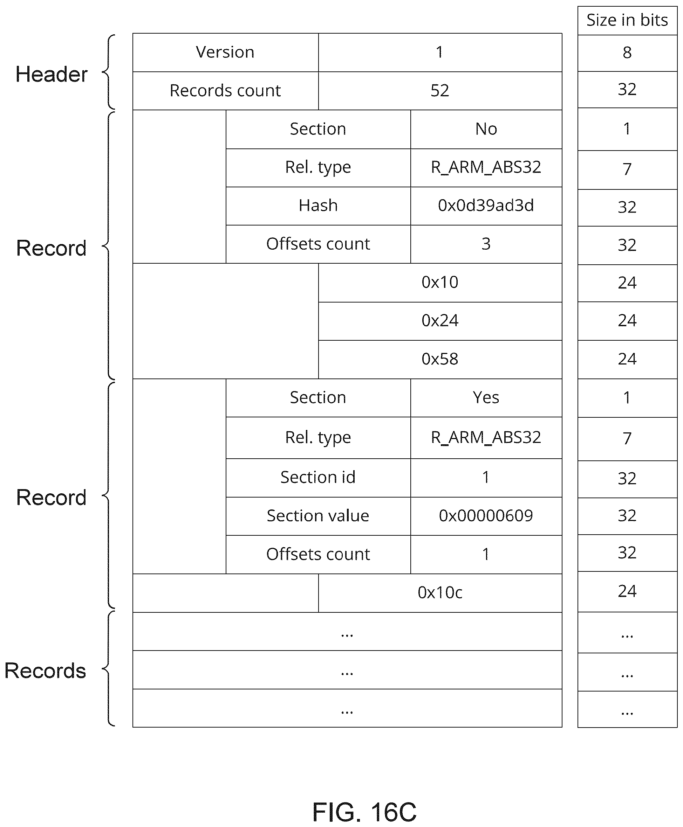

Fig. 16C shows an example, simplified from the practical implementation, of an accelerating data structure for one allocatable section including several invocations requiring relocation. The allocatable section used in this example was ".text". The respective original relocation data section had the name ".rel.text". The accelerating data structure has been placed into the executable file and has been named ".fast.rel.text". The loader component of the MMU-less device was configured to search for sections with the name prefix ".fast.rel." among the section headers in the section header table to check for the possibility of the accelerated loading. The structure shown in Fig. 16C has pre-determined sizes and sequence of the fields, known to the loader component (the sizes presented in the separate column on the right to the accelerating data structure in Fig. 16C). However, the number of some fields changes: for example, offset count of value 3 indicates to the loader component that three relocations have to processed by using the relocation value found in the API table using the identifier being a hash 0x0d39ad3d. If the identifiers of variable length / sizes are used, then the loader component may be configured to determine the end of the field by a special symbol (for example, as in the case of null-terminated strings). Another way is to add a field of a fixed size to specify the size of the following field.

The executable file or the file set, according to any of the examples in the present disclosure, or the accelerating data structure described in any of these examples, may be stored in a storage or memory medium, readable by a computer, and/or readable by the MMU-less device for receiving and executing the program. In other words, the executable file or the file set, or the accelerating data structure may be stored in the computer-readable memory or in the external memory of the MMU-less device (which may be presented by a stand-alone device; and/or portable device; and/or a card chip, etc, as disclosed above).

In view of the above, the present disclosure also provides a method of generation of at least one of an executable file and a file set. The method includes accessing a partially-linked executable file (which may be an ELF file), generating a data structure based on the partially-linked executable file, and at least one of
(a) storing the data structure in an external file, with respect to the partially-linked executable file, to generate a file set, where the data structure is configured to complete the partially-linked executable file to the file set according to any respective example in the present disclosure; and
(b) merging the data structure into the partially-linked executable file, or its copy, where the data structure is configured to modify the partially-linked executable file into the executable file according to any respective example in the present disclosure.

Also, as it follows from the provided examples, the method may include copying the offset of the at least one bit corresponding to the invocation into the data structure from a relocation data section (such as 150RS1, 150RS2 or 150RS3) in the partially-linked executable file. Additionally, the method may include obtaining the identifier of the API entity by accessing an entry corresponding to the invocation in a symbol table section (such as 155) in the partially-linked executable file and reading a name of the API entity based on this entry in a string table section (such as 154) in the partially-linked executable file.

Herein, obtaining the identifier may be include using the name of the API entity as the identifier of the API entity. Alternatively, it may include calculating a hash function of the name of the API entity and using it as the identifier of the API entity, where the hash function is the same with which the API table of the MMU-less device is built.

In the similar way, the method may include copying the section header index and the value associated symbol into the data structure from a symbol table section (such as 155) in the partially-linked executable file.

Then, the method may include modifying a section header table of the partially-linked executable file to refer to the data structure as a section. Alternatively, or additionally, the method may include modifying or removing at least one of the relocation data section, the symbol table section, and the string table section from the partially-linked executable file, for example, to allow its easier transmission. At the same time, the executable file may remain to be the ELF file.

The generation method according to any of the above examples may be computer-implemented. Also, the present disclosure therefore provides a script or a program for a computer to generate the file or file set according to any of the respective examples disclosed herein. The script may be executed, for example, by the pre-processor (the standalone preprocessor; the preprocessor of the compiler, where the preprocessor is separately invokable; or the compiler).

Also, as it follows from the above, the present disclosure provides a method for use in performing relocation, for a program for a MMU-less device. The method includes loading into a RAM of the MMU-less device, from the executable file or the file set according to any one of the disclosed examples, at least one accelerating data structure, and loading into the RAM, from the executable file or the file set according to this any one of the disclosed examples, respectively, the section including the API invocation; or the allocatable section including the invocation from this section to itself; or the first allocatable section and the second allocatable section.

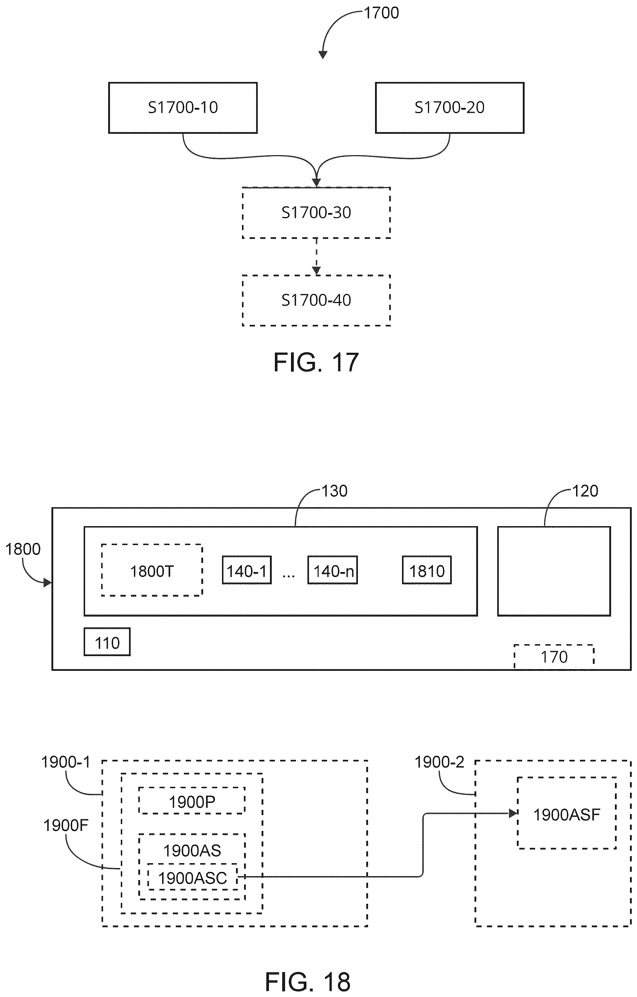

In a specific example, the method may then be a method 1700 for use in preparing for or performing a relocation, for a program for a MMU-less device, and for use in preparing the MMU-less device for execution of the program. The method 1700 is schematically illustrated in Fig. 17: it may include a step S1700-10 of loading an allocatable section from the program into a RAM of the MMU-less device, where the allocatable section includes at least one bit corresponding to an invocation of an API entity requiring the relocation; and it may include a step S1700-20 of loading into the RAM a data structure, including (a) an offset of the at least one bit corresponding to the API invocation in a section comprising the API invocation, along with (b) an identifier of an API entity subject to the invocation.

Alternatively, step S1700-10 may be loading a first and a second allocatable sections from the program into a RAM of the MMU-less device, where the first allocatable section includes at least one bit corresponding to an invocation from the first allocatable section of the program to the second allocatable section requiring the relocation, and the step S1700-20 may be loading into the RAM a data structure, including an offset of the at least one bit in the first allocatable section along with a section header index of the second allocatable section and with a value associated symbol relating to the invocation.

Yet alternatively, step S1700-10 may be rather of loading an allocatable section including an invocation from this allocatable section to itself, where the invocation requires relocation; and step S1700-20 may be rather of loading a data structure including an offset of an at least one bit, corresponding to the invocation, in the allocatable section; where the data structure also includes a value associated symbol relating to the invocation.

Steps S1700-10 and S1700-20 do not have to be performed in a specific order, i.e. step S1700-10 may be performed before or after or, if possible, in part concurrently, with the step S1700-20. The relocation step, S1700-30, may be performed after both steps S1700-10 and S1700-20 are performed.

The method may further include a step S1700-40 of releasing a part of the RAM occupied by the data structure before executing the program.

The MMU-less device may perform the step S1700-20 in any of the variations by reading the data structure stored in an external memory of the MMU-less device or receiving or reading the data structure from an external communication device, with respect to the MMU-less device. Similarly, the MMU-less device may perform the step S1700-10 in any of the variations from the external memory or the external communication device. In all examples, the MMU-less device may include a built-in non-volatile memory storing an API table of API entity identifiers and addresses, including a plurality of identifiers, being or corresponding to a plurality of names of API entities and paired with a plurality of addresses of the API entities. The plurality of identifiers in the API table may be pre-sorted.

Furthermore, it follows from the above that the present disclosure also provides a MMU-less device for receiving and executing a program comprising an invocation of an API of the MMU-less device. In the present examples, the MMU-less device includes an at least one processing unit, a RAM, and a built-in non-volatile memory storing API entities, and its organization may be the same, as, for examples, in Fig. 2, 5, 10, 11 or 12, with the following modifications:
(a) hash values 150-1, 150-2, ..., 150-n of the names of the API entities do not have to be sorted in the API table and may be not hash values, but other identifiers of the API entities, for example names of the API entities or identifiers based on the different identifier function (an injection function, but not a hash function); although the case in which the identifiers are the hash values, and the identifiers are sorted in the API table, remains to be one of the preferred; and
(b) the loader component 210 or 510 is modified as discussed below.

Hence, the built-in non-volatile memory of the MMU-less device stores an API table of API entity identifiers and addresses, including a plurality of identifiers, being or corresponding to a plurality of names of API entities and paired with a plurality of addresses of the API entities, the built-in non-volatile memory or the RAM stores a loader component for reading the executable file or the file set according to any one of the provided examples, to load the at least one executable section from the executable file, including the program, into the RAM, the loader component is configured to perform a relocation at an at least one bit, corresponding to the API invocation, in the section including the API invocation and being (a) the at least one executable section or (b) another allocatable section subject to loading into the RAM from the executable file, by accessing the data structure from the file set or the executable file according to any one of the respective examples.

In the same way, the present disclosure provides a MMU-less device for receiving and executing a program including an invocation of an API of the MMU-less device, where the MMU-less device includes an at least one processing unit, a RAM, and a built-in non-volatile memory storing API entities, where the built-in non-volatile memory stores an API table of API entity identifiers and addresses, comprising a plurality of identifiers, being or corresponding to a plurality of names of API entities and paired with a plurality of addresses of the API entities, the built-in non-volatile memory or the RAM stores a loader component for loading an at least one executable section from an executable file, including the program, into the RAM, the loader component is configured to perform a relocation for an at least one bit, corresponding to the API invocation, in a section comprising the API invocation and being (a) the at least one executable section or (b) another allocatable section subject to loading into the RAM from the executable file, by accessing a data structure, being a part of the executable file or being external to the executable file, and comprising an offset of the at least one bit in the section comprising the API invocation along with an identifier of an API entity subject to the invocation.

Similarly, the present disclosure provides a MMU-less device for receiving and executing a program including an invocation from a first allocatable section of the program to a second allocatable section of the program, where the MMU-less device includes an at least one processing unit, a RAM, and a built-in non-volatile memory, where the built-in non-volatile memory or the RAM stores a loader component for loading the first and second allocatable sections from an executable file, comprising the program, into the RAM, and the loader component is configured to perform a relocation at an at least one bit, corresponding to the invocation, by accessing the data structure from the file set or the executable file according to any one of respective examples.

Also similarly, the present disclosure provides a MMU-less device for receiving and executing a program including an invocation from a first allocatable section of the program to a second allocatable section of the program, where the MMU-less device includes an at least one processing unit, a RAM, and a built-in non-volatile memory, where the built-in non-volatile memory or the RAM stores a loader component for loading the first and second allocatable sections from an executable file, comprising the program, into the RAM, and the loader component is configured to perform a relocation at an at least one bit, corresponding to the invocation by accessing a data structure, being a part of the executable file or being external to the executable file, and including an offset of the at least one bit in the first allocatable section along with a section header index of the second allocatable section and with a value associated symbol relating to this invocation.

Accordingly, the present disclosure also provides a corresponding firmware for each of the respective MMU-less devices and provides a computer-readable memory storage (or a computer-readable data carrier), which optionally may be readable by the MMU-less device, and which stores the firmware or the loader component of any of the Examples in the present disclosure, discloses above or below.

In yet a further aspect of the present disclosure, the inventors have found that it is possible to efficiently allow various programs to access asset files, when such a program, built with at least one invocation of the access to an at least one asset file, is loadable into the MMU-less device, for example, in the especial case, into its RAM. Herein, the MMU-less device may be configured according to any of the examples above, or it may be a different MMU-less device. For example, a suitable MMU-less device may have an API table, in which identifiers of API entities are the hash values discussed above, or the API table may use other identifiers. That is, a suitable API table may again be a table of API entity identifiers and addresses; in some cases, a table including a plurality of identifiers, being or corresponding to a plurality of names of API entities, and paired with a plurality of addresses of the API entities, respectively. Such a plurality of identifiers, corresponding to the plurality of names of API entities, may be presented by the plurality of the hash values of the names of the API entities. However, for the aspect of using the one or more asset files from the external memory, as well as for the previously discussed aspect of acceleration of the load time of the program, the plurality of identifiers may be presented even just by the names of the API entities, or by other identifiers of API entities based on the names of the API entities. For example, the identifiers may be of different lengths, when they are not presented by the hash values. The identifiers may be sorted or not sorted in the API table, independently of whether they are presented by the hash values or not. At the same time, the case, in which the identifiers are presented by the hash values of the names of the API entities, and the identifiers are sorted in the API table, remains among preferred, since it is desirable to limit the total preparation and loading time, while allowing using more memory, for usability. For the same reason, the usability is improved when the loading of the program is accelerated by one or more the techniques discussed above and at the same time the program can use the asset file(s) according to the techniques provided by the present disclosure.

Herein, the asset may be presented by a text, an image, a sound recording, a document, a map, a database, a graphic user interface (GUI) element, a website link or a Uniform Resource Locator (URL), a radio link and/or antenna configuration data (e.g. a frequency, modulation type, gain, power, or another technical or physical parameter), a reference set or pattern for encoding and/or decoding data, for example, binary data (or a text description of such a pattern), an encryption and/or decryption key, a rainbow table, etc. On the one hand, an asset file may be a data asset file and not include executable code to which the control would be transferred. On the other hand, an asset may be presented by a plug-in (or plugin, add-in, addin, add-on, or addon), i.e. a standalone executable component; and in some cases, such plug-in assets are as well considered as data assets: in particular, when the execution of the plug-in is optional and possibly rare for an initial version of program. For example, for any of the MMU-less devices with one, two, three, four, or more antennas described in the present disclosure, and one of them being an NFC antenna, the asset may include a plug-in for operating a NFC reader (e.g. a NFC card or tag reader), i.e. a plug-in for reading such a card or tag; and such an asset may be stored in one or more asset files. Additionally, or alternatively, the asset may include a configuration (in particular, one or more physical or technical parameters) for one or more antennas or transceiving sections of the MMU-less device, and it also may be stored in one or more asset files, for example, different from the plug-in file(s).

According to the present disclosure, the MMU-less device may be configured to access one or more asset files from an external memory when it executes a program from the RAM or other internal memory, such as a non-volatile built-in memory. This allows to increase the total size of the assets available to the program. However, the preparation time before running the program has to be taken into account, and it may include time needed for copying or moving the files which may be used during the execution of the program. Further, this time may include time for instructing this copying, for example, for instructing downloading of the chosen files from a server or a remote developer computer and recording them into a memory storage for use as the external memory of the MMU-less device. The downloading procedure may be performed, for example, via a local computer or another local device, and using, for instance, a non-volatile chip storage (and/or a non-volatile on-chip) storage as the external memory. Also, the server may be unavailable at certain times, hence downloading of all files is desirable.

This can be achieved by the technique of the inventors in which instructing the downloading and further steps may be performed by packing the program and content for one or more asset files into a same executable file, for example, an ELF (elf)-formatted file.

The file may be partially-linked, or at least one or more of its allocatable sections has at least one bit recorded as requiring a relocation. Such a record may be located, for example, in a respective relocation section. The executable file may include a header, a program header table, a section header table, and one or more sections, possibly with their own headers. At least one of the sections is assumed to be allocatable, and at least one the allocatable sections is executable. The allocation may be performed into the RAM, or in some configurations, into other internal memory of the MMU-less device.

That is, according to the present disclosure, the content for one or more asset files is merged along with the program into the executable file, which in other respects may have a structure as any executable file disclosed above (for example, such a file may be configured for allowing the fast loading of the program into the RAM by merging the accelerating data structure or section into the same executable file). This is despite that asset files, especially data asset files, and allocatable sections have different eventual destinations.

In particular, according to the present disclosure, an asset section is generated to store the content for one or more asset files, and this section is merged into the executable file. This may include amending, for example, the ELF header and the section header table; but the program header table, various allocatable sections and other sections may be undisturbed. The number of asset files may be two, or three, or four, or more. Packing content for a plurality of asset files into the same asset section can increase the effect.

Fig. 18 schematically shows an example of a memory management unit-less (MMU-less) device 1800 with an application program interface (API) for executing a program. Also, the MMU-less device 1800 is configured for receiving the program, possibly using its API, and providing this program an access to an asset file. The MMU-less device 1800 includes an at least one processing unit 110, a RAM 120, and a built-in non-volatile memory 130 storing API entities 140-1, ..., 140-n. Also, in the present example, the built-in non-volatile memory 130 includes an API table 1800T including identifiers of the API entities and respective addresses of the API entities; but the API table is optional, since addresses of the API entities may be known when the program is prepared. Further, the MMU-less device 1800 includes the interface 170 for receiving the program, as before. Various optional, for the present example, features, such as antennas, etc, are shown not in Fig. 18, but in other figures (where they may be not optional).

The built-in non-volatile memory 130 stores a loader component 1810 (a relocating loader). Additionally, or alternatively, in a variation, which is not shown, this component may be loaded into the RAM 120. This component is usable for loading an at least one executable section from an executable file 1900F (stored in the present example in an external memory 1900-1) into the RAM 120. The executable file 1900F includes a program 1900P; the executable section is a section of this program. At least one bit in this executable section, or in another allocatable section, corresponds to an API invocation and requires a relocation. The loader component 1810 is configured to perform this relocation.

Further, the loader component 1810 is configured to access an asset section 1900AS in the executable file 1900F (for example, it may be configured to analyse the header of the executable file and the section header table in the executable file 1900F; while the file may be stored in an external memory 1900-1). The asset section 1900AS in the executable file 1900F stores content 1900ASC for at least one asset file. The loader component 1810 is configured to use the asset section 1900AS to record an at least one asset file 1900ASF into an external memory 1900-2 (or the same external memory 1900-1) based on the content 1900ASC.

Accordingly, the present disclosure at the same time provides a firmware for the MMU-less device 1800, which initially includes an at least one processing unit, a RAM, and a built-in non-volatile memory. The firmware is configured for installation into the built-in non-volatile memory 130 and includes the API including API entities 140-1, ..., 140-n for receiving and executing the program 1900P and optionally the API table 1800T. The firmware includes the loader component 1810 configured to run from the built-in non-volatile memory 130 or the RAM 120, and configured to load an at least one executable section from the executable file 1900F including the program 1900P into the RAM 120. Also, the loader component 1810 is configured to access the asset section 1900AS in the executable file 1900F: this asset section is a section storing content 1900ASC for an at least one asset file. The loader component 1810 is configured to record the at least one asset file 1900ASF in an external memory 1900-2 (or the same external memory 1900-1) based on the content 1900ASC.

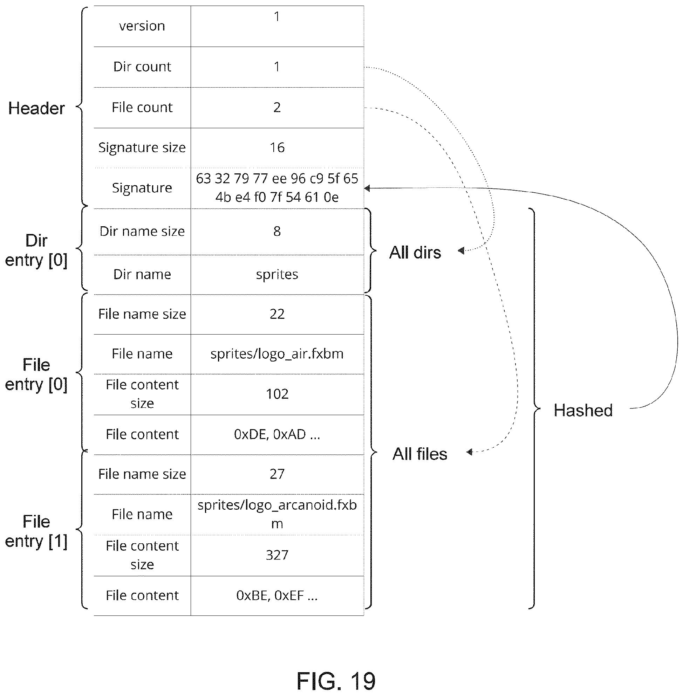

Fig. 19 provides a schematic example of the asset section 1900AS. In the present example, this section is configured for storing content of an initially unknown number of files (i.e. the number not predetermined for the MMU-less device): the section header in the example of Fig. 19 for convenience specifies in the field called File Count an actual number of the asset files (which are to be created in the external memory, either 1900-2 or 1900-1). It should be noted that the name of the field does not have to be stored in the asset section: such names are shown in Fig. 19 merely for the sake of clarity of this explanation. In other words, the structure of the actual asset section may be similar rather only to the right column in the table in Fig. 19. Also, the not predetermined number of files, in the present example, may be distributed between various directories, and a number of these directories is not predetermined as well. Hence, in the present example, the header of the asset section for convenience specifies a number of directories: the actual value is 1.

After the header, the asset section in Fig. 19 includes data indicating the first directory. In the present example, it is sufficient to specify a size of the directory name and a directory name.

After the first directory data, data associated with the first asset file in this directory may follow. Alternatively, it may be intended to leave the directory empty, for example, for use by the program as an output folder or a history folder. In the present case, this data includes a size of the file path (including the name) or of just name size, a file path or name, a file content size, and the content for the asset file. In the present example, the file path includes a prefix "sprites", while this prefix is presented also in the directory name field; hence this directory is not empty. In any case, in this way, even if such a repetition is considered redundant, the loader component may quicker replicate the intended file structure in the target external memory, 1900-2 or 1900-1, and then create asset files with the desired names there. Due to the specification of the file content size (which in the present example is not predetermined), the loader component can determine which data presents content for the first asset file, and where the remaining data starts. Then, the loader component may determine based on this remaining data, associated with the second asset file, what content has to be used for creating the second asset file.

Among the above data fields, according to the present disclosure, the content for the first asset file is not expected to be predetermined. Other data, such as file names, directories, paths (routes) and file content sizes may be predetermined, and hence such data, and the section header, are optional. Consequently, the number and content of the fields and order of the fields in the asset section may vary; the loader component may be adapted accordingly.

Consequently, according to the present disclosure, there is provided an executable file for a MMU-less device with an application program interface (API). An example is provided by the file 1900F in Fig. 18. The executable file includes a program, such as 1900P. The program includes an at least one executable section subject to loading into a RAM of the MMU-less device and, in a same or another allocatable section, at least one bit, corresponding to an API invocation and requiring a relocation. Also, the asset section, such as 1900AS, storing content 1900ASC for at least one asset file for the program 1900P.

In the executable file 1900F, the asset section 1900AS may store at least one file name for the at least one asset file. Accordingly, the loader component 1810 stored in the MMU-less device 1800 or present at initial stage just in the firmware, possibly stored in the developer's computer or a distributing server, for configuring the MMU-less device, may be configured to use the at least one file name stored in the asset section 1900AS for recording the at least one asset file 1900ASF into the target external memory 1900-2 (or 1900-1).

The same external memory 1900-1 as storing the executable file 1900F may be used as the target external memory in various cases. However, in such a case its capacity may be chosen to be equal to or larger than the executable file 1900F and the resulting asset files 1900ASF together. It has to be taken into account that in some cases, some content for the asset files 1900ASF may need to be decompressed when the respective one or more asset files 1900ASF are created in the target external memory, 1900-1 or 1900-2. The loader component 1810 may be adapted to perform the decompression, for example, using the RAM 120.

In an alternative case, the content 1900ASC for the one or more asset files may need just to be copied to create the one or more asset files 1900ASF. In such a case, the loader component 1810 may be adapted to perform the copying.

The recording of the content (copied or decompressed) into the one or more asset files 1900ASF may be performed before loading the program into the RAM. In this case, the RAM 120 may be used during the recording, for example, for accelerating it, or for running a different program.

Also, in some cases the loader component 1810 may record the one or more asset file 1900ASF with its respective content into the target external memory before performing the needed relocation(s), or before transferring control to the program 1900P (but possibly after loading the program 1900P into the RAM 120). Such a procedure may be useful for example when the target external memory (e.g. 1900-2) is different from the source external memory (1900-1) and is not yet available when the loading can start.

In the above examples, the program 1900P may refrain from accessing the asset section 1900AS, and/or lack an invocation of an access to the asset section. For example, the program may lack an invocation of an API function for accessing the asset section 1900AS. This follows, for example, from the way in which the asset section may be added to the executable file by merging. In particular, the asset section 1900AS may be merged into the executable file 1900ASF after generating the program 1900P by partially linking the object code. The object code may be obtained by compiling the source code. That is, the loader component of the firmware and the MMU-less device is configured to access the asset section, but the program in the same executable file with the asset section may have no access to this section.

Further, at it has been shown in Fig. 19, the executable file, and for instance the asset section, may specify an at least one relative path for the at least one asset file. In particular, "sprites/log_air.fxbm" and "sprites/logo_arcanoid.fxbm" are relative paths and do not include a mount point (a root directory). For instance, in Unix-based systems, an absolute path would start with "/". The one or more paths are relative since they the mount point at the MMU-less device may be not known to the developer, or it is changeable. Hence, the paths relative to that folder, in which the one or more asset files were placed by the developer at his or her computer, may appear in the asset section.

Then, the API invocation, subject to relocation, in the program may be for an API function called to access a particular asset file from the at least one asset file. For example, the call may be storage_api_open("/assets/scripts/logo_air.fxbm") in the source code, for accessing the respective asset file which is to be created in the external memory based on the first content in Fig. 19.

As it can be seen from the above command, a path specified in the program for the particular asset file at the call of the API function may have a prefix presented by a root directory: "/assets". Such a prefix may be chosen to virtually correspond to the external memory.

In particular, the called API function ("storage_api_open" in the example above) may be for translating the path specified in the program ("/assets/scripts/logo_air.fxbm" in the example above) into a path at which the particular asset file ("sprites/log_air.fxbm" in the example above) is to be recorded in the external memory. The translation may be performed by replacing the root directory virtually corresponding to the external memory (("/assets" in the example above) in the specified path ("/assets/scripts/logo_air.fxbm" in the example above) by a prefix comprising at least (a) a mount point name for the external memory (e.g. "/ext"), and, optionally (b) an identifier which is to be used by the MMU-less device for the program (e.g. "air_arkanoid"). That is, the translated path would include "/ext" and "air_arkanoid" and be, for example, "lext/apps_assets/air_arkanoid/scripts/logo_air.fxbm".

Also, (c) the directory or folder "apps_assets" was used besides the mount point name and the identifier. Asset files for different programs may in such a way be grouped together in this folder and quickly erased if this is needed for freeing the memory space for asset files of another program or a new version of the executable file. That is, using a same non-root folder in calls for asset files of different programs can be used to further accelerate loading the program from the executable file. The API function ("storage_api_open" in the example above) may be used not only for accessing asset files, but for accessing other files as well, and without the use in the program of the virtual mount point (("/assets) for assets, the function would have no way to distinguish if the called file is an asset file or not.

In other words, the API entities of the MMU-less device (or of the respective firmware) may include an API function ("storage_api_open" in the example above) invokable by the API invocation and configured to provide access to a one asset file, specified as its argument, from the one or more asset files.

As explained above, the API function thus may be configured to translate a path specified in the program for the particular asset file at the call of the API function into a path at which the particular asset file is to be located in the external memory, by replacing a root directory virtually corresponding to the external memory in the specified path by a prefix comprising (a) a mount point name for the external memory, and, optionally (b) an identifier used by the MMU-less device for the program.

That is, the API function may be configured to recognize at least two root directory names for the external memory.

Consequently, in some examples, the MMU-less device (or the respective firmware) may be adapted to the executable file arranged as above. In such a case, the loader component, such as 1810, may be configured to access an at least one relative path specified in the asset section ("scripts/logo_air.fxbm" in the example above), and generate an at least one path for the recording of the at least one asset file. The generation may be performed by
(a) adding at least a root directory name ("/ext" in the example above) to the at least one relative path, where, optionally, the root directory name is a mount point name for the external memory, and/or
(b) modifying the at least one relative path by using an identifier used by the MMU-less device for the program ("air_arkanoid" in the example above).

Also, (c) the loader component may be configured to modify the at least one relative path by using the directory name "apps_assets" when such directory name is used by the API function ("storage_api_open" in the example above) for translating calls to asset files.

A further way to save the loading and other preparation time may be provided according to the present disclosure based on use of a signature for checking the validity of the one or more asset files. The idea is that there is no need to record asset files or directories into the external memory if such files are already stored in this memory and are valid (even if the implementation of the program has changed, for example improved by an update). Herein, a hash function may be used as the signature may be a hash (e.g. a md5 hash), and it may be based on at least the content 1900ASC for the at least one asset file, or the content fields shown in Fig. 19. The signature may be stored, for example, in the asset section header: again, Fig. 19 serves as an example. Additionally, the signature may be based on at least one file name stored in the asset section for the at least one asset file. That is, this at least one file name may be used for calculating the hash function. Additionally, or alternatively, the signature may be based on at least one relative path stored in the asset section for the at least one asset file. The signature may be not based on the program or any other section or data in the execution file besides the asset section.

The MMU-less device equipped with the loader component may then use the signature to decide if creating the asset files is needed in the external memory at any specific instance (an attempt to load the program). To this end, the loader component is configured to access a signature in the asset section, optionally, in its header; to check if a signature file is stored in the external memory and to proceed to the recording the at least one asset file, and to recording a signature file with the signature, in case of a negative result of the check. For example, such a sequence may be realized at the first instance of loading the program.

Herein, the signature file path for recording the signature in the signature file may be generated by the loader component by:
(a) using a mount point name for the external memory ("/ext" in the example above), and/or
(b) using an identifier used by the MMU-less device for the program ("air_arkanoid" in the example above).

Also, the loader component may be configured to access a signature in the asset section, optionally, in its header, to check if a signature file is stored in the external memory and to access a signature in the signature file in case of a positive result of the check; and to proceed to (a) the loading the program into the RAM and/or (b) transferring control to the program (for example, without recording the asset files into the external memory), only if the signature in the asset section coincides with the signature in the signature file. For example, such a sequence of steps may be realized at the second instance of loading the program.

Additionally, the loader component may be configured to access a signature in the asset section, optionally, in its header, to check if a signature file is stored in the external memory and to access a signature in the signature file in case of a positive result of the check; and to proceed to the recording the at least one asset file, and to recording a signature file, in case of a non-coincidence of the signatures. For example, such a sequence of steps may be realized at the any instance of loading the program when the content for the one or more asset file, and/or the file and/or directory structure stored in the asset section have been updated by an updated executable file.

In yet a further aspect of the present disclosure, the inventors have considered that it would be possible to improve the usability of the MMU-less devices, their firmware and the programs, subject to loading into the RAM of the MMU-less device and invoking its firmware by its API, by more efficient debugging of these MMU-less devices, firmware and programs. To this end, the inventors have decided to configure the firmware, the debugger, and optionally the programs in a special way. Hereinafter, debugging is understood as checking, to some extent, that the target causes no errors, or searching for one or more errors, in any case by using a debugger, being a program tool separate from the firmware and the program subject to loading, which present debugging targets. That is, in some cases debugging according to the present disclosure may include not more than inspecting one or more address or variable (i.e. its contents) in the RAM of the MMU-less device and/or interrupting the instruction execution flow, in all cases by using the debugger. Consequently, in a basic case, the respective functionality may be the only function which the debugger would provide to a user (a software developer). Still, in other cases, the debugger according to the present disclosure may implement various one or more other functions, especially those, which are useful in most debugging scenarios, and therefore are standard. For example, these functions, implemented by the debugger according to the present disclosure, may include setting one or more breakpoints; reading the non-volatile internal memory; reading one or more values from the registers; and writing into the RAM and/or registers, as well as writing into rewritable parts of the non-volatile internal memory. A breakpoint is a location in executable code at which the operating system stops execution and breaks into the debugger. Further, the debugger functions according to the present disclosure may include communicating with periphery via the address space including the peripheral blocks (for example, external memory or a camera) and consequently reading its memory, and/or a register, and/or a controller state, and/or changing the states of peripheral devices, depending on the capabilities of the peripheral device. Additionally, or alternatively, the debugger may provide the user an option to single-step through the source code. As a further additional, or alternative, example, the debugger may implement stacktracing. In some cases, the debugger according to the present disclosure may implement backtracing.

There are certain differences between various debuggers for (general purpose) computers and MMU-less devices. The debugger according to the present disclosure may use an in-system programmer (ISP) or an in-circuit serial programmer (ICSP), i.e. it may communicate with or control the MMU-less device using its ability to be programmed while installed in a complete system, rather than requiring the chip to be programmed prior to installing it into the system. Also, many debuggers for computers are not configured for the reading or writing operations with the peripheral devices, due to the isolation of processes in the computers. However, for the MMU-less device according to the present disclosure, the whole device with all its software may be considered as one of preferable debugging targets, since an effective isolation is generally not provided in this case, in particular, due to the use of the flat memory architecture: an invalid memory pointer in an application may trigger an address error which can completely freeze or corrupt the device. Still, debugging just of the firmware of the MMU-less device, at the developer's computer before the firmware installation on the MMU-less device, or after the installation, is quite a standard practice. Also, debugging those programs for the MMU-less device, which yet reside at the developer's computer, is a standard practice, with the help of a software development kit, SDK (for example, such as disclosed in the present disclosure) or an emulator of the MMU-less device.

Hence, according to the present disclosure, debugging may be performed for the firmware, configured in the special way and running (in the emulation) at the developer's computer (i.e. workstation). Loading the program using the API of the firmware does not have to be a part of the emulation, but it may be. Alternatively, or additionally, debugging may be performed by connecting the developer's computer to an MMU-less device or its copy and installing the firmware on it. Also at this stage, loading the program invoking the API of the firmware does not have to be performed for such a debugging, but it may be performed. Again, additionally, or alternatively, debugging may be performed for the MMU-less device with the installed firmware and program in a loading or loaded state (the relocation loading is meant here, but the same debugging technique is applicable to the case where no relocation would be needed and implemented, too, for a dynamically loaded program, at least one of which section is dynamically loaded). Similarly, debugging may be applied to the program being executed on the MMU-less device with the installed firmware or being executed at the developer's computer using the SDK corresponding to the firmware of the MMU-less device (or the emulator of the firmware installed in the MMU-less device).

In this regard, various known debuggers may be customized for the firmware configured according to the present disclosure: the examples include GDB (i.e. GNU Debugger), LLDB (a part of the LLVM project), and various other toolchain debuggers. Aso, the debugger according to the present disclosure may be configured to use such in-system programmers (ISPs) as J-link, ST-Link, and/or CMSIS-DAP. Many available customizable debuggers use the client-server model. The debugger (or debug) server is usually a relatively small program, configured to interact with the target device via its debug interface, and possibly running in a specialized section or a debug block of the target device (which may be the MMU-less device according to the present disclosure) or on a specialized standalone device; but it also may be configured run on the developer's computer. The debugger client is executed on the developer's computer, and it interacts with the debugger server according to their protocol. Debugger servers and clients may be distributed separately. Different servers may match one client, and different clients may match one server. The debug server may be situated remotely from the client and/or from the target device (or its ISP) and be accessible via one or more network connections, each of which may be a wired or a wireless connection (similarly, the ISP may communicate with the MMU-less device via one or more network connection, which may be a wired or a wired connection). That is, the client-server model helps to implement the toolchain remote debugger. Still, debuggers not using the client-server model exist as well.

After the debugging it is possible to distribute the debugged and thus in average more usable firmware, for example, via a digital marketplace. Alternatively, or additionally, with the firmware configured as presented in the present disclosure, debugging may be performed after the distribution, if desirable. Also, an executable file including the program may be configured according to the present disclosure for simplifying the debugging. It similarly may be distributed via the online marketplace or a data carrier (a non-volatile medium carrier or a non-volatile chip storage, for example, a microSD card).

According to the present disclosure, the end-user's MMU-less device may have, besides the features associated with debugging and still expected to be useful in the future or even simply inherited by an installation of the already debugged software, any feature from or a combination of the examples above; or it may be a different MMU-less device. In particular, a suitable MMU-less device may have an API table, in which identifiers of API entities are the hash values discussed above, or the API table may use other identifiers. That is, a suitable API table may again be a table of API entity identifiers and addresses; in some cases, a table including a plurality of identifiers, being or corresponding to a plurality of names of API entities, and paired with a plurality of addresses of the API entities, respectively. Such a plurality of identifiers, corresponding to the plurality of names of API entities, may be presented by the plurality of the hash values of the names of the API entities. However, for the aspect of debugging and distributing the debugged firmware, program(s) and MMU-less device, as well as for the aspects of using the one or more asset files from the external memory and accelerating the loading of the program (along with performing one or more relocation), the plurality of identifiers may be presented even just by the names of the API entities, or by other identifiers of API entities based on the names of the API entities. For example, the identifiers may be of different lengths, when they are not presented by the hash values. The identifiers may be sorted or not sorted in the API table, independently of whether they are presented by the hash values or not. At the same time, the case, in which the identifiers are presented by the hash values of the names of the API entities, and the identifiers are sorted in the API table, remains among preferred for the reasons of usability. Similarly, the usability is improved when different aspects of the present disclosure are used in another partial, or a full, combination. For example, the firmware of the MMU-less device may have one or more features initially introduced for debugging this firmware or the program; and loading of the program may be accelerated by one or more the techniques discussed above and/or at the same time the firmware and the program may be adapted for using the asset file(s) according to the techniques provided by the present disclosure, etc.

As for the firmware features especially useful for the debugging, the inventors have found that it is desirable to enable a debugger to quickly access those sections of the program, which are loaded into the RAM of the MMU-less device, or at least to obtain information on where to these sections are being loaded or have been loaded. However, in the present and other examples in the present disclosure the program (i.e. its one or more allocatable sections, although not necessarily all allocatable sections) is dynamically loaded. The address of the one or more section therefore may depend on the other programs loaded in the RAM, the state of the of the MMU-less device, which depends on which programs have been executed by it, etc.

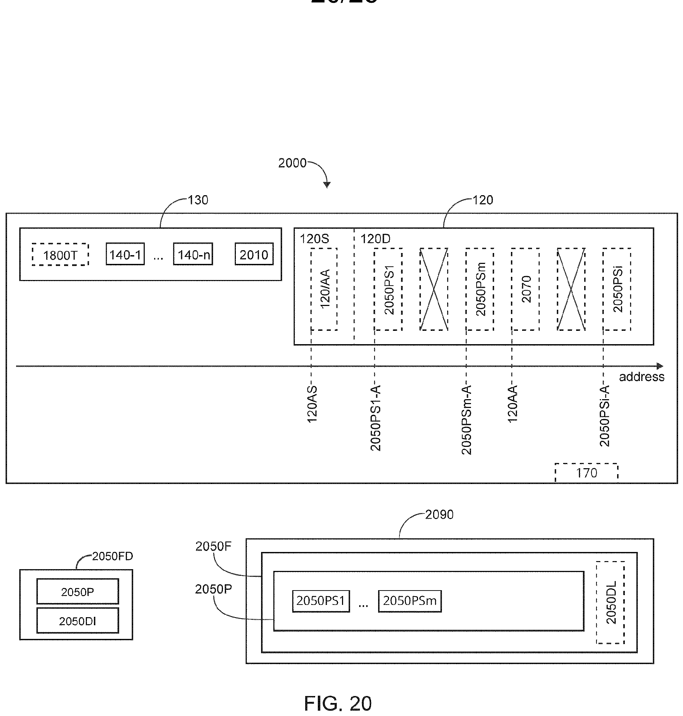

According to the present disclosure, the quick access may be provided, by configuring the firmware in the special way (this was already mentioned above), and correspondingly building or customizing the debugger. Fig. 20 presents a schematic example of how the MMU-less device may be configured.

In particular, Fig. 20 shows a memory management unit-less (MMU-less) device 2000, which includes an at least one processing unit 110, a RAM 120, and a built-in non-volatile memory 130 storing API entities 140-1, ..., 140-n. Also, in the present example, the built-in non-volatile memory 130 includes the API table 1800T including identifiers of the API entities and respective addresses of the API entities; but the API table is optional, since addresses of the API entities may be known when the program is prepared. The MMU-less device has an interface 170 for receiving the program from an external memory. However, this interface is optional, since the program (or an executable file including the program) may be recorded in the non-volatile internal memory 130 when building the device 2000. Various optional, for the present example, features, such as antennas, etc, are shown not in Fig. 20, but in other figures (where they may be not optional).

The built-in non-volatile memory 130 stores a loader component 2010, which may be, but does not have to be a relocating loader (i.e. the program also does not have to have bits requiring relocations; but since the usability of the MMU-less device with the firmware and program is expected to substantially improve if the program is allowed to be partially-linked before loading and require relocations due to higher flexibilities in loading and distribution of the code between the sections, this is one of the preferred cases). Additionally, or alternatively, in a variation, which is not shown, this component may be loaded into the RAM 120. In any case, this component 2010 is configured to load an at least one executable section from an executable file 2050F (stored in an external memory 2090 in the example of Fig. 20, or received from by the MMU-less device into the RAM 120 from a communicating device, or stored, as mentioned, in the internal memory 130) into the RAM 120. The executable file 2050F includes the program, at 2050P; and the executable section is a section of this program 2050P. Also, the loader component 2010 is configured to load one or more allocatable sections 2050PS1, ..., 2050PSm (i.e. one or more is presented by "m" in the shown example) of the program 2090P into one or more available blocks (for example, k blocks, where k may be smaller than, the same as, or greater than m) of the RAM 120, by dynamic allocation into a dynamically allocated part 120D of the RAM 120. For example, one of these one more allocatable sections 2050PS1, ..., 2050PSm, dynamically allocated by the loader component 2010, may be the at least one executable section.

Furthermore, the loader component 2010 is configured to store in the RAM 120, by static allocation in a statically allocated part 120S of the RAM 120 an allocation address 120AA for allocation data 2070 configured to store information on addresses at which the one or more allocatable sections are or have been subject to loading into the RAM 120 (i.e. will be loaded or have been loaded: the order is not restricted here; for example, when there is a plurality of the allocatable sections, it may even happen that a part of these sections is loaded into the RAM 120 before the allocation address 120AA is stored in the RAM 120 and a part of these sections is loaded into the RAM 120 after the allocation address 120AA is stored in the RAM 120). Also, the allocation data are to store information on which section of the one or more allocatable sections corresponds to a certain address from the addresses stored in the allocation data 2070. These allocation data 2070 are subject to dynamic allocation.

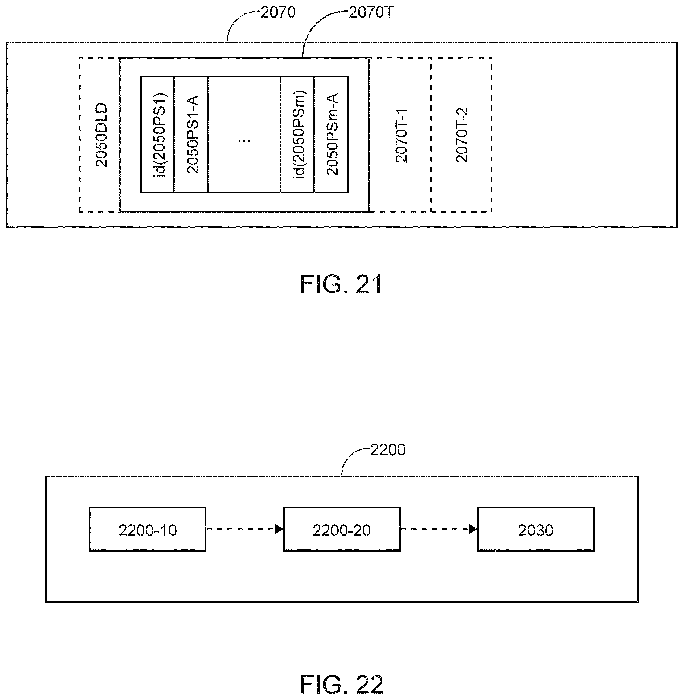

In other words, the allocation data may include or store a table of correspondence 2070T between the one or more allocatable sections 2050PS1, ..., 2050PSm (for example, their names or other identifiers) and respective one or more addresses 2050PS1-A, ..., 2050PSm-A at which the one or more allocatable sections 2050PS1, ..., 2050PSm are loaded (will be loaded or have been loaded: again, the order is not restricted here). An example of such a correspondence table is schematically shown in Fig. 21. At the same time, it is schematically shown in Fig. 20 that the allocation data 2070 are as well to be dynamically allocated into the one or more available blocks of the RAM 120 at the address 120AA. That is, before or after the allocation data 2070 are recorded into the RAM 120, but after the address 120AA is determined by the firmware of the MMU-less device 2000 (including the loader 2010), the loader component 2010 records the address 120AA at an address 120AS in the statically allocated part 120S. Generally, the address 120AS is determined during the compilation of the firmware for the MMU-less device 2000. Thus, the address 120AA, when recorded at the address 120AS in the statically allocated memory 120S, points into the dynamically allocated memory 120D, to allow the debugger to quickly find the allocation data 2070.

The table of correspondence 2070T may be in any predetermined format. It may be similar or the same as the table of correspondence 470, however that table did not have to be stored in the RAM after the relocations for invocations from each section to the same or another program section have been completed, while table 2070T is especially useful for debugging and thus is intended to be kept in the RAM when the program is being executed or just loaded into the RAM.

Referring to Fig. 21, it further schematically shows that the allocation data 2070 may optionally include a further table of correspondence 2070T-1, and yet a further table of correspondence 2070T-2, for other programs which may be loaded into the RAM 120 (and thus leave only those available blocks, which were mentioned above, for the program 2050P). Also, Fig. 21 schematically shows that the allocation data 2070 may include a debug link data 2050DLD for another file, with a debug information, for the program 2050P.

Also, a skilled person would appreciate that Figs. 20 and 21 and the whole related disclosure above effectively present also examples of the firmware for the MMU-less device. For example, the firmware for the MMU-less device thus may include the plurality of API entities of the MMU-less device configured to be stored in the built-in non-volatile memory. Also, the firmware may include the loader component configured to be stored in the built-in non-volatile memory or loaded into the RAM. Herein, the loader component is configured to load one or more allocatable sections of the program from the executable file into available blocks in the RAM and to store in the RAM, by static allocation, the allocation address for allocation data configured to store the table of correspondence between one or more allocatable sections and respective one or more addresses at which the one or more allocatable sections are subject to loading or have been loaded into the RAM. Further, the loader component is configured to record the allocation data into the RAM based on the allocation address.

The following techniques may be used in the MMU-less device 2000 or the associated firmware. The loader component 2010 may perform at least one relocation for an invocation from a one of the one or more allocatable sections 2050PS1, ... , 2050PSm to the same or another allocatable section from the one or more allocatable sections 2050PS1, ... , 2050PSm. Alternatively, or additionally, the loader component 2010 may be identify the one or more sections 2050PS1, ... , 2050PSm in the table of correspondence 2070T by respective one or more section names, or other one or more identifiers based on one or more section names: optionally, the other one or more identifiers in Fig. 21 are one or more hash values of the one or more section names. Again, alternatively, or additionally, the loader component 2010 may store the allocation address 120AA at the statically allocated address 120S as an absolute address or as an offset from a start of a heap. Yet another time, alternatively, or additionally, the loader component 2010 may store the allocation data in a list data structure.

Also, the loader component 2010 may be settable to operate in a debugging mode, in which recording the allocation data 2070 into the RAM 120 based on the allocation address 120AA is indeed invoked. An alternative mode may be, for example, a simplified operation mode, in which recording the allocation data 2070 into the RAM 120, and optionally the dynamic allocation for such data, would not be performed. Switching between modes may be implemented via a user interface of the MMU-less device 2000 and/or via a debug interface of the MMU-less device 2000.

The MMU-less device 2000 may include a debug subsystem, and/or an in-system programmer, and/or a debug interface, optionally a SWD or JTAG interface. Alternatively, the MMU-less device may lack any of these, but benefit from the firmware as presented herein because this firmware could be debugged using a similar MMU-less device, with one or more of these features present, or using an emulator of the MMU-less device.

The loader component 2010 may be configured to obtain the debug link data 2050DLD from a debug link 2050DL, being a section in the executable file 2050F. The debug link data conventionally includes a name and a checksum, optionally, CRC32, of an executable file, which includes a debug information for the program (2050P in the present case). Since it is more difficult to deliver a file with the debug information to the user than without it, the executable file 2050F may lack the debug information and have only the debug link 2050DL. That is, the debug information would have to be accessed from a different source, for example, from another executable file, 2050FD in Fig. 20, i.e. a file different from 2050F and available to the software developer from a network or locally. This another file 2050FD may as well be partially-linked and may be in the ELF format. Thus, the optional debug link data 2050DLD in the allocation data 2070 may be used for two purposes. Firstly, the debug link data 2050DLD may serve as an identifier of the program 2050P to which table 2070T relates: tables 2070T-1 and 2070T-2 in Fig. 21 relating to different programs loaded or subject to loading into the RAM may be distinguished by the loader component 2010 because they would be associated with different debug link data. Secondly, the debug link data 2050DLD may be accessed by a debugger and used for searching the file 2050FD with an appropriate debug information 2050DI for the program 2050P.

As the skilled person would appreciate, the debug information 2050DI may include, for example, information at a level sufficient to generate a backtrace, or at a source-level debugging and single-stepping level, or at the source-level debugging and single-stepping level with information about macros.

Fig. 22 schematically shows an example of a debugger client 2200 (or a debugger) for debugging an MMU-less device with an installed firmware, which is configured to form an API of the MMU-less device and includes the loader component for a program for the MMU-less device. Also, the debugger client 2200 may be used for debugging yet not installed firmware for the MMU-less device. Herein, the MMU-less device and the firmware may be as disclosed in the examples discussed with references to Figs. 20 and 21 and in other parts of the present disclosure relating to debugging. The debugger client 2200 is a software product and includes an instruction 2200-10 for causing the computer to access the firmware and a debug information for the firmware. It is understood that the computer, instructed by the debugger client, may access the firmware from the MMU-less device, for example via a debugger server, or it may access the firmware (code) from a file stored locally or a file stored remotely, but accessible via a network. As for the debug information, it may be accessible from the same or another file, stored locally or accessible via a network.

The debugger client 2200 further includes instructions 2200-20 for finding that address 120AS in the firmware, which is to be located in the statically allocated part of the RAM. To this end, in general, the debugger may use the debug information. As before, the address 120AS is configured to be an address where the allocation address 120AA for dynamically allocatable allocation data 2070 is to be stored in the RAM of the MMU-less device. The dynamically allocatable allocation data 2070, as before, is to be used for storing a table of correspondence 2070T between one or more (dynamically) allocatable sections 2050PS1, ..., 2050PSm of the program 2050P and respective one or more addresses 2050PS1-A, ... , 2050PSm-A at which one or more allocatable sections 2050PS1, ... , 2050PSm of the program 2050P have been loaded or are to be loaded into the RAM.

Then, the debugger client 2200 includes an instruction 2200-30 enabling debugging requested by a user via an IDE or another interface, optionally a command line interface, based on the address 120AS subject to be located in the statically allocated part of the RAM. For example, the user may wish to check whatever content may appear at this address: if it is non-zero, but loading of the program has not been started yet, then some part of the firmware may have performed an incorrect operation. Alternatively, or additionally, the user may wish to check that this address 120AS has indeed been interpreted as statically-allocated by the firmware, and/or interrupt the instruction execution flow when an attempt to record any value at the address 120AS occurs, etc.

Also, the debugging requested by the user may indirectly require the address 120AS and hence be based on it. For example, the user may wish to view which allocation address 120AA has been provided for the dynamically allocatable allocation data 2070. Hence, alternatively, or additionally, the instruction 2200-30, enabling debugging requested by the user, may be an instruction (possibly, a combinative instruction) causing the computer to provide to the debugger client 2200 the allocation address 120AA for the dynamically allocatable allocation data 2070 (before or after this address is actually used for recording the allocation data 2070) by finding this allocation address at the address 120AS.

Similarly, the debugging requested by the user may concern the table of correspondence 2070T: the user may wish to check if it is still empty, if it has a desired structure (for example, a list), if it does not extend beyond its allowed size, if there are no conflicts with other addresses allocated by the firmware etc. To this end, the debugger client 2200 may be configured to access the table of correspondence 2070T in the dynamically allocated allocation data 2070, and thereby the debugger client 2200 may enable the debugging based on the table of correspondence 2070T. That is, alternatively, or additionally, the instruction 2200-30, enabling debugging requested by the user, may be an instruction causing the computer to provide to the debugger client 2200 information regarding the table of correspondence 2070T by gathering this information using the allocation address 120AA after finding this allocation address 120AA at the address 120AS.

As well, the debugging requested by the user may require checks involving data (identifiers and/or addresses) which are stored in the table of correspondence 2070T, etc. To this end, the debugger client 2200 may be configured to access the required data in the table of correspondence 2070T in the dynamically allocated allocation data 2070. Consequently, alternatively, or additionally, the instruction 2200-30 enabling debugging requested by the user may be an instruction causing the computer to provide to the debugger client 2200 that data stored in the table of correspondence 2070, which the debugger client 2200 needs for performing the debugging operation requested by the user, by using the address 120AS, the allocation address 120AA, etc.

In particular, the debugging requested by the user may directly or indirectly require one or more addresses at which the one or more allocatable sections 2050PS1, ... , 2050PSm of the program 2050P have been loaded or are to be loaded into the RAM. For this reason, the debugger client 2200 (or the debugger) may access the one or more addresses 2050PS1-A, ... , 2050PSm-A in the table of correspondence 2070T at which the one or more allocatable sections 2050PS1, ... , 2050PSm of the program 2050P have been loaded or are to be loaded into the RAM.

In the same fashion, the debugging requested by the user may require checks involving the memory supposedly (based on the one or more addresses 2050PS1-A, ... , 2050PSm-A) occupied by the one or more allocatable sections 2050PS1, ... , 2050PSm of the program 2050P and/or involving the code stored in or by the one or more allocatable sections 2050PS1 ... , 2050PSm. In such a case, alternatively or additionally, the instruction 2200-30 enabling debugging requested by the user may be an instruction causing the computer to provide to the debugger client 2200 that required code, by accessing the one or more addresses 2050PS1-A, ... , 2050PSm-A and obtaining the required code from the one or more allocatable sections 2050PS1, ... , 2050PSm, by using the address 120AS, the allocation address 120AA, etc.

Also, in the above examples, the debugger, or the debugger client 2200, may access a debug information for the program 2050P, when the debugging requested by the user requires using this debug information. For example, the debugger, or the debugger client 2200, may use the file 2050FD to access the debug information 2050DI. Searching for the file 2050 by the debugger client 2200 or on its behalf may be facilitated by using the debug link data 2050DLD, which the debugger client 2200 may obtain from the MMU-less device in those examples, where the loader component 2010 records such debug link data 2050DLD into the table of correspondence 2070T. In particular, in such cases the debugger client may use in the course of the search of an executable file including the debug information that name of the file, which is recorded in the debug link data; and it may select that file from the files with the required name, which checksum matches the checksum recorded in the debug link data (a plurality of files with the required name may be available to the debugger client 2200 locally or online for example since there may be different versions of the file, in different directories or at different developer's websites).

In yet a further aspect of the present disclosure, the inventors have considered that ways to increase the usability and applicability of the MMU-less devices, their firmware and the programs, subject to loading into the RAM of the MMU-less device and invoking its firmware by its API, may include configuring the software so that it would allow more of its parts to be data which can be stored in the external memory. In such a case, a space freed in the built-in rewritable non-volatile memory may be used for installing, for example, a further application, or using it for more executable code. At the same time, the inventors have found that there is another way to increase the usability or applicability of the MMU-less device, by increasing its customizability.

For example, the latter aim may be achieved by adapting the booting routine of the MMU-less device (i.e. of its MCU). The booting routine usually starts from a chip vendor hardware bootloader, which is an immutable part of MCU, providing generic system recovery and initialization modes for factory-new chips, using own configuration from a persistent memory. Also, the hardware bootloader may select the next boot stage source, such as, for example, internal or built-in flash, external, e.g. QSPI (Quad Serial Peripheral Interface) flash, RAM, etc.

In this regard, there were (and are) MMU-less devices with a too rigid chip vendor hardware booting routine (or, if the chip vendor hardware bootloader is absent, with a too rigid booting via a fixed start-up path), limiting or complicating the software development. Then, a trend for more customizable MMU-less devices appeared, with the hardware bootloader implementing a generally shorter booting routine and bringing the MMU-less device into a less rigid state; and a firmware's dedicated (or custom) bootloader starting from that state and used for the customization of the booting routine to the purpose(s) and options set before the software developers. For example, the firmware's dedicated bootloader may perform early hardware initialization and provide device-specific update and recovery options; and after completing its own tasks, it may transfer control to the main firmware.

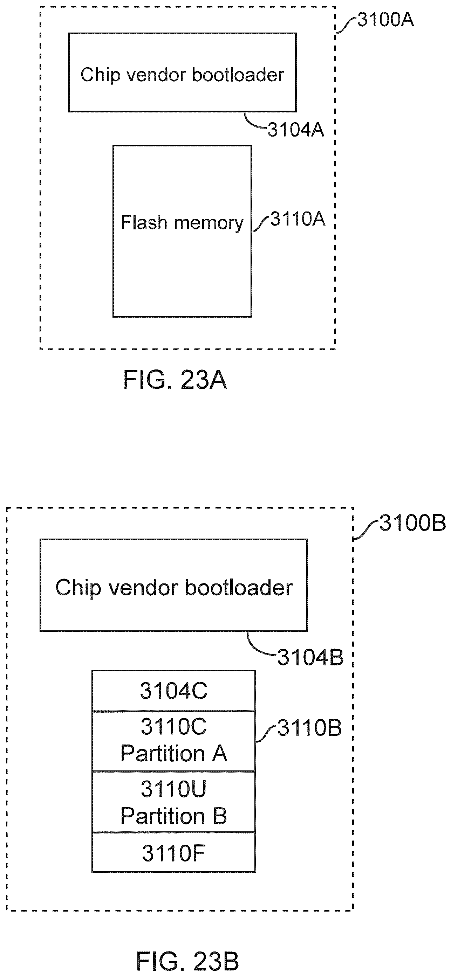

Figs. 23A and 23B schematically show an example of an organization of the built-in rewritable non-volatile memory of an MMU-less device 3100A and an MMU-less device 3100B along the line as discussed above, with the flash being a non-limiting example of the type of this memory. Fig. 23A shows a flash memory 3110A and a chip vendor bootloader 3104A, which is the too rigid hardware bootloader. Fig.23B shows a chip vendor bootloader 3104B, which is less rigid than 3104A, and a flash memory 3110B, partitioned, just as an example, into four partitions: a custom bootloader partition 3104C, partition 3110C ("partition A") and an equally-sized partition 3110U ("Partition B"), and an optional partition 3110F containing an internal storage filesystem.

In the example of Fig. 23B, the A/B partition approach, which is rather standard, is used to provide autonomous firmware updates: while one of the partitions, e.g. 3110C, contains a currently running firmware image, the other, i.e. 3100U, may receive the full update image. The partitioning of the built-in non-volatile memory ensures that there is no erasing and writing data to that region in the flash, which contains the currently executed code, since such an operation is not possible. The control of which partition is to become active after the next reset is implemented by the not too rigid hardware bootloader and the custom bootloader utilized on early boot stages. That is, for example, for installing an OTA (over-the-air) update, the software already running on the device writes the update to currently inactive partition 3110U, and then configures the bootloader to activate that currently inactive partition 3110U on the next device startup.

While according to the A/B partition approach up to almost 50% of the built-in non-volatile memory may need to be kept free to allow for the next update, it generally increases the applicability of the MMU-less device when compared with the example of Fig. 23A. On the one hand, the loss of these up to 50% of the built-in non-volatile memory be not critical, since also external memory may be used, for example, for storing those parts of software which can be processed as data, and it may be much larger than the internal, built-in memory. On the other hand, due to the possibility of the autonomous update from the external memory (optionally, passive) or the OTA update, the software of the MMU-less device may be quickly re-configured, for example, by adding new functions or even with a change of its purpose.

However, the inventors, while considering how to increase the usability, applicability and flexibility of the software for such MMU-less device as the Flipper Zero device, have sought for further ways than just configuring the software so as to allow more of its parts to be stored in the external memory, and also have sought beyond the A/B partition approach; and they have found an approach allowing to avoid the need to create two partitions A/B instead of one for updating the software, and in particular, the firmware, of the MMU-less device. Also, the inventors have sought for ways to avoid the need to create the dedicated bootloader partition.

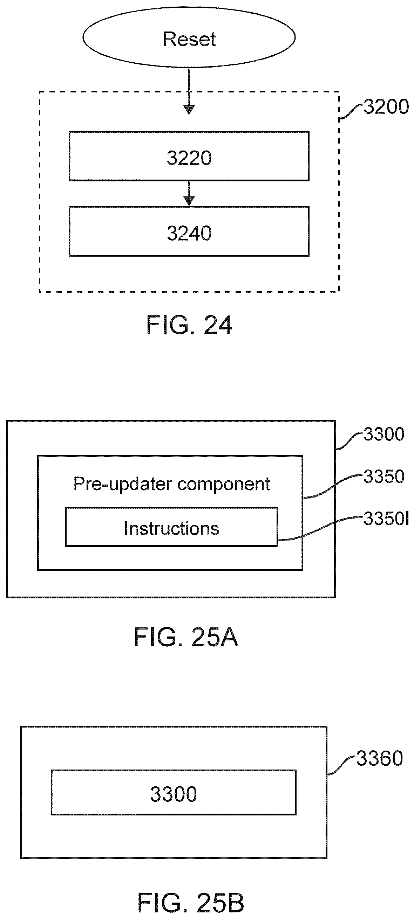

Fig. 24 shows a schematic diagram of an exemplary method 3200 for a MMU-less device, according to the present disclosure. The method includes steps 3220 and 3240, which are to be applied upon a reset of the MMU-less device. In step 3220 a processing unit of the MMU-less device accesses an updater image in an external memory of the MMU-less device and writes it into a RAM of the MMU-less device. The step is shown as unitary because accessing and writing may be done piece-by-piece, i.e. it is not required to access the full updater image and only then to write it. Then, while at step 3220 the updater image was treated by the processing unit as a data, at step 3240 the processing unit transfers control to this updater image, i.e. moves to treat it as executable code.

At the same time, the method 3200 according to the present disclosure is performed in a specific way, so as not to require more resources than there may be available in the context of operating the MMU-less devices. In particular, when the processing unit of the MMU-less device performs the method 3200, it executes a pre-updater component which is recorded in a built-in rewritable non-volatile memory of the MMU-less device, to thereby set the MMU-less device into a configuration with a possibility to update a software (exemplified by a firmware) of this MMU-less device. The execution of the pre-updater component involves invoking by the pre-updater component at least a part of a code from one or more of: a starting operating system, a starting driver and a starting service for accessing the external memory.

With regard to the relationship between the software subject to update and the firmware, according to the present disclosure, the former may include a part or a whole of a starting firmware of the MMU-less device, or a part or a whole of an executable code of a starting firmware of the MMU-less device.

With regard to the method 3200, the processing unit which implements it does not have to implement it alone. The MMU-less device may include more than one processing unit which would be involved in executing the method 3200.

Fig. 25A schematically shows an example of a machine-readable storage medium 3300 storing a pre-updater component 3350 according to the present disclosure and coinciding with the pre-updater component as described above with reference to Fig. 24. The pre-updater component 3350 includes instructions 3350l which are to cause the processing unit of the MMU-less device to perform the method 3200.

The machine-readable storage medium 3300 may be implemented in many different ways. For example, it may be the built-in rewritable non-volatile memory of the MMU-less device, as mentioned above; i.e. when the MMU-less device receives the pre-updater component, it records it in the built-in rewritable non-volatile memory of the MMU-less device, for example, internal flash memory or EEPROM.

In some other examples, machine-readable storage medium 3300 may be included in a memory carrier 3360 (optionally, passive, i.e. not needing its own power supply, such as a battery), as it is schematically shown in Fig. 25B. The memory carrier 3360 is such that it can be used for mechanically contacting the MMU-less device to thereby form an electric connection, by a detachable contact or by appropriately soldering the memory carrier with the MMU-less device. For example, the passive memory carrier may be a card chip, for example, a NAND/NOR chip, NAND/NOR flash memory, or a microSD card, or a contactless card, for example, a NFC or RFID card; and/or a memory carrier with a medium readable by the passive memory reading (e.g. optically, or using the NFC or RF technology).

The MMU-device has to be able to access the data on the memory carrier, if the latter is to be used by the MMU-device. In order to simplify such a processing, the carrier may use, for example, an MBR (master boot record) format, with a single partition, or FAT family file systems: FAT16, FAT32, or exFAT (where FAT stands for the File Allocation Table, and exFAT stands for the Extensible File Allocation Table).

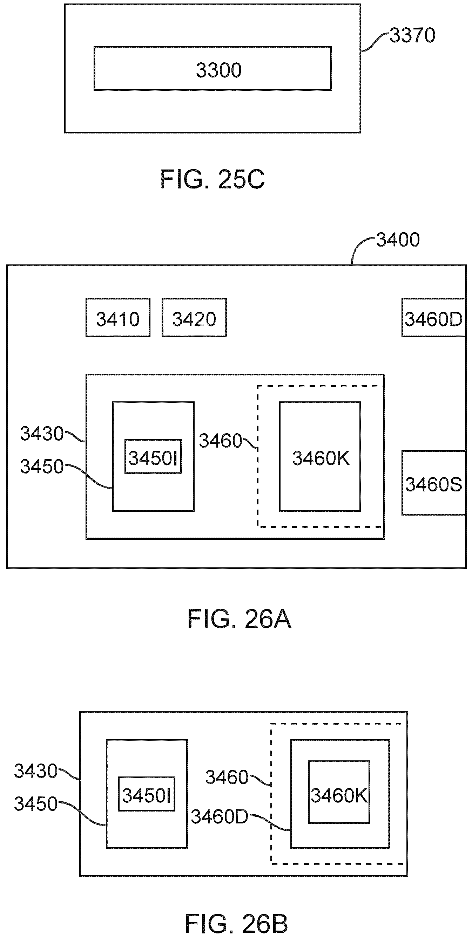

Also, notably, in some examples, the machine-readable storage medium 3300 may be included in a server 3370, as it is schematically shown in Fig. 25C. The server 3370 is such that it can be used for communication with the MMU-less device via a wireless, or a contact or wired connection. In such a case, the machine-readable storage medium 3300 may belong, for example, to a hard drive of the server 3370 or to any other memory device of a type usable in servers. The contact connection may be, for example, of USB type. In general, the contact connection may be considered as a type of the wired connection, another type of the wired connection could be a not-detachable connection, e.g. by soldered wires. The server 3370 may be a general purpose computer which has received pre-updater component as a file or a collection of files from a network, for example, the internet.

Fig. 26A shows a schematic diagram of an example of an MMU-less device 3400 according to the present disclosure. The MMU-less device 3400 includes a processing unit 3410, a RAM 3420, a built-in rewritable non-volatile memory 3430, and a pre-updater component 3450 for setting the MMU-less device 3400 into a configuration with a possibility to update a firmware (exemplifying the software) of the MMU-less device 3400. The pre-updater component 3450 may be the same as or similar to the pre-updater component 3350, and it may include instructions 3450l the same as or similar to instructions 3350l. That is, the instructions 3450l, when executed by the processing unit 410 from the built-in rewritable non-volatile memory 3430 of the MMU-less device 3400 and invoking at least a part 3460K of a code from one or more of: a starting operating system 3460 of the MMU-less device, a starting driver 3460D and a starting service 3460S for accessing an external memory storing an updater image from the MMU-less device 3400, are such that they cause the processing unit 3410 to perform operations the same as or similar to as discussed above with reference to Fig. 24.

These operations include:
- accessing, upon a reset of the MMU-less device, the updater image in the external memory and writing it into the RAM (as in Fig. 24, step 3220), and
- transferring control to the updater image (as in Fig. 24, step 3240).

Above, and as it is shown in Fig. 26A, the part 3460K of the code is stored in the built-in rewritable non-volatile memory 3430 of the MMU-less device 3400 and is executable from the built-in rewritable non-volatile memory 3430 of the MMU-less device 3400.

For example, this part 3460K of the code may be a part of the code of the starting operating system 3460; as it is shown in Fig. 26A; however, alternatively, or if the starting driver 3460D is included in the starting operating system 3460, this part of the code 3460K may be a part of the code of the starting driver 3460D, as shown in Fig. 26B (in particular, the case of when the starting driver 3460D is included in the starting operating system 3460 is shown). Also, this part 3460K of the code may be a part of the code of the starting service 3460S.

In Fig. 26A the starting driver 3460D and the starting service 3460C are shown as not being in the built-in rewritable non-volatile memory 3430. In such a case, they may be, for example, in a memory inserted into a port of the MMU-less device, for example, on a microSD card, and considered in such a case as comprised in the device 3400; or possibly, even in a memory located inside of the MMU-less device housing, but communicating with the processing unit differently than the built-in rewritable non-volatile memory 3430 (for example, using a separate address space). However, in some examples, the starting operating system 3460 includes the starting driver 3460D and the starting service 3460C, and possibly, even the pre-updater component 3450.

The MMU-less device 3400 as discussed above may keep the pre-updater component 3450 stored or installed for a long time before this component 3450 is used to perform the update. Hence, the pre-updater component 3450 provides a possibility to update the software (for example, firmware) of the MMU-less device. It may be stored or installed on the MMU-less device 3400 by a different party from a party which will conduct the update or contribute to the update by providing the updater image.

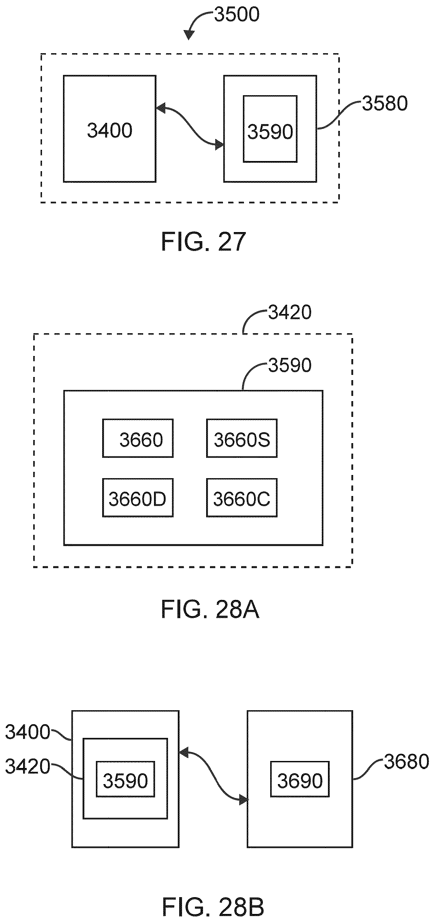

Such a party, which will conduct the update or contribute to the update by providing the updater image, may arrange a system 3500, an example of which is shown in Fig. 27, according to the present disclosure. The system 3500 includes the MMU-less device 3400, and an external memory 3580 storing an updater image 3590. The MMU-less device 3400 in such a case is configured to access this external memory, i.e. the starting service 3460S and the starting driver 3460D are compatible with the external memory 3580.

However, the pre-updater component 3450 may as well be stored or installed on the MMU-less device 3400 by the same party which will conduct the update or contribute to the update by providing the updater image. For example, the external memory 3580 storing the updater image 3590 may be the machine-readable storage medium 3300, or belong in the same way to the memory carrier 3360 (optionally, passive) or the server 3370 as the machine-readable storage medium 3300. That is, the machine-readable storage medium 3300 in Figs. 25A to 25C may include both the pre-updater component 3350 and the updater image 3590; or the memory carrier 3360, or the server 3370 may include both the machine-readable storage medium 3300 and the external memory 3580 (external with respect to the MMU-less device).

In other examples, the system 3500 may include the MMU-less device 3400 and the memory carrier 3360; or the MMU-less device 3400 and the server 3370.

The method 3200, machine-readable storage medium 3300, memory carrier 3360, server 3370, MMU-less device 3400, and system 3500 and other disclosed subject matter may be further adapted in various ways.

For example, as discussed above, the starting operating system 3460 may include the starting driver 3460D and the starting service 3460C, as it follows from above. Also, the starting operating system 3460 may further include the pre-updater component 3450 (or 3350).

Also, in all above examples (i.e. alternatively or additionally to the optional features), the updater image 3590 may be configured to modify or delete the part 3460K of the code invocable by the pre-updater component 3350 or 3450. Additionally, or alternatively, the updater image 3590 may be configured to modify or delete at least one of the starting operating system 3460, the starting driver 3460D, and the starting service 3460S.

Then, in all above examples, the pre-updater component 3350 and 3450 may present by itself a code compiled and linked for the execution from the built-in rewritable non-volatile memory 3430 of the MMU-less device 3400.

In all above examples, the pre-updater component 3350 or 3450 and the at least the part 3460K of the code may be stored in and be executable from a same partition of the built-in rewritable non-volatile memory 3430 of the MMU-less device 3400. The same partition may optionally be a sole partition of the rewritable non-volatile memory 3430.

In all above examples, the pre-updater component 3350 and 3450 may be invocable, by a user or a service, before the reset.

Then, in all above examples, the operations may include:
- accessing the updater image 3590 before the reset of the MMU-less device 3400 to check one or both from an integrity of the updater image 3590 and a compatibility of the updater image 3590 with the MMU-less device 3400, and
- proceeding to the reset only provided and after the updater image 3590 is determined to be valid, or compatible with the MMU-less device 3400, or both, depending on a requirement of the check.

Above, the integrity check may be performed by a CRC method (cyclic redundancy check), e.g. CRC32.

Also, in all the above examples, the operations may include:
- writing before the reset an indication, for example, a flag, in any memory which retains its contents during the reset (the indication would signal that the processing unit 3410 of the MMU-less device 3400 is to proceed to the operation 3220 of accessing the updater image 3590), and reading this indication at a start-up upon the reset from such any memory (such memory may be internal to or be accessible by the processing unit 3410); or, alternatively at least to the reading, the operation may include receiving at a start-up upon the reset an indication from an I/O interface of the MMU-less device that the processing unit 3410 of the MMU-less device 3400 is to access the updater image 3590, and
- proceeding to the accessing (as in step 3220) the updater image 3590 only provided and after the indication is determined to be present.

Again, in all the above examples, the operations may include recording before the reset a pointer to the updater image 3590 into any memory which retains its contents during the reset (such a memory may be internal to or is accessible by the at least one processing unit). Herein, the pointer may be, for example, a file pointer, as one of the options.

Further, in all the above examples, the operations may include initializing upon the reset a memory allocator for the RAM 3420 and reading a pointer to the updater image 3590 stored in the external memory 3580 (and, optionally, in the memory carrier 3360, provided that or when it includes the external memory 3580; or, optionally, the server 3370, provided that or when it includes the external memory 3580). Herein, the reading may be performed before the accessing the updater image 3590, optionally without completing a start-up routine of the starting operating system 3460 before the accessing the updater image 3590 and/or before the writing the updater image 3590 into the RAM 3420 of the MMU-less device 3400. In this regard, for example, at least one of peripherals, for example, a screen, of the MMU-less device 3400, may be not initialized when the start-up routine of the starting operating system 3460 is not completed.

In all the above examples, writing (as in Fig. 24, step 3220) may be performed to write the updater image 3590 into a heap in the RAM 3420 allocated by a memory allocator serving the starting operating system 3460.

In all the above examples, writing (as in Fig. 24, step 3220) may be performed to write the updater image 3590 into a single continuous partition in a dynamically allocated block of the RAM 3420.

In all the above examples, the operations may include:
- checking an integrity of the updater image 3590 stored in a dynamically allocated block of the RAM 3420, and
- proceeding to the transferring (as in Fig. 24, step 3240) only provided and after the updater image 3590 is determined to be valid. For example, a CRC method (cyclic redundancy check). Like CRC32, may be used to implement such a step. As an option, in some example, also relocating the updater image 3590 in the RAM may be performed only provided and after the check is passed successfully.

In all the above examples, the operations may include: relocating the updater image 3590, before the transferring (see Fig. 24, step 3240), from an address in the RAM 3420 where the updater image 3590 was written with a use of a memory allocator and to a pre-defined for this transferring and compatible with a further execution of the updater image 3590 address in the RAM 3420.

In all the above examples, the transferring (see Fig. 24, step 3240) may include, or be performed by, issuing an instruction of an unconditional jump.

In all the above examples, the updater image 3590 may be configured to be compatible with that state (e.g. vector state) of the processing unit 3410 which this unit acquires upon the transferring (see Fig. 24, step 3240) and which differs from an initial or default state, defined by the reset (also, quite commonly called "state-after-reset"). Herein, the difference may be pre-defined by operations of the processing unit 3410, including operations of the pre-updater component 3350 or 3450, upon the reset.

In all the above examples, as it schematically shown in Figs. 28A and 28B, the updater image 3590 may present by itself a code compiled and linked for execution from the RAM 3420 and it may include:
- an updating stage operating system 3660,
- a updating stage driver 3660D for accessing, from the MMU-less device 3400, an external memory 3680 storing an updated software image 3690 (as it is schematically shown in Fig. 28B),
- a updating stage service 3660S for accessing, from the MMU-less device 3400, the external memory 680 storing the updated software image 3690, and
- an updater component 3660C configured to use the updating stage operating system 3660, the updating stage driver 3660D and the updating stage service 3660C, so that the updater image 3590 thereby includes instructions that, when executed by the at least one processing unit 3410 from the RAM 3420, cause the at least one processing unit 3410 to perform operations including accessing the updated software image and writing it into the built-in rewritable non-volatile memory 3430.

Herein, optionally, the external memory 3580 storing the updater image 3590 and the external memory 3680 storing the updated software image 3690 may present a same memory device. For example, it may be a memory carrier (possibly, passive, and possibly, the carrier 3360), or a server (possibly, the server 3370).

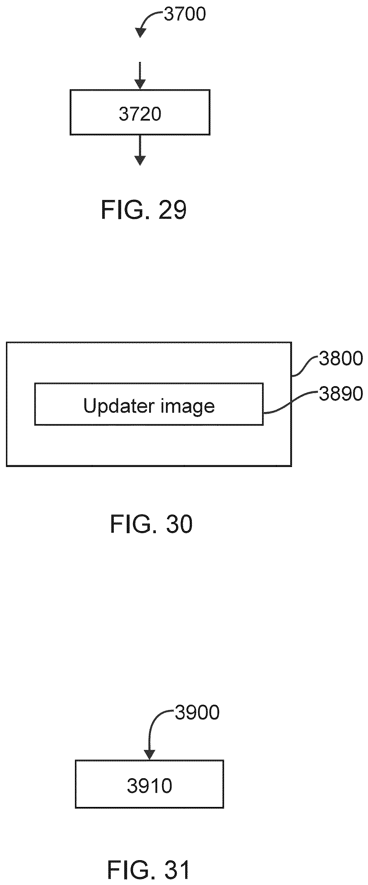

Furthermore, according to the present disclosure, and with reference to Fig. 29, there is disclosed an example method 3700 for a memory management unit-less (MMU-less) device (which may be same as MMU-less device 3400 in any of its configurations, or differ from it). The method 3700 includes a step 3720 of executing an updater image. The step 3720 is performed for updating a software of the MMU-less device. The updater image, used in the method 3700, presents by itself a code compiled and linked for execution from a RAM of the MMU-less device. The updater image may be the same as the updater image 3590, or it may differ from updater image 3590. The updater image used in the method 3700 includes an updating stage operating system, an updating stage driver and an updating stage service for accessing an external memory storing an updated software image from the MMU-less device. Herein, the updating stage operating system, the updating stage driver, and the updating stage service may be the same or different as the updating stage operating system 3660, the updating stage driver 3660D, and the updating stage service 3660S, respectively. Also, the updater image used in method 3700 includes an updater component configured to use the updater operating system, the updating stage driver and the updating stage service included in the updater image used in method 3700. The updater component may be the same as the updater component 3660C, or it may differ from the updater component 3660C. The updated software image used in the method 3700 may be the same as or different from the updated software image 3690. As for the external memory used in the method 3100, it may be the same as or different from the external memory 3580.

The updater image used in method 3700 is so configured that it includes instructions that, by being executed by the at least one processing unit from the RAM, cause the at least one processing unit to perform operations including accessing the updated software image and writing it into a built-in rewritable non-volatile memory of the MMU-less device.

Such a step of accessing and writing may be considered as at least a part of step 3720. The step of accessing and writing is unitary in the sense that accessing and writing may be done piece-by-piece, i.e. it is not required to access the full updated software image and only then to write it.

Similarly, according to the present disclosure, and with reference to Fig. 30, there is disclosed a machine-readable storage medium 3800 storing an updater image 3890 configured in the same way as the updater image discussed above with reference to the example method 3700 of Fig. 29, or, for example, as the updater image 3590 in Figs. 27, 28A and 28B. The machine-readable medium 3800 may be the same or different from the memory 3580, 3300, 3360 and 3370.

That is, according to the present disclosure, the machine-readable medium 3800 may be included into a memory carrier, optionally, passive. This carrier may at the same time present the external memory storing the updated software image. Also, it may store the pre-updater component.

Also, according to the present disclosure, the machine-readable medium 3800 may be comprised in a server, configured for communication with the MMU-less device via a wireless or a contact or a wired connection. The memory of the server may at the same time present the external memory storing the updated software image. Also, it may store the pre-updater component.

Furthermore, according to the present disclosure, and with reference to Fig. 31, there is disclosed an example method 3900 for use in updating a software of an MMU-less device. The method is to be performed by a server, for the MMU-less device including an at least processing unit, a RAM, a built-in rewritable non-volatile memory, a communication unit for establishing a wireless or a contact or a wired connection to an update server, and a port for establishing a contact or a wired or a contactless connection to an external rewritable non-volatile memory. The software subject to update is to include a starting operating system, a plurality of starting drivers, a plurality of starting services, and a pre-updater component.

According to the method 3900, the server, which is an update server, performs a step 3910 of sending to the MMU-less device an update package. Such a package includes an updater image and an updated software image, for allowing the MMU-less device to store the update package in the external rewritable non-volatile memory, and for allowing the software subject to update, to write, by the pre-updater component and upon a respective reset of the device, the updater image from the external rewritable non-volatile memory via the port into the RAM, and then transfer control to the updater image.

Herein, the elements like the updater image may be as described above. For example, the updater image used in method 3900 includes an updating stage operating system, an updating stage driver and an updating stage service for communicating with the external rewritable non-volatile memory, and an updater component.

Also, the updater image is configured to run from the RAM and, under control of the updater component, use the updating stage driver and the updating stage service to write the updated software image from the external rewritable non-volatile memory via the port into the built-in rewritable non-volatile memory.

In all the above examples, for which this may be relevant (due to the presence of respective elements), at least a portion of the software, which is subject to update, may be recorded in the built-in rewritable non-volatile memory.

In all the above examples, for which this may be relevant, the updating stage operating system may include the updating stage driver and the updating stage service.

Also, in all the above examples, for which this may be relevant, the updating stage operating system may include the updating stage driver, the updating stage service, and the updater component.

In all the above example, for which this may be relevant, the operations may include:
- checking any one, or both, from an integrity and a compatibility with the MMU-less device of the updated software image in the external memory, and
- proceeding to the writing of the updated software image into the built-in rewritable non-volatile memory only provided and after the updated software image is determined to be valid and/or compatible with the MMU-less device, or both, depending on a requirement of the check.

In all the above examples, for which this may be relevant, the updated software image may present a modification or a deletion of a code of an at least one of the starting operating system, the starting driver, and the starting service.

In all the above examples, for which this may be relevant, the updated software image may be compiled and linked for execution by the at least one processing unit of the MMU-less device from the built-in rewritable non-volatile memory.

In all the above examples, for which this may be relevant, the operations may include pre-setting the MMU-less device to execute upon a reset the updated software from the built-in rewritable non-volatile memory.

Optionally, they may include initiating the reset to execute thus updated software from the built-in rewritable non-volatile memory.

In all the above examples, for which this may be relevant, the updater component may be configured to write the updated software image starting at a start address of the built-in rewritable non-volatile memory. Thus, the hardware bootloader, if present, may after completion of its start-up routine transfer control to the updated software image.

In all the above examples, for which this may be relevant, the updater component may be configured to write the updated software image into the built-in rewritable non-volatile memory treating it as a single continuous partition.

In all the above examples, for which this may be relevant, the updater component may be configured to write the updated software image into the built-in rewritable non-volatile memory having no a dedicated bootloader partition. Alternatively, the updater component may be configured to write the updated software image into the built-in rewritable non-volatile memory by reformatting the built-in rewritable non-volatile memory to delete the dedicated bootloader partition.

In all the above examples, for which this may be relevant, the updated software image may include an operating system, at least one service and least one driver. Herein, as a further option, the operating system may include the at least one service and the least one driver.

In all the above examples, for which this may be relevant, the updated software image may include an executable code, for example, a storage service, which, when executed by the at least one processing unit, causes an operation of applying a dynamic partitioning of the built-in rewritable non-volatile memory upon run of the updated software from the built-in rewritable non-volatile memory.

In all the above examples, for which this may be relevant, the updated software image may include a code of an at least one component, for example, a memory allocator, a scheduler and/or a storage service, which coincides with a code of the same component included in the updater image, with an exception for parts reflecting that the updater and the updated software image are compiled and linked for execution from the RAM and the built-in rewritable non-volatile memory, respectively.

In all the above examples, for which this may be relevant, the updated software image may include at least two, three, four or five applications for wireless communication of the MMU-less device at different frequencies, and may be configured to provide for an execution on MMU-less device of only one of the at least two, three, four or five applications at a time.

In all the above examples, for which this may be relevant, the updated software image may have a size exceeding 50% of a total volume of the built-in rewritable non-volatile memory of the MMU-less device. Alternatively, it may exceed a volume of each free partition in the built-in rewritable non-volatile memory of the MMU-less device.

In all of the above examples, the MMU-less device may include an at least one user interface I/O unit.

In all of the above examples, the MMU-less device may be a handheld or mobile device.

In all of the above examples, the MMU-less device may include at least two, three, four or five antennas for acting, optionally via at least one wireless transceiver, at respectively at least two, three, four or five frequencies.

In all of the above examples, the MMU-less device may include an MMU-less microcontroller including two processing units, where one of them is a central processing unit and the other is a dedicated processing unit for processing radio stack data.

In all of the above examples, the built-in rewritable non-volatile memory may include memory of at least one of EEPROM and flash type.

In all of the above examples, a total volume or size of the built-in rewritable non-volatile memory of the MMU-less device may be selected not to exceed 8 MB, 4 MB, or 2 MB, or 1 MB.

In all of the above examples, a total volume or size of the RAM of the MMU-less device may be selected not to exceed 1 MB.

In all of the above examples, the MMU-less device may lack at least a hardware MMU,

In all of the above examples, the software subject to update may include a part or a whole of a starting firmware of the MMU-less device, or a part or a whole of an executable code of a starting firmware of the MMU-less device. Optionally, the updated software image may include an executable code presenting at least a part of an updated firmware of the MMU-less device.

Additionally, the software update technique presented above, when applied to any of the MMU-less devices in the whole disclosure above, leads to an even greater usability of the MMU-less device. For example, with reference to Example 1 (in any of the Variations) and further of this series, the built-in non-volatile (and in this case rewritable) memory of the MMU-less device before the update may store API entities and may store the API table of sorted API name hashes and addresses (which includes the sorted plurality of hash values, calculated based on the plurality of names of API entities and paired with the plurality of addresses of the API entities). In such a case, the firmware before the update may include more API entities than there could be with the A/B partition approach, and the update technique would allow efficiently re-using the MMU-less device hardware when a decision is made to update the firmware to a firmware of the same type (i.e. having modified API entities and/or a modified API table of sorted API name hashes and addresses) or even a different type (i.e., in the latter case, not having its own API table of sorted API name hashes and addresses after the update).

Additionally, or alternatively, the software update technique presented above allows efficient switching from some firmware, even if "of the different type", to a firmware not limited by the A/B partition approach, and therefore it again allows increasing the number of API entities, when the updated software image is an updated firmware image and includes respective API entities and a respective API table of sorted API name hashes and addresses.

Similarly, the software update technique may be adapted for the (FLT) Example 34 and 35 and/or any other of those series: the built-in non-volatile memory (which in this case is rewritable) may store API entities and may store an API table of API entity identifiers and addresses, including a plurality of identifiers, being or corresponding to a plurality of names of API entities and paired with a plurality of addresses of the API entities. Additionally, or alternatively, the updated software image may be an updated firmware image and include respective API entities and a respective API table of API entity identifiers and addresses, including a plurality of identifiers, being or corresponding to a plurality of names of API entities and paired with a plurality of addresses of the API entities.

Additionally, in all the examples of the update technique, the software or firmware of MMU-less device before the update, and/or in the updated software image, may include the loader component as in one or more of the above Examples. In particular, the loader component may be configured for loading an at least one executable section from an executable file including a program (e.g. invoking the API, i.e. at least one API entity) into the RAM. Optionally, the loader component may be as in the Example 3, and/or Example 18, and/or as in the (FLT) Example 34, and/or (FLT) Example 41, and/or as in (AAEMT) Example 1, and/or or as in the (DEB) Example 1, and/or as in any example from other examples in this disclosure (including dependent examples of the Example 3, the (FLT) Example 34, the (AAEMT) Example 1, and the (DEB) Example 1).

Although the present disclosure and its advantages have been described in detail, it should be understood that various changes, substitutions and alterations can be made herein without departing from the scope of the disclosure.

## Claims

1. A method (3200) for a memory management unit-less (MMU-less) device, the method comprising executing, for setting the MMU-less device into a configuration with a possibility to update a firmware of the MMU-less device, a pre-updater component by an at least one processing unit of the MMU-less device from a built-in rewritable non-volatile memory of the MMU-less device, where the pre-updater component invokes during the executing at least a part of a code from one or more of: a starting operating system, a starting driver and a starting service for accessing an external memory, storing an updater image from the MMU-less device; where the part of the code is stored in and is executable from the built-in rewritable non-volatile memory of the MMU-less device, so that the pre-updater component causes the at least one processing unit of the MMU-less device to perform operations comprising accessing (3220), upon a reset of the MMU-less device, the updater image in the external memory and writing it into a RAM of the MMU-less device, and transferring (3240) control to the updater image; wherein the operations also comprise:
writing before the reset an indication in any memory which retains its contents during the reset that the at least one processing unit of the MMU-less device is to proceed to said accessing the updater image; and reading this indication at a start-up upon the reset from the any memory, where the memory is internal to or is accessible by the at least one processing unit, and
initializing upon the reset a memory allocator for the RAM and reading a pointer to the updater image stored in the external memory before the accessing the updater image.

2. A method (3200) for a memory management unit-less (MMU-less) device, the method comprising executing, for setting the MMU-less device into a configuration with a possibility to update a firmware of the MMU-less device, a pre-updater component by an at least one processing unit of the MMU-less device from a built-in rewritable non-volatile memory of the MMU-less device, where the pre-updater component invokes during the executing at least a part of a code from one or more of: a starting operating system, a starting driver and a starting service for accessing an external memory, storing an updater image from the MMU-less device; where the part of the code is stored in and is executable from the built-in rewritable non-volatile memory of the MMU-less device, so that the pre-updater component causes the at least one processing unit of the MMU-less device to perform operations comprising accessing (3220), upon a reset of the MMU-less device, the updater image in the external memory and writing it into a RAM of the MMU-less device, and transferring (3240) control to the updater image, wherein the operations comprise:
receiving at a start-up upon the reset an indication from an I/O interface of the MMU-less device that the at least one processing unit of the MMU-less device is to perform the accessing the updater image,
initializing upon the reset a memory allocator for the RAM and reading a pointer to the updater image stored in the external memory before the accessing the updater image.

3. A pre-updater component (3350, 3450) for execution by an at least one processing unit of a memory management unit-less (MMU-less) device from a built-in rewritable non-volatile memory of the MMU-less device for setting the MMU-less device into a configuration with a possibility to update a firmware of the MMU-less device, wherein:
the pre-updater component is configured to invoke during the execution at least a part of a code from one or more of: a starting operating system, a starting driver and a starting service for accessing an external memory, storing an updater image from the MMU-less device; where the part of the code is stored in and is executable from the built-in rewritable non-volatile memory of the MMU-less device, so that the pre-updater component causes the at least one processing unit of the MMU-less device to perform operations comprising accessing, upon a reset of the MMU-less device, the updater image in the external memory and writing it into a RAM of the MMU-less device, and transferring control to the updater image, wherein the operations comprise:
receiving at a start-up upon the reset an indication from an I/O interface of the MMU-less device that the at least one processing unit of the MMU-less device is to perform the accessing the updater image,
initializing upon the reset a memory allocator for the RAM and reading a pointer to the updater image stored in the external memory before the accessing the updater image.

4. A method (3200) for a memory management unit-less (MMU-less) device, the method comprising executing, for setting the MMU-less device into a configuration with a possibility to update a firmware of the MMU-less device, a pre-updater component by an at least one processing unit of the MMU-less device from a built-in rewritable non-volatile memory of the MMU-less device, where the pre-updater component invokes during the executing at least a part of a code from one or more of: a starting operating system, a starting driver and a starting service for accessing an external memory, storing an updater image from the MMU-less device; where the part of the code is stored in and is executable from the built-in rewritable non-volatile memory of the MMU-less device, so that the pre-updater component causes the at least one processing unit of the MMU-less device to perform operations comprising accessing (3220), upon a reset of the MMU-less device, the updater image in the external memory and writing it into a RAM of the MMU-less device, and transferring (3240) control to the updater image, wherein the operations comprise:
recording before the reset a pointer to the updater image into any memory which retains its contents during the reset, where the memory is internal to or is accessible by the at least one processing unit, and
initializing upon the reset a memory allocator for the RAM and reading a pointer to the updater image stored in the external memory before the accessing the updater image.

5. An MMU-less device (3400) comprising an at least one processing unit (3410), a RAM (3420), a built-in rewritable non-volatile memory (3430), and a pre-updater component (3350, 3450) for setting the MMU-less device (3400) into a configuration with a possibility to update a firmware of the MMU-less device (3400), wherein the pre-updater component (3350, 3450) comprises:
instructions (33501, 34501) that, when executed by the at least one processing unit (3410) from the built-in rewritable non-volatile memory (3430) of the MMU-less device (3400) and invoking at least a part (3460K) of a code from one or more of: a starting operating system (3460) of the MMU-less device, a starting driver (3460D) and a starting service (3460S) for accessing an external memory (3580, 3680), storing an updater image (3590, 3890) from the MMU-less device; where the part (3460K) of the code is stored in and is executable from the built-in rewritable non-volatile memory (3430) of the MMU-less device, so that the pre-updater component (3350, 3450) causes the at least one processing unit (3410) of the MMU-less device to perform operations comprising:
accessing, upon a reset of the MMU-less device, the updater image (3590, 3890) in the external memory (3580, 3680) and writing it into the RAM (3420), and
transferring control to the updater image (3590, 3890),
wherein the part (3460K) of the code is stored in the built-in rewritable non-volatile memory (3430) of the MMU-less device and is executable from the built-in rewritable non-volatile memory (3430) of the MMU-less device., wherein the operations comprise:
recording before the reset a pointer to the updater image (3590, 3890) into any memory which retains its contents during the reset, where the memory is internal to or is accessible by the at least one processing unit (3410), and
initializing upon the reset a memory allocator for the RAM and reading a pointer to the updater image (3590, 3890) stored in the external memory (3580, 3680) before the accessing the updater image (3590, 3890).

6. The method of any one of claims 1, 2, and 4, wherein:
said writing is configured to write the updater image into a heap in the RAM allocated by a memory allocator serving the starting operating system.

7. The method of any one of claims 1, 2, 4 and 6, wherein:
said writing is configured to write the updater image into a single continuous partition in a dynamically allocated block of the RAM.

8. The method of any one of claims 1, 2, 4, 6 and 7, wherein:
the operations comprise: relocating the updater image, before said transferring, from an address in the RAM where the updater image was written with a use of a memory allocator and to a pre-defined for said transferring and compatible with a further execution of the updater image address in the RAM.

9. The method of any one of claims 1, 2, 4 and 6-8, wherein
said updater image is configured to be compatible with that state of the at least one of processing unit which it acquires upon said transferring and which differs from an initial or default state, defined by the reset, with the difference being pre-defined by operations of the at least one processing unit, comprising operations of the pre-updater component upon the reset.

10. A method (3700) comprising the method of any one of claims 1, 2, 4 and 6-9, and further comprising:
executing (3720) by the MMU-less device, for updating the firmware of the MMU-less device, the updater image presenting by itself a code compiled and linked for execution from the RAM of the MMU-less device and comprising an updating stage operating system, an updating stage driver and an updating stage service for accessing an external memory storing an updated firmware image from the MMU-less device, and an updater component configured to use the updater operating system, the updating stage driver and the updating stage service, so that:
the updater image thereby comprises instructions that, when executed by the at least one processing unit from the RAM, cause the at least one processing unit to perform operations comprising:
accessing the updated firmware image and writing it into the built-in rewritable non-volatile memory of the MMU-less device.

11. The method of claim 10, wherein the operations comprise pre-setting the MMU-less device to execute upon a reset the updated firmware from the built-in rewritable non-volatile memory.

12. The method of claim 10 or 11, wherein
the updater component is configured to write the updated firmware image into the built-in rewritable non-volatile memory treating it as a single continuous partition; and/or
the updater component is configured to write the updated firmware image into the built-in rewritable non-volatile memory having no a dedicated bootloader partition, or by reformatting the built-in rewritable non-volatile memory to delete the dedicated bootloader partition.

13. The method of any one of claims 10-12, wherein
the updated firmware image comprises an executable code, for example, a storage service, which, when executed by the at least one processing unit, causes an operation of applying a dynamic partitioning of the built-in rewritable non-volatile memory upon run of the updated firmware from the built-in rewritable non-volatile memory.

14. The method of any one of claims 10-13, wherein
the updated firmware image comprises a code of an at least one component, from such components as a memory allocator, a scheduler and a storage service, which coincides with a code of the same component included in the updater image, with an exception for parts reflecting that the updater and the updated firmware image are compiled and linked for execution from the RAM and the built-in rewritable non-volatile memory, respectively.

15. The method of any one of claims 10-14, wherein:
the updated firmware image has a size exceeding 50% of a total volume of the built-in rewritable non-volatile memory of the MMU-less device, or exceeding a volume of each free partition in the built-in rewritable non-volatile memory of the MMU-less device.
